(19) Europäisches Patentamt
European Patent Office
Office européen des brevets

(11) **EP 4 614 127 A1**

(12) **EUROPEAN PATENT APPLICATION**
published in accordance with Art. 153(4) EPC

(43) Date of publication:
**10.09.2025  Bulletin 2025/37**

(51) International Patent Classification (IPC):
***G01L 5/165*** (2020.01)      ***G01L 5/1627*** (2020.01)

(21) Application number: **22964477.8**

(52) Cooperative Patent Classification (CPC):
**G01L 3/10; G01L 5/1627; G01L 5/165**

(22) Date of filing: **04.11.2022**

(86) International application number:
**PCT/JP2022/041188**

(87) International publication number:
**WO 2024/095460 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Tri-Force Management Corporation
Ageo-shi, Saitama 362-0003 (JP)**

(72) Inventors:
• **OKADA, Kazuhiro
Ageo-shi, Saitama 362-0003 (JP)**

• **HONGO, Yuki
Ageo-shi, Saitama 362-0003 (JP)**
• **SANO, Hironao
Ageo-shi, Saitama 362-0003 (JP)**
• **ERA, Satoshi
Ageo-shi, Saitama 362-0003 (JP)**

(74) Representative: **Schmitt-Nilson Schraud Waibel
Wohlfrom
Patentanwälte Partnerschaft mbB
Pelkovenstraße 143
80992 München (DE)**

(54) **INDIVIDUAL FORCE SENSOR AND FORCE SENSOR**

(57)    An individual force sensor according to the present invention includes a first individual sensor body, a second individual sensor body, a first strain generating body that connects the first individual sensor body and the second individual sensor body, and a detecting element that detects displacement caused by elastic deformation of the first strain generating body. The first strain generating body includes a first connecting body extending in a first direction from a first end connected to the first individual sensor body to a second end connected to the second individual sensor body and a displacement body protruding from the first connecting body in a second direction orthogonal to the first direction. The detecting element includes a fixed electrode substrate provided on the second individual sensor body and a displacement electrode substrate provided on the displacement body and opposed to the fixed electrode substrate.

FIG. 2

**Description**

[Technical Field]

The present invention relates to an individual force sensor and a force sensor.

[Background Art]

Conventionally, there has been known a force sensor that outputs, as an electric signal, a force acting in a predetermined axis direction and a moment (torque) acting around a predetermined rotational axis. The force sensor is widely utilized for force control and the like over various robots such as not only industrial robots but also collaborative robots, life support robots, medical robots, and service robots. For example, in a case in which a robot arm comes into contact with a person, a force sensor detects the contact with the person. Accordingly, operation of the robot arm is brought into an emergency stop, or the robot arm is operated so as to avoid contact with the person.

A plurality of force sensors are included in a single robot, and thus, there has been a need for lowering the price of an individual force sensor. In addition, a force sensor is arranged between a leading end of a robot arm and a tool such as an end effector (a gripper). In a case in which the force sensor has a large height, the distance from the leading end of the robot arm to a leading end of the tool increases, which may make it difficult to control a workpiece with high accuracy. Thus, there has also been a need for lowering the height of the force sensor.

[Citation List]

[Patent Literature]

[Patent Literature 1]
Japanese Patent No. 6257017

[Summary of Invention]

[Technical Problem]

An object of the present invention, which has been made in view of these considerations, is to provide an individual force sensor and a force sensor that can be lowered in price and can be lowered in height.

[Solution to Problem]

[1] The present disclosure may be an individual force sensor including:

a first individual sensor body on which a force or moment to be detected acts;
a second individual sensor body that is arranged at a position different from the first individual sensor body in a first direction;
a first strain generating body that connects the first individual sensor body and the second individual sensor body and that is elastically deformed by the force or moment acting on the first individual sensor body; and
a detecting element that detects displacement caused by elastic deformation of the first strain generating body, in which
the first strain generating body includes a first connecting body extending in the first direction from a first end connected to the first individual sensor body to a second end connected to the second individual sensor body, and
a displacement body protruding from the first connecting body in a second direction orthogonal to the first direction, and
the detecting element includes a fixed electrode substrate provided on the second individual sensor body and a displacement electrode substrate provided on the displacement body and opposed to the fixed electrode substrate.

[2] The present disclosure may be the individual force sensor according to [1], in which

a direction orthogonal to the first direction and the second direction is a third direction, and

the first connecting body is formed along each of the first direction and the third direction.

[3] The present disclosure may be the individual force sensor according to [2], in which a dimension of the first connecting body in the second direction is smaller than a dimension of the first connecting body in the third direction when viewed in the first direction.

[4] The present disclosure may be the individual force sensor according to any of [1] to [3], in which the first individual sensor body, the second individual sensor body, and the displacement body are formed along a plane orthogonal to the first direction.

[5] The present disclosure may be the individual force sensor according to any of [1] to [4], in which the second individual sensor body and the displacement body protrude in the third direction relative to the first individual sensor body.

[6] The present disclosure may be the individual force sensor according to any of [1] to [5], in which

the first strain generating body includes two displacement bodies, each of which is the displacement body, protruding in the second direction on both sides of the first connecting body,
the detecting element includes two fixed electrode substrates, each of which is the fixed electrode substrate, and two displacement electrode substrates, each of which is the displacement electrode substrate, opposed to the fixed electrode substrates correspondingly, and
the displacement electrode substrates are provided on the displacement bodies, respectively.

[7] The present disclosure may be the individual force sensor according to any of [1] to [6], in which the first individual sensor body, the second individual sensor body, and the first strain generating body are integrally formed from a continuous material.

[8] The present disclosure may be the individual force sensor according to any of [1] to [7], in which

the first strain generating body includes a first thin portion formed along a plane orthogonal to the first direction, the first thin portion connecting the first individual sensor body and the first end of the first connecting body, and
the first thin portion is thinner than the first individual sensor body.

[9] The present disclosure may be the individual force sensor according to [8], in which the first strain generating body includes a first protruding portion protruding from the first thin portion in the first direction.

[10] The present disclosure may be the individual force sensor according to any of [1] to [9], in which

the first strain generating body includes a second thin portion formed along a plane orthogonal to the first direction, the second thin portion connecting the second individual sensor body and the second end of the first connecting body, and
the second thin portion is thinner than the second individual sensor body.

[11] The present disclosure may be the individual force sensor according to [10], in which the first strain generating body includes a second protruding portion protruding from the second thin portion in the first direction.

[12] The present disclosure may be the individual force sensor according to any of [1] to [11], including a detecting circuit that outputs an electric signal indicating the force or moment acting on the first individual sensor body based on a result of detection performed by the detecting element.

[13] The present disclosure may be an individual force sensor including:

a first individual sensor body on which a force or moment to be detected acts;
a second individual sensor body that is arranged at a position different from the first individual sensor body in a first direction;
a first strain generating body that connects the first individual sensor body and the second individual sensor body and that is elastically deformed by the force or moment acting on the first individual sensor body; and
a detecting element that detects displacement caused by elastic deformation of the first strain generating body, in which
the first strain generating body includes a first connecting body extending in the first direction from a first end connected to the first individual sensor body to a second end connected to the second individual sensor body,
the detecting element includes two first strain gauges provided on the first end and two second strain gauges provided on the second end, and
a Wheatstone bridge circuit is composed of the two first strain gauges and the two second strain gauges.

[14] The present disclosure includes:

a plurality of individual force sensors, each of which is the individual force sensor according to any of [1] to [12];
a first sensor body that supports the first individual sensor body of each of the individual force sensors, the first sensor body being subjected to the force or moment to be detected;
a second sensor body that supports the second individual sensor body of each of the individual force sensors;
a plurality of second strain generating bodies that connect the first sensor body and the second sensor body and that are elastically deformed by the action of the force or moment acting on the first sensor body; and
a detecting circuit that outputs an electric signal indicating the force or moment acting on the first sensor body based on a result of detection performed by the detecting element of each of the individual force sensors, in which the second strain generating bodies each include a second connecting body extending in the first direction from a third end connected to the first sensor body to a fourth end connected to the second sensor body.

[15] The present disclosure may be the force sensor according to [14], in which the second connecting body is formed along a radial direction relative to a central point of the first sensor body when viewed in the first direction.
[16] The present disclosure may be the force sensor according to [15], in which a dimension of the second connecting body in a direction orthogonal to the radial direction is smaller than a dimension of the second connecting body in the radial direction when viewed in the first direction.
[17] The present disclosure may be the force sensor according to any of [14] to [16], in which the first sensor body and the second sensor body are formed along a plane orthogonal to the first direction.
[18] The present disclosure may be the force sensor according to any of [14] to [17], in which the first sensor body includes a first opening into which the first connecting body is inserted.
[19] The present disclosure may be the force sensor according to [18], in which

the first sensor body includes a first recess that opens toward an opposite side of the second sensor body and that communicates with the first opening, and
the first individual sensor body is contained in the first recess.

[20] The present disclosure may be the force sensor according to any of [14] to [19], in which the second sensor body includes a second opening into which the first connecting body is inserted.
[21] The present disclosure may be the force sensor according to [20], in which

the second sensor body includes a second recess that opens toward an opposite side of the first sensor body and that communicates with the second opening, and
the second individual sensor body is contained in the second recess.

[22] The present disclosure may be the force sensor according to any of [14] to [21], in which rigidity of the second connecting body against a moment around an axis along the first direction is higher than rigidity of the first connecting body.
[23] The present disclosure may be the force sensor according to any of [14] to [22], in which the first sensor body, the second sensor body, and the second strain generating bodies are integrally formed from a continuous material.
[24] The present disclosure may be the force sensor according to any of [14] to [23], in which

the second strain generating bodies each include a third thin portion formed along a plane orthogonal to the first direction, the third thin portion connecting the first sensor body and the third end of the second connecting body, and
the third thin portion is thinner than the first sensor body.

[25] The present disclosure may be the force sensor according to [24], in which the second strain generating bodies each include a third protruding portion protruding from the third thin portion in the first direction.
[26] The present disclosure may be the force sensor according to any of [14] to [24], in which

the second strain generating bodies each include a fourth thin portion formed along a plane orthogonal to the first direction, the fourth thin portion connecting the second sensor body and the fourth end of the second connecting body, and
the fourth thin portion is thinner than the second sensor body.

[27] The present disclosure may be the force sensor according to [25], in which the second strain generating bodies each include a fourth protruding portion protruding from the fourth thin portion in the first direction.

[28] The present disclosure may be a force sensor including:

a plurality of individual force sensors each including a first individual sensor body on which a force or moment to be detected acts, a second individual sensor body that is arranged at a position different from the first individual sensor body in a first direction, a first strain generating body that connects the first individual sensor body and the second individual sensor body and that is elastically deformed by the force or moment acting on the first individual sensor body, and a detecting element that detects displacement caused by elastic deformation of the first strain generating body;

a first sensor body that supports the first individual sensor body of each of the individual force sensors, the first sensor body being subjected to the force or moment to be detected;

a second sensor body that supports the second individual sensor body of each of the individual force sensors;

a plurality of second connecting bodies extending in the first direction from a third end connected to the first sensor body to a fourth end connected to the second sensor body; and

a detecting circuit that outputs an electric signal indicating the force or moment acting on the first sensor body based on a result of detection performed by the detecting element of each of the individual force sensors, in which the strain generating body includes a first connecting body extending in the first direction from a first end connected to the first individual sensor body to a second end connected to the second individual sensor body, the detecting element includes two first strain gauges provided on the first end and two second strain gauges provided on the second end,

the detecting circuit includes a Wheatstone bridge circuit that outputs an electric signal based on a result of detection performed by the first strain gauges and the second strain gauges, and

the second connecting bodies are formed along a radial direction relative to a central point of the first sensor body when viewed in the first direction.

[Advantageous Effects of Invention]

According to the present invention, the price can be lowered, and the height can be lowered.

[Brief Description of Drawings]

[Figure 1] Figure 1 is a perspective view showing an example of a robot.

[Figure 2] Figure 2 is a vertical cross sectional view showing an individual force sensor according to a first embodiment.

[Figure 3] Figure 3 is a plan view showing the individual force sensor shown in Figure 2.

[Figure 4] Figure 4 is a vertical cross sectional view schematically showing a deformed state of a first strain generating body in a case in which an individual force receiving body of the individual force sensor shown in Figure 2 is subjected to a force to a positive side in an X-axis direction.

[Figure 5] Figure 5 is a perspective view showing an individual force sensor according to a second embodiment.

[Figure 6] Figure 6 is a side view showing the individual force sensor shown in Figure 5.

[Figure 7] Figure 7 is a plan view showing the individual force sensor shown in Figure 5.

[Figure 8] Figure 8 is a vertical cross sectional view showing an individual force sensor according to a third embodiment.

[Figure 9A] Figure 9A is a plan view showing an individual force receiving body shown in Figure 8.

[Figure 9B] Figure 9B is a bottom view showing an individual fixed body shown in Figure 8.

[Figure 10] Figure 10 is a vertical cross sectional view schematically showing a deformed state of a first strain generating body in a case in which the individual force receiving body of the individual force sensor shown in Figure 8 is subjected to a force to a positive side in an X-axis direction.

[Figure 11] Figure 11 is a vertical cross sectional view schematically showing a deformed state of the first strain generating body in a case in which the individual force receiving body of the individual force sensor shown in Figure 8 is subjected to a force to a positive side in a Z-axis direction.

[Figure 12] Figure 12 is a vertical cross sectional view schematically showing a deformed state of the first strain generating body in a case in which the individual force receiving body of the individual force sensor shown in Figure 8 is subjected to a force to a negative side in the Z-axis direction.

[Figure 13] Figure 13 is a plan view showing a modification of the individual force sensor shown in Figure 9A.

[Figure 14] Figure 14 is a vertical cross sectional view showing a force sensor according to a fourth embodiment.

[Figure 15] Figure 15 is a diagram viewed along an arrow P in Figure 14y

[Figure 16] Figure 16 is a diagram viewed along an arrow Q in Figure 14.

[Figure 17] Figure 17 is a vertical cross sectional view of a second strain generating body shown in Figure 15 and Figure 16.

[Figure 18] Figure 18 is an enlarged vertical cross sectional view showing an individual force sensor shown in Figure 14.

[Figure 19] Figure 19 is an enlarged vertical cross sectional view showing an individual force sensor according to a fifth embodiment.

[Figure 20] Figure 20 is a diagram showing a Wheatstone bridge circuit for a detecting element shown in Figure 19.

[Figure 21] Figure 21 is a vertical cross sectional view schematically showing a deformed state of a first strain generating body in a case in which an individual force receiving body of the individual force sensor shown in Figure 19 is subjected to a force to a positive side in an X-axis direction.

[Figure 22] Figure 22 is a vertical cross sectional view showing a force sensor to which the individual force sensor shown in Figure 19 is applied.

[Figure 23] Figure 23 is a diagram viewed along an arrow R in Figure 22.

[Figure 24] Figure 24 is a vertical cross sectional view showing a force sensor according to a sixth embodiment.

[Figure 25] Figure 25 is a plan view showing the force sensor shown in Figure 24.

[Figure 26] Figure 26 is a vertical cross sectional view of a second strain generating body shown in Figure 25.

[Figure 27] Figure 27 is a table showing change in capacitance value of each capacitive element in the force sensor shown in Figure 24.

[Figure 28] Figure 28 is a table showing main-axis sensitivity and cross-axis sensitivity based on the changes in capacitance value shown in Figure 27.

[Figure 29] Figure 29 is a vertical cross sectional view showing an individual force sensor according to a seventh embodiment.

[Figure 30] Figure 30 is a cross sectional view taken along a line A-A in Figure 29.

[Figure 31] Figure 31 is a plan view showing a force sensor including the individual force sensor shown in Figure 29.

[Figure 32] Figure 32 is a vertical cross sectional view showing a modification of the individual force sensor shown in Figure 29.

[Figure 33] Figure 33 is a vertical cross sectional view showing another modification of the individual force sensor shown in Figure 29.

[Figure 34] Figure 34 is a vertical cross sectional view showing another modification of the individual force sensor shown in Figure 29.

[Figure 35] Figure 35 is a plan view showing a modification of the force sensor shown in Figure 31.

[Figure 36] Figure 36 is a vertical cross sectional view of a second strain generating body shown in Figure 35.

[Description of Embodiments]

Hereinafter, embodiments of the present invention will be described with reference to the drawings. Note that in the drawings appended to the present specification, scales, lengthwise and crosswise dimensional ratios, and the like are appropriately modified and exaggerated from real ones for the sake of illustration and ease of understanding.
Note that terms such as "parallel", "orthogonal", and "equal", dimensions, values of physical properties, and the like that are used in the present specification and that specify shapes, geometrical conditions, and physical properties, as well as the degrees thereof are not limited by strict meanings and shall be interpreted inclusive of ranges of degrees at which similar functions may be expected.

(First Embodiment)

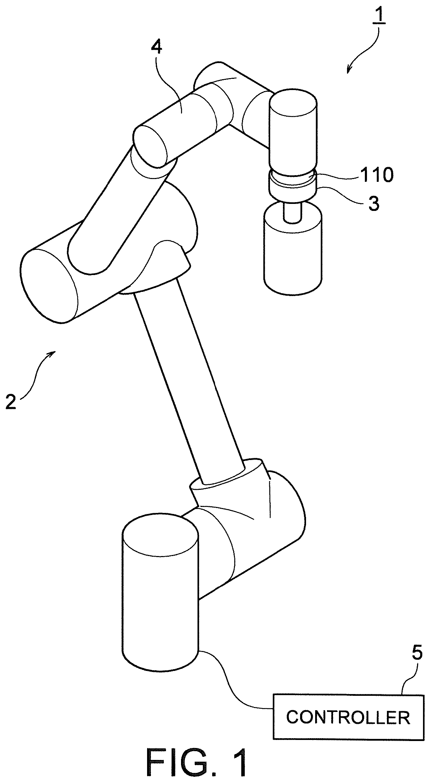

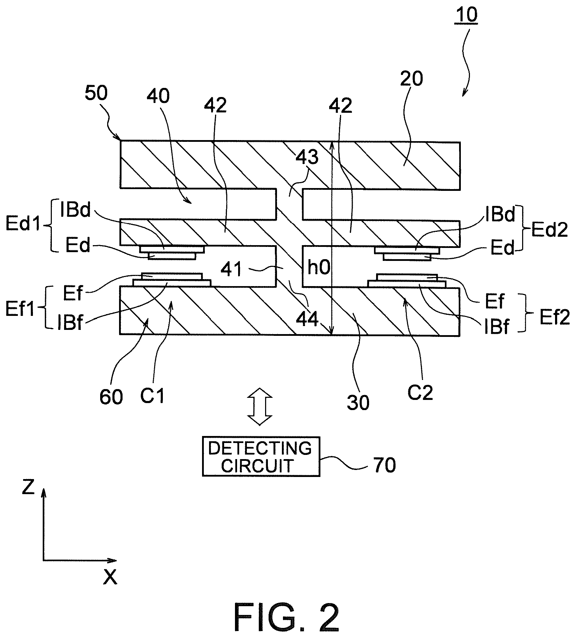

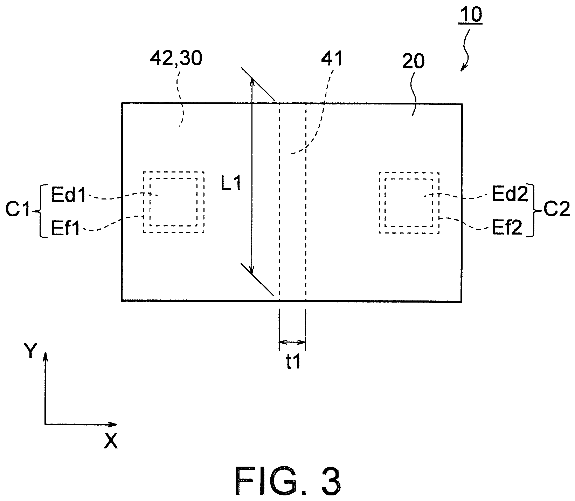

An individual force sensor in a first embodiment of the present invention will be described using Figure 1 to Figure 4.
First, a robot 1 according to the present embodiment will be described with reference to Figure 1. Figure 1 is a perspective view showing an example of the robot 1 according to the present embodiment. An individual force sensor 10 according to the present embodiment or the like or a force sensor 110 according to a fourth embodiment or the like is attached to the robot 1. Examples of the robot 1 include various robots such as industrial robots, collaborative robots, life support robots, medical robots, and service robots. The following description will be given using an industrial robot to which the force sensor 110 is attached as an example for the sake of convenience.
As shown in Figure 1, the industrial robot 1 includes a robot main body 2, a tool 3, the force sensor 110, and a controller 5. The robot main body 2 includes a robot arm 4. The robot arm 4 has an articulated arm structure.
The force sensor 110 is attached to a leading end of the robot arm 4. More specifically, the force sensor 110 is attached between the robot arm 4 and the tool 3. The force sensor 110 is electrically connected to the controller 5 via an electric cable not shown. Examples of the tool 3 include an end effector (a gripper), a tool changer (neither shown), and the like. In a case in which the force sensor 110 is configured as a torque sensor which will be described later, the torque sensor is contained in the robot arm and is arranged between a speed reducer (not shown) included in the robot arm and the leading end of the robot arm.
The controller 5 performs force control over the robot 1 based on an electric signal output from the force sensor 110. Accordingly, operation of the robot main body 2 and the tool 3 is controlled.
The force sensor 110 attached to the robot 1 set forth above can be replaced by an individual force sensor 10 according to the present embodiment depending on the intended use. The individual force sensor 10 according to the present embodiment is different from the force sensor 110 according to the fourth embodiment or the like mainly in that the individual force sensor 10 is composed of a single strain generating body, but is configured to detect a force or moment similarly to the force sensor 110.
Hereinafter, the individual force sensor 10 according to the present embodiment will be described with reference to Figure 2 and Figure 3. Figure 2 is a vertical cross sectional view showing the individual force sensor 10 according to the first embodiment. Figure 3 is a plan view showing the individual force sensor 10 in Figure 2.
In the following description, an XYZ three-dimensional coordinate system is defined, and a Z-axis direction shall be a vertical direction. The Z-axis direction is an example of a first direction. An X-axis direction is an example of a second direction, and a Y-axis direction is an example of a third direction. The X-axis direction and the Y-axis direction are orthogonal to each other, the X-axis direction and the Z-axis direction are orthogonal to each other, and the Y-axis direction and the Z-axis direction are orthogonal to each other. In the following description, description will be given in a state in which the individual force sensor 10 is arranged such that an individual force receiving body 20 which will be described later is arranged on an upper side and such that an individual fixed body 30 which will be described later is arranged on a lower side. Thus, the individual force sensor 10 according to the present embodiment is not limited to the use in an attitude with the Z-axis direction serving as the vertical direction. In addition, whichever of the individual force receiving body 20 and the individual fixed body 30 may be arranged on the upper side or the lower side. The same applies to the force sensor 110 which will be described later.

The individual force sensor 10 has a function of outputting a force acting in a predetermined axis direction and a moment (torque) acting around a predetermined rotational axis as an electric signal. However, this is not a limitation, and the individual force sensor 10 may be configured to output only one of force and moment as an electric signal, and moreover, may be configured to output at least one axis component of a force or moment as an electric signal.

The individual force sensor 10 may include the individual force receiving body 20, the individual fixed body 30, a first strain generating body 40, a detecting element 60, and a detecting circuit 70 as shown in Figure 2 and Figure 3. Hereinafter, each constituent element will be described in more detail.

The individual force receiving body 20 is an example of a first individual sensor body. The individual force receiving body 20 is subjected to a force or moment to be detected. By the action, the individual force receiving body 20 is relatively displaced relative to the individual fixed body 30. For example, the individual force receiving body 20 may be fixed to the tool 3 shown in Figure 1 using a bolt or the like inserted into a bolt hole not shown. In this case, the individual force receiving body 20 may be subjected to a force or moment from the tool 3.

The individual force receiving body 20 is formed along a plane orthogonal to the Z-axis direction. That is to say, the individual force receiving body 20 is formed along each of the X-axis direction and the Y-axis direction. The individual force receiving body 20 may be formed into a flat-plate shape. As shown in Figure 3, a planar shape of the individual force receiving body 20 may be a quadrangular shape (for example, rectangular or square) or may be a circular shape and may be any shape.

As shown in Figure 2, the individual fixed body 30 is an example of a second individual sensor body and supports the individual force receiving body 20. The individual fixed body 30 is arranged on a negative side of the individual force receiving body 20 in the Z-axis direction. The individual force receiving body 20 and the individual fixed body 30 are arranged at positions different from each other in the Z-axis direction, and the individual fixed body 30 is apart from the individual force receiving body 20. For example, the individual fixed body 30 may be fixed to the leading end of the robot arm 4 shown in Figure 1 using a bolt or the like inserted into a bolt hole not shown. In this case, the individual fixed body 30 may be supported by the robot arm 4.

The individual fixed body 30 is formed along the plane orthogonal to the Z-axis direction. That is to say, the individual fixed body 30 is formed along each of the X-axis direction and the Y-axis direction. The individual fixed body 30 may be formed into a flat-plate shape. As shown in Figure 3, a planar shape of the individual fixed body 30 may be a quadrangular shape (for example, rectangular or square) or may be a circular shape and may be any shape. When viewed in the Z-axis direction, the individual fixed body 30 may be entirely overlapped on the individual force receiving body 20 and may have a planar shape identical to the planar shape of the individual force receiving body 20. More specifically, the individual fixed body 30 may have a dimension in the X-axis direction identical to a dimension of the individual force receiving body 20 in the X-axis direction and may have a dimension in the Y-axis direction identical to a dimension of the individual force receiving body 20 in the Y-axis direction.

As shown in Figure 2 and Figure 3, the first strain generating body 40 connects the individual force receiving body 20 and the individual fixed body 30. The first strain generating body 40 is arranged between the individual force receiving body 20 and the individual fixed body 30. In the present embodiment, the individual force receiving body 20 and the individual fixed body 30 are connected by the single first strain generating body 40.

The first strain generating body 40 will be described more specifically. The first strain generating body 40 according to the present embodiment is configured to be elastically deformed by the action of a force or moment acting on the individual force receiving body 20 to cause a strain and to be displaced.

As shown in Figure 2, the first strain generating body 40 includes a first connecting body 41 and displacement bodies 42.

The first connecting body 41 extends in the Z-axis direction. The first connecting body 41 includes a force-receiving-body-side end 43 (an example of a first end) connected to the individual force receiving body 20 and a fixed-body-side end 44 (an example of a second end) connected to the individual fixed body 30. The first connecting body 41 extends along the Z-axis direction from the force-receiving-body-side end 43 to the fixed-body-side end 44 when viewed in the Y-axis direction.

The first connecting body 41 according to the present embodiment may be elastically deformable by the action of force in the second direction. More specifically, the first connecting body 41 may be formed along each of the Y-axis direction and the Z-axis direction. The first connecting body 41 may be formed into a flat-plate shape. The dimension of the first connecting body 41 in the X-axis direction (equivalent to a thickness $t1$ of the first connecting body 41) is smaller than a dimension $L1$ of the first connecting body 41 in the Y-axis direction when viewed in the Z-axis direction as shown in Figure 3. Accordingly, a spring constant of the first connecting body 41 in response to the action of a force "Fx" in the X-axis direction is smaller than a spring constant in response to the action of a force "Fy" in the Y-axis direction. Thus, the first connecting body 41 is easy to be elastically deformed by the action of the force "Fx" in the X-axis direction.

The displacement bodies 42 protrude from the first connecting body 41 in the X-axis direction. The first strain generating body 40 according to the present embodiment includes the two displacement bodies 42 protruding in the X-axis direction on both sides of the first connecting body 41. One of the displacement bodies 42 protrudes from the first connecting body 41 to a negative side in the X-axis direction, and the other displacement body 42 protrudes from the first connecting body 41 to a positive side in the X-axis direction. The displacement bodies 42 may extend from the first connecting body 41 in the X-axis direction. Each of the displacement bodies 42 may be configured as a cantilever supported by the first connecting body 41.

Each of the displacement bodies 42 may be formed along the plane orthogonal to the Z-axis direction. That is to say, each of the displacement bodies 42 may be formed along each of the X-axis direction and the Y-axis direction. The displacement bodies 42 may be formed into a flat-plate shape. As shown in Figure 3, a planar shape of the displacement body 42 may be a quadrangular shape. When viewed in the Z-axis direction, the displacement body 42 may be entirely overlapped on the individual force receiving body 20 or may be overlapped on the individual fixed body 30. The displacement body 42 may have a dimension in the Y-axis direction identical to a dimension of the individual force receiving body 20 in the Y-axis direction, and may have a dimension in the Y-axis direction identical to a dimension of the individual fixed body 30 in the Y-axis direction.

As shown in Figure 2, the displacement bodies 42 are apart from the individual force receiving body 20 and apart from the individual fixed body 30 in the Z-axis direction. The displacement bodies 42 may be arranged at an intermediate position between the force-receiving-body-side end 43 and the fixed-body-side end 44. Alternatively, the displacement bodies 42 may be arranged at a position closer to the individual force receiving body 20 than the intermediate position or may be arranged at a position closer to the individual fixed body 30. The displacement bodies 42 are opposed to the individual fixed body 30.

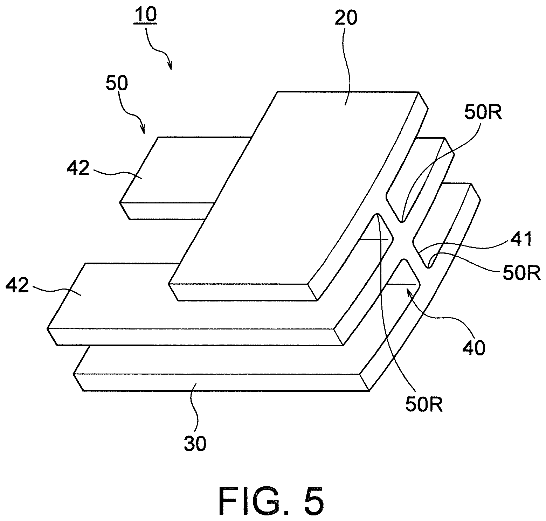

The individual force receiving body 20, the individual fixed body 30, and the first strain generating body 40 may be integrally formed from a continuous material. The individual force receiving body 20, the individual fixed body 30, and the first strain generating body 40 may make up of a single individual sensor structure 50. The individual sensor structure 50 may be formed from a single block material by machining (for example, cutting) or may be formed by casting. In this case, an R-shaped portion 50R as shown in Figure 5 which will be described later may be provided at the force-receiving-body-side end 43 which is a connection point between the individual force receiving body 20 and the first connecting body 41 of the first strain generating body 40. Similarly, the R-shaped portion 50R may also be provided at the fixed-body-side end 44 which is a connection point between the individual fixed body 30 and the first connecting body 41 of the first strain generating body 40, and the R-shaped portion 50R may also be provided at a connection point between the first connecting body 41 and the displacement body 42. The individual sensor structure 50 may be made of a metal material such as an aluminum alloy or an iron alloy.

However, the individual force sensor 10 according to the present embodiment is not limited to this. For example, at least two components among the individual force receiving body 20, the individual fixed body 30, and the first strain generating body 40 may be integrally formed, and the remaining component may be separately formed. For example, the individual force receiving body 20 and the first strain generating body 40 may be integrally formed and may be fixed to the individual fixed body 30 separately formed by a bolt (not shown), adhesive, or the like. For example, the individual fixed body 30 and the first strain generating body 40 may be integrally formed and may be fixed to the individual force receiving body 20 separately formed by a bolt, adhesive, or the like. Alternatively, the individual force receiving body 20, the individual fixed body 30, and the first strain generating body 40 may each be separately formed and fixed by bolts, adhesive, or the like.

The detecting element 60 will be described.

The detecting element 60 is configured to detect displacement caused by elastic deformation of the first strain generating body 40 set forth above. The detecting element 60 according to the present embodiment may include a capacitive element that detects capacitance. As shown in Figure 2, the capacitive element includes a fixed electrode substrate provided on the individual fixed body 30 and a displacement electrode substrate provided on the displacement body 42. The displacement electrode substrates are opposed to the fixed electrode substrates. In the present embodiment, the detecting element 60 includes a first capacitive element C1 and a second capacitive element C2.

In the example shown in Figure 2, the detecting element 60 includes two fixed electrode substrates Ef1, Ef2 and two displacement electrode substrates Ed1, Ed2. One of the displacement electrode substrates, Ed1, is arranged on one of the displacement bodies 42 of the first strain generating body 40, and the other displacement electrode substrate Ed2 is arranged on the other displacement body 42. One displacement electrode substrate is arranged on one of the displacement bodies 42. The respective fixed electrode substrates Ef1, Ef2 are arranged on the individual fixed body 30 at positions opposed to the corresponding displacement electrode substrates Ed1, Ed2.

The two fixed electrode substrates Ef1, Ef2 include the first fixed electrode substrate Ef1 and the second fixed electrode substrate Ef2. The first fixed electrode substrate Ef1 and the second fixed electrode substrate Ef2 are arranged at positions different from each other in the X-axis direction. In the present embodiment, the first fixed electrode substrate Ef1 is arranged on the negative side in the X-axis direction relative to the first connecting body 41, and the second fixed electrode substrate Ef2 is arranged on the positive side in the X-axis direction relative to the first connecting body 41.

In the present embodiment, the fixed electrode substrates Ef1, Ef2 are arranged on a surface of the individual fixed body 30 on the individual force receiving body 20 side. The fixed electrode substrates Ef1, Ef2 may be joined to the individual fixed body 30 by adhesive or may be fixed thereto by bolts or the like. The fixed electrode substrates Ef1, Ef2 include fixed electrodes Ef opposed to the corresponding displacement electrode substrates Ed1, Ed2 and insulators IBf interposed between the fixed electrodes Ef and the individual fixed body 30. The fixed electrodes Ef may be formed from a conductive material. The insulators IBf may be formed from an insulating material such as glass epoxy resin or ceramic. Alternatively, the fixed electrode substrates Ef1, Ef2 may be composed of FPC boards (flexible printed circuit boards). The FPC board is a printed circuit board formed into a thin film shape and having flexibility, and has a metal thin film that makes up of electrodes and wirings formed on an upper surface of a polyimide film. Portions of the FPC boards equivalent to the fixed electrode substrates Ef1, Ef2 may be joined to the individual fixed body 30. The FPC boards may include wirings that connect the fixed electrodes Ef to the detecting circuit 70.

As shown in Figure 2, the two displacement electrode substrates Ed1, Ed2 include the first displacement electrode substrate Ed1 and the second displacement electrode substrate Ed2. The first displacement electrode substrate Ed1 and the second displacement electrode substrate Ed2 are arranged at positions different from each other in the X-axis direction. In the present embodiment, the first displacement electrode substrate Ed1 is arranged on the negative side in the X-axis direction relative to the first connecting body 41 and is arranged on the displacement body 42 protruding from the first connecting body 41 to the negative side in the X-axis direction. The second displacement electrode substrate Ed2 is arranged on the positive side in the X-axis direction relative to the first connecting body 41 and is arranged on the displacement body 42 protruding from the first connecting body 41 to the positive side in the X-axis direction. The first displacement electrode substrate Ed1 may be arranged on an end of the displacement body 42 on the negative side in the X-axis direction. The second displacement electrode substrate Ed2 may be arranged on an end of the displacement body 42 on the positive side in the X-axis direction.

In the present embodiment, the displacement electrode substrates Ed1, Ed2 are provided on the surface of the displacement bodies 42 on the individual fixed body 30 side. The displacement electrode substrates Ed1, Ed2 may be joined to the displacement bodies 42 by adhesive or may be fixed thereto by bolts or the like. The displacement electrode substrates Ed1, Ed2 include displacement electrodes Ed opposed to the corresponding fixed electrode substrates Ef1, Ef2 and the insulators IBd, each of which is interposed between the displacement electrode Ed and the displacement body 42. The displacement electrodes Ed may be formed from a conductive material. The insulators IBd may be formed from an insulating material such as glass epoxy resin or ceramic. Alternatively, the displacement electrode substrates Ed1, Ed2 may be composed of FPC boards. Portions of the FPC boards equivalent to the displacement electrode substrates Ed1, Ed2 may be joined to the displacement bodies 42. The FPC boards may include wirings that connect the displacement electrodes Ed to the detecting circuit 70. Each of the displacement electrode substrates Ed1, Ed2 may be bonded to the displacement body 42 by adhesive.

The first fixed electrode substrate Ef1 is opposed to the first displacement electrode substrate Ed1. The first capacitive element C1 is composed of the first fixed electrode substrate Ef1 and the first displacement electrode substrate Ed1. The second fixed electrode substrate Ef2 is opposed to the second displacement electrode substrate Ed2. The second capacitive element C2 is composed of the second fixed electrode substrate Ef2 and the second displacement electrode substrate Ed2. The first capacitive element C1 and the second capacitive element C2 are configured as the detecting element 60 for the first strain generating body 40.

As shown in Figure 3, the first capacitive element C1 and the second capacitive element C2 are arranged at the same position in the Y-axis direction. That is to say, the first displacement electrode substrate Ed1 and the second displacement electrode substrate Ed2 are arranged at the same position in the Y-axis direction, and the first fixed electrode substrate Ef1 and the second fixed electrode substrate Ef2 are also arranged at the same position in the Y-axis direction. The first capacitive element C1 and the second capacitive element C2 may be arranged at the same position as the first connecting body 41 in the Y-axis direction.

In the present embodiment, the planar shape of the fixed electrode substrates Ef1, Ef2 is a quadrangle. The planar shape of the displacement electrode substrates Ed1, Ed2 is also a quadrangle. However, the planar shape of the fixed electrode substrates Ef1, Ef2 and the planar shape of the displacement electrode substrates Ed1, Ed2 are not limited to a quadrangle, and may be another shape such as a circle, a polygon, or an ellipse.

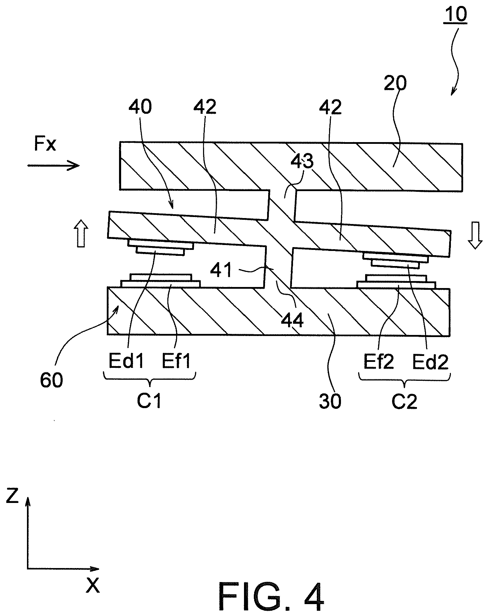

The first fixed electrode substrate Ef1 may be larger than the first displacement electrode substrate Ed1 when viewed in the Z-axis direction as shown in Figure 2 and Figure 3. For example, the planar shape of the first fixed electrode substrate Ef1 may be larger than the planar shape of the first displacement electrode substrate Ed1. Even in a case in which the first displacement electrode substrate Ed1 is displaced in the X-axis direction, the Y-axis direction, or the Z-axis direction, the first displacement electrode substrate Ed1 may be entirely overlapped on the first fixed electrode substrate Ef1 when viewed in the Z-axis direction. In other words, the size of the displacement electrode Ed and the size of the fixed electrode Ef may be established such that the displacement electrode Ed and the fixed electrode Ef are overlapped even in the case in which the first displacement electrode substrate Ed1 is displaced in the X-axis direction, the Y-axis direction, or the Z-axis direction. This can prevent an opposed area of the displacement electrode Ed and the fixed electrode Ef from changing, and can prevent a change in opposed area from affecting a change in capacitance value. Thus, the capacitance value can be changed in accordance with a change in interelectrode distance (a distance in the Z-axis direction) between the displacement electrode Ed and the fixed electrode Ef. Herein, the opposed area refers to an area in which the displacement electrode Ed and the fixed electrode Ef are overlapped when viewed in the Z-axis direction. In a case in which the displacement body 42 tilts, the displacement electrode Ed smaller than the fixed electrode Ef inclines so that the opposed area may vary, but an inclination angle of the displacement electrode Ed in this case is small. Accordingly, the interelectrode distance between the displacement electrode Ed and the fixed electrode Ef is dominant in a change in capacitance value. Thus, the present specification does not consider variation in opposed area due to the inclination of the displacement electrode Ed, but considers that the change in capacitance value results from the change in interelectrode distance between the displacement electrode Ed and the fixed electrode Ef. Note that the inclination of the displacement bodies 42 is exaggerated in Figure 4 and the like which will be described later so as to clarify the drawings. In addition, the planar shape of the first fixed electrode substrate Ef1 is not limited to be larger than the planar shape of the first displacement electrode substrate Ed1, and the planar shape of the first displacement electrode substrate Ed1 may be larger than the planar shape of the first fixed electrode substrate Ef1.

Similarly, the planar shape of the second fixed electrode substrate Ef2 may also be larger than the planar shape of the second displacement electrode substrate Ed2 when viewed in the Z-axis direction. Note that the planar shape of the second displacement electrode substrate Ed2 may be larger than the planar shape of the second fixed electrode substrate Ef2.

The planar shape of the fixed electrodes Ef of the fixed electrode substrates Ef1, Ef2 and the planar shape of the insulators IBf may have an identical size. However, this is not a limitation, and the planar shape of the fixed electrodes Ef may be smaller than the planar shape of the insulators IBf. The same applies to the planar shape of the displacement electrodes Ed of the displacement electrode substrates Ed1, Ed2 and the planar shape of the insulators IBd.

The first fixed electrode substrate Ef1 and the second fixed electrode substrate Ef2 may be separately formed and apart from each other as shown in Figure 2 and Figure 3. However, this is not a limitation, and in the case in which the first displacement electrode substrate Ed1 and the second displacement electrode substrate Ed2 are separately formed, the first fixed electrode substrate Ef1 and the second fixed electrode substrate Ef2 may be integrated and composed of a single common fixed electrode substrate. The first fixed electrode substrate Ef1 and the second fixed electrode substrate Ef2 may be connected to be integrated by reducing the dimension of the first connecting body 41 in the Y-axis direction. In this case, the insulators IBf and the fixed electrodes Ef may be integrated, respectively. Alternatively, the insulators IBf may be integrated even in the case in which the fixed electrodes Ef are configured to be apart from each other.

The first displacement electrode substrate Ed1 and the second displacement electrode substrate Ed2 may be separately formed and apart from each other as shown in Figure 2 and Figure 3. However, this is not a limitation, and in the case in which the first fixed electrode substrate Ef1 and the second fixed electrode substrate Ef2 are separately formed, the first displacement electrode substrate Ed1 and the second displacement electrode substrate Ed2 may be integrated and composed of a single common displacement electrode substrate. The two displacement bodies 42 can be connected by reducing the dimension of the first connecting body 41 in the Y-axis direction. Accordingly, the first displacement electrode substrate Ed1 and the second displacement electrode substrate Ed2 can be connected to be integrated. In this case, the insulators IBd and the displacement electrodes Ed may be integrated, respectively. Alternatively, the insulators IBd may be integrated even in the case in which the displacement electrodes Ed are configured to be apart from each other.

As shown in Figure 2, the detecting circuit 70 according to the present embodiment outputs an electric signal indicating a force or moment acting on the individual force receiving body 20 based on the result of detection performed by the detecting element 60. This detecting circuit 70 may have an arithmetic function composed of a microprocessor, for example. The detecting circuit 70 may also have an A/D converting function of converting an analog signal received from the detecting element 60 set forth above into a digital signal, a function of amplifying a signal, and various correction functions. The detecting circuit 70 may include a terminal that outputs an electric signal, and the electric signal is transmitted from this terminal to the controller 5 set forth above via an electric cable. The electric signal transmitted to the controller 5 may be a digital signal or may be an analog signal.

Next, a method for detecting a force or moment in the individual force sensor 10 according to the present embodiment having such a configuration will be described.

When the individual force receiving body 20 is subjected to a force or moment, the force or moment propagates to the first strain generating body 40. More specifically, the force or moment propagates to the first connecting body 41, and elastic deformation occurs in the first connecting body 41. Accordingly, the displacement bodies 42 tilt and are displaced. Thus, the interelectrode distance between the respective fixed electrode substrates Ef1, Ef2 of the detecting element 60 and the corresponding displacement electrode substrates Ed1, Ed2 changes, and each of the capacitive elements C1, C2 changes in capacitance value. This change in capacitance value is detected by the detecting element 60 as displacement occurred in the first strain generating body 40. In this case, the change in capacitance value in each of the capacitive elements C1, C2 may be different. Thus, the detecting circuit 70 can detect an orientation and a magnitude of the force or moment acting on the individual force receiving body 20 based on the change in capacitance value in each of the capacitive elements C1, C2 detected by the detecting element 60.

Herein, changes in capacitance value of the first capacitive element C1 and the second capacitive element C2 in a case in which the individual force receiving body 20 is subjected to the force "Fx" in the X-axis direction will be described first as an example using Figure 4. Figure 4 is a vertical cross sectional view schematically showing a displaced state of the first strain generating body 40 in the case in which the individual force receiving body 20 is subjected to the force "Fx" to the positive side in the X-axis direction.

In the case in which the individual force receiving body 20 is subjected to the force "Fx" to the positive side in the X-axis direction, the first connecting body 41 of the first strain generating body 40 is elastically deformed as shown in Figure 4. In this case, the force-receiving-body-side end 43 of the first connecting body 41 is displaced to the positive side in the X-axis direction, and the first connecting body 41 is elastically deformed so as to bend to the positive side in the X-axis direction. The first connecting body 41 is elastically deformed so as to bend clockwise when viewed toward a positive side in the Y-axis direction. Figure 4 shows a state in which the first connecting body 41 tilts for simplification of the drawing. The displacement bodies 42 tilt and are displaced. Accordingly, the first displacement electrode substrate Ed1 rises to move away from the first fixed electrode substrate Ef1. The interelectrode distance between the first displacement electrode substrate Ed1 and the first fixed electrode substrate Ef1 increases, and the first capacitive element C1 decreases in capacitance value. On the other hand, the second displacement electrode substrate Ed2 descends to approach the second fixed electrode substrate Ef2. The interelectrode distance between the second displacement electrode substrate Ed2 and the second fixed electrode substrate Ef2 decreases, and the second capacitive element C2 increases in capacitance value.

The force "Fx" acting on the individual force receiving body 20 may be calculated as "Fx1" by an expression below. Note that in an expression below, a force or moment and an amount of change in capacitance value are connected by "=" for the sake of convenience. However, "Fx1" is actually calculated by converting the amount of change in capacitance value since the force or moment and the capacitance value are physical quantities different from each other. In an expression below, C1 and C2 indicate amounts of change in capacitance value in the respective capacitive elements C1 and C2.

$$[\text{Expression 1}]$$
$$Fx1 = -C1 + C2$$

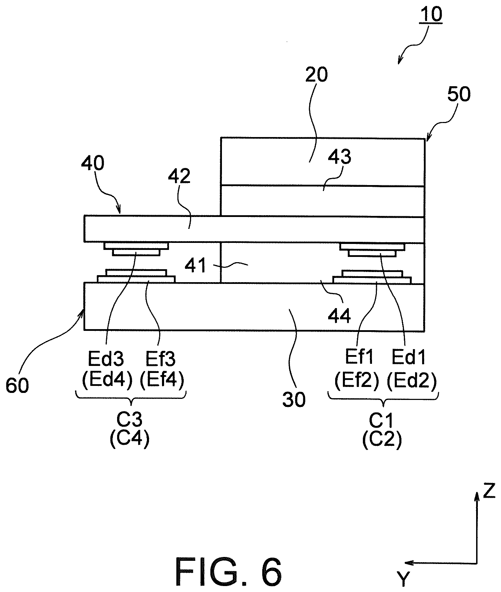

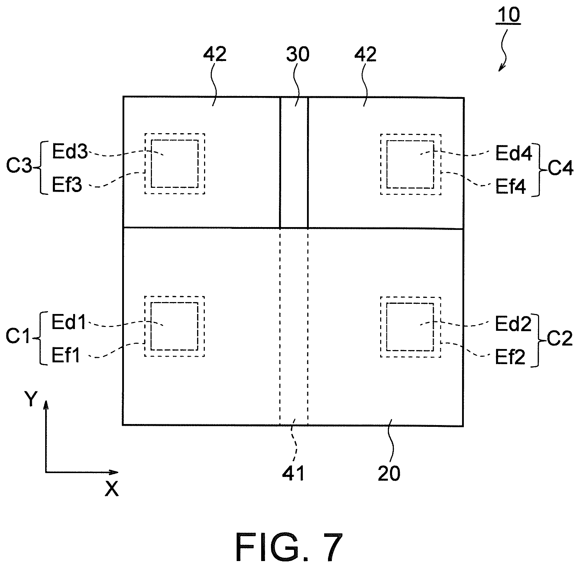

Although not shown in Figure 2 to Figure 4, the detecting element 60 according to the present embodiment may further include a third capacitive element C3 and a fourth capacitive element C4 (see Figure 6 and Figure 7). For example, the first capacitive element C1 and the third capacitive element C3 may be arranged at the same position in the X-axis direction. The second capacitive element C2 and the fourth capacitive element C4 may be arranged at the same position in the X-axis direction. The third capacitive element C3 and the fourth capacitive element C4 may be arranged at the same position in the Y-axis direction. The third capacitive element C3 may be arranged on the positive side in the Y-axis direction relative to the first capacitive element C1, and the fourth capacitive element C4 may be arranged on the positive side in the Y-axis direction relative to the second capacitive element C2. In this case, the force "Fx" may be calculated as "Fx2" by an expression below.

$$[\text{Expression 2}]$$
$$Fx2 = -C3 + C4$$

Alternatively, the force "Fx" may be calculated as "Fx3" (= "Fx1" + "Fx2") by an expression below using the first capacitive element C1 to the fourth capacitive element C4.

$$[\text{Expression 3}]$$
$$Fx3 = -C1 + C2 - C3 + C4$$

A failure diagnosis may be performed by comparing "Fx1" in [Expression 1] set forth above and "Fx2" in [Expression 2]. Alternatively, a failure diagnosis may be performed by comparing "Fx3" in [Expression 3] and a total value of "Fx1" and "Fx2". Alternatively, a failure diagnosis may be performed by comparing "Fx1" in [Expression 1] multiplied by a predetermined multiplication factor and "Fx3" in [Expression 3]. Alternatively, a failure diagnosis may be performed by comparing "Fx2" in [Expression 2] multiplied by a predetermined multiplication factor and "Fx3" in [Expression 3]. The failure diagnosis may be performed by the detecting circuit 70 set forth above or may be performed by the controller 5 of the robot 1.

Also in the case in which the individual force receiving body 20 is subjected to a moment "My" around the Y-axis, the first connecting body 41 is elastically deformed similarly to Figure 4. The first capacitive element C1 decreases in capacitance value, and the second capacitive element C2 increases in capacitance value. Thus, the moment "My" is calculated by [Expression 4] below similarly to [Expression 1] set forth above.

$$[Expression\ 4]$$
$$My = -C1 + C2$$

In the case in which the individual force receiving body 20 is subjected to the force "Fy" in the Y-axis direction, it can be assumed that there is no change in capacitance value in each of the capacitive elements C1 and C2. As set forth above, the dimension L1 of the first connecting body 41 in the Y-axis direction is larger than the thickness t1. Accordingly, the first connecting body 41 increases in spring constant in response to the force "Fy" in the Y-axis direction and substantially acts as a rigid body. Thus, it can be assumed that the first connecting body 41 is not elastically deformed in the Y-axis direction. Also in a case in which a moment "Mx" around the X-axis acts on the first strain generating body 40, it can be similarly assumed that there is no change in capacitance value in each of the capacitive elements C1 and C2.

In a case in which the individual force receiving body 20 is subjected to a force "Fz" in the Z-axis direction, it can be assumed that there is no change in capacitance value in each of the capacitive elements C1 and C2. As set forth above, the first connecting body 41 extends in the Z-axis direction from the force-receiving-body-side end 43 to the fixed-body-side end 44. Accordingly, the first connecting body 41 increases in spring constant in response to the force "Fz" in the Z-axis direction and substantially acts as a rigid body. Thus, it can be assumed that the first connecting body 41 is not elastically deformed in the Z-axis direction.

As described above, the individual force sensor 10 in which the individual force receiving body 20 and the individual fixed body 30 are connected by the single first strain generating body 40 can detect the force "Fx" and the moment "My". This individual force sensor 10 may be used in an environment on which only either one of the force "Fx" and the moment "My" acts, and may be used as a sensor that detects one axis component.

According to the present embodiment as described above, the first strain generating body 40 that connects the individual force receiving body 20 and the individual fixed body 30 includes the first connecting body 41. The first connecting body 41 extends in the Z-axis direction from the force-receiving-body-side end 43 connected to the individual force receiving body 20 to the fixed-body-side end 44 connected to the individual fixed body 30. This can simplify the shape of the first strain generating body 40 and can simplify the structure of the first strain generating body 40. In addition, the spacing between the individual force receiving body 20 and the individual fixed body 30 can be reduced. As a result, the individual force sensor 10 can be lowered in price, and the height of the individual force sensor 10 (a dimension h0 in the Z-axis direction shown in Figure 2) can be lowered.

In addition, according to the present embodiment, the first strain generating body 40 includes the displacement bodies 42 protruding from the first connecting body 41 in the X-axis direction orthogonal to the Z-axis direction, and the displacement bodies 42 are provided with the displacement electrode substrates Ed1, Ed2 opposed to the fixed electrode substrates Ef1, Ef2. This can cause the displacement bodies 42 to be displaced by elastic deformation of the first connecting body 41 while preventing the shape of the first strain generating body 40 or the structure of the first strain generating body 40 from being complicated.

In addition, according to the present embodiment, the first connecting body 41 is formed along each of the Y-axis direction and the Z-axis direction. This can simplify the shape of the first connecting body 41. In addition, the spacing between the individual force receiving body 20 and the individual fixed body 30 can be reduced.

In addition, according to the present embodiment, the dimension of the first connecting body 41 in the X-axis direction is smaller than the dimension in the Y-axis direction when viewed in the Z-axis direction. Accordingly, the spring constant of the first connecting body 41 acting on the force "Fx" in the X-axis direction can be made smaller than a spring constant in response to the action of the force "Fy" in the Y-axis direction. Thus, the first connecting body 41 can be elastically deformed easily by the action of the force "Fx", which can improve the detection sensitivity for the force "Fx".

In addition, according to the present embodiment, the individual force receiving body 20, the individual fixed body 30, and the displacement bodies 42 are formed along each of the X-axis direction and the Y-axis direction. This can simplify the shape of the individual force receiving body 20, the individual fixed body 30, and the displacement bodies 42 and can simplify the structure of the first strain generating body 40. In addition, the spacing between the individual force receiving body 20 and the individual fixed body 30 can be reduced. As a result, the individual force sensor 10 can be lowered in price, and the height of the individual force sensor 10 can be lowered.

In addition, according to the present embodiment, the displacement bodies 42 protruding on both the sides of the first connecting body 41 are respectively provided with the displacement electrode substrates Ed1, Ed2. Accordingly, in the case in which the individual force receiving body 20 is subjected to the force "Fx" in the X-axis direction, one of the displacement electrode substrates Ed1, Ed2 can be moved away from the corresponding one of the fixed electrode substrates Ef1, Ef2, and the other one of the displacement electrode substrates Ed1, Ed2 can be brought closer to the corresponding one of the fixed electrode substrates Ef1, Ef2. Thus, the detection sensitivity for the force "Fx" can be improved.

In addition, according to the present embodiment, the individual force receiving body 20, the individual fixed body 30, and the first strain generating body 40 are integrally formed from a continuous material. This can simplify the structure of the individual force sensor 10. For example, in a case in which the individual force receiving body 20, the individual fixed body 30, and the first strain generating body 40 are separately formed and fixed by bolts, adhesive, or the like, the structure will be complicated in order to enable such fixation, and space for better workability will be required. Thus, lowering of the price of the individual force sensor 10 may be limited, and lessening of the height of the individual force sensor 10 may be limited. In contrast, the present embodiment can further simplify the structure since the individual force receiving body 20, the individual fixed body 30, and the first strain generating body 40 are integrally formed from a continuous material. In addition, the spacing between the individual force receiving body 20 and the individual fixed body 30 can be further reduced. As a result, the individual force sensor 10 can be further lowered in price, and the height of the individual force sensor 10 can be further lowered.

(Second Embodiment)

Next, an individual force sensor according to a second embodiment of the present invention will be described using Figure 5 to Figure 7.

The second embodiment shown in Figure 5 to Figure 7 is different from the first embodiment shown in Figure 1 to Figure 4 mainly in that an individual fixed body and a displacement body protrude in the Y-axis direction relative to an individual force receiving body, and the remaining configuration is substantially identical to that of the first embodiment. Note that in Figure 5 to Figure 7, portions identical to those of the first embodiment shown in Figure 1 to Figure 4 have identical reference characters allotted, and detailed description will be omitted. Figure 5 is a perspective view showing the individual force sensor according to the second embodiment. Figure 6 is a side view showing the individual force sensor shown in Figure 5, and Figure 7 is a plan view showing the individual force sensor shown in Figure 5.

As shown in Figure 5 to Figure 7, in the present embodiment, the individual fixed body 30 and the displacement bodies 42 may protrude in the Y-axis direction relative to the individual force receiving body 20. The displacement bodies 42 may protrude in the Y-axis direction relative to the first connecting body 41. As shown in Figure 7, portions (upper portions in Figure 7) of the displacement bodies 42 on the positive side in the Y-axis direction relative to the first connecting body 41 may be apart from each other. The individual fixed body 30 may be exposed in a region between the displacement bodies 42 when viewed in the Z-axis direction. Part of the individual fixed body 30 may be overlapped on the individual force receiving body 20 when viewed in the Z-axis direction. The dimension of the individual fixed body 30 in the Y-axis direction may be larger than the dimension of the individual force receiving body 20 in the Y-axis direction. The displacement bodies 42 may be entirely overlapped on the individual fixed body 30. The displacement bodies 42 may have a dimension in the Y-axis direction identical to the dimension of the individual fixed body 30 in the Y-axis direction.

As shown in Figure 5 and Figure 6, in the present embodiment, the individual force receiving body 20, the individual fixed body 30, and the first strain generating body 40 may be composed of the individual sensor structure 50 set forth above. In this case, the force-receiving-body-side end 43 which is a connection point between the individual force receiving body 20 and the first connecting body 41 of the first strain generating body 40 may be provided with the R-shaped portion 50R as shown in Figure 5. Similarly, the fixed-body-side end 44 which is a connection point between the individual fixed body 30 and the first connecting body 41 of the first strain generating body 40 may also be provided with the R-shaped portion 50R, and a connection point between the first connecting body 41 and the displacement body 42 may also be provided with the R-shaped portion 50R.

As shown in Figure 6 and Figure 7, the detecting element 60 may further include the third capacitive element C3 and the fourth capacitive element C4. For example, the third capacitive element C3 includes a third fixed electrode substrate Ef3 and a third displacement electrode substrate Ed3. The fourth capacitive element C4 includes a fourth fixed electrode substrate Ef4 and a fourth displacement electrode substrate Ed4.

The first capacitive element C1 and the third capacitive element C3 are arranged at the same position in the X-axis direction. The second capacitive element C2 and the fourth capacitive element C4 are arranged at the same position in the X-axis direction. The first capacitive element C1 and the second capacitive element C2 are arranged at the same position in the Y-axis direction. The third capacitive element C3 and the fourth capacitive element C4 are arranged at the same position in the Y-axis direction. The third capacitive element C3 may be arranged on the positive side in the Y-axis direction relative to the first capacitive element C1, and the fourth capacitive element C4 may be arranged on the positive side in the Y-axis direction relative to the second capacitive element C2.

According to the present embodiment as described above, the individual fixed body 30 and the displacement bodies 42 protrude in the Y-axis direction relative to the individual force receiving body 20. Accordingly, a planar area of the individual fixed body 30 and a planar area of the displacement bodies 42 can be made larger. Thus, not only the first capacitive element C1 and the second capacitive element C2, but also the third capacitive element C3 and the fourth capacitive element C4 can be easily arranged. That is to say, the number of capacitive elements that make up of the detecting element 60 can be increased. In addition, an electrode of each of the capacitive elements can be enlarged to improve the detection sensitivities.

Note that in the present embodiment set forth above, the case in which the detecting element 60 includes the first capacitive element C1, the second capacitive element C2, the third capacitive element C3, and the fourth capacitive element C4 has been described. However, the present embodiment is not limited to this. For example, the detecting element 60 may not include the third capacitive element C3 or the fourth capacitive element C4. Alternatively, the detecting element 60 may not include the first capacitive element C1 or the second capacitive element C2. Alternatively, the first capacitive element C1 and the third capacitive element C3 may be integrated, and the second capacitive element C2 and the fourth capacitive element C4 may be integrated. For example, the first capacitive element C1 and the third capacitive element C3 may be integrated with the respective fixed electrodes Ef of the first capacitive element C1 and the third capacitive element C3 connected in parallel and the respective displacement electrodes Ed of the first capacitive element C1 and the third capacitive element C3 connected in parallel. Similarly, the second capacitive element C2 and the fourth capacitive element C4 may be integrated with the respective fixed electrodes Ef of the second capacitive element C2 and the fourth capacitive element C4 connected in parallel and the respective displacement electrodes Ed of the second capacitive element C2 and the fourth capacitive element C4 connected in parallel. In the case in which the first capacitive element C1 and the third capacitive element C3 are integrated, the capacitance value of the first capacitive element C1 and the capacitance value of the third capacitive element C3 are added, so that the sensitivities can be raised. When the second capacitive element C2 and the fourth capacitive element C4 are integrated, the capacitance value of the second capacitive element C2 and the capacitance value of the fourth capacitive element C4 are added, so that the sensitivities can be raised.

(Third Embodiment)

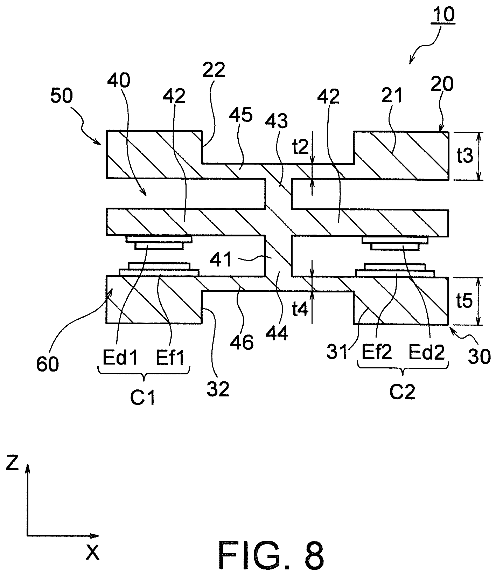

Next, an individual force sensor according to a third embodiment of the present invention will be described using Figure 8 to Figure 13.

The third embodiment shown in Figure 8 to Figure 13 is different from the first embodiment shown in Figure 1 to Figure 4 mainly in that the first strain generating body includes a first thin portion that connects the individual force receiving body and the first connecting body and a second thin portion that connects the individual fixed body and the first connecting body, and the remaining configuration is substantially identical to that of the first embodiment. Note that in Figure 8 to Figure 13, portions identical to those of the first embodiment shown in Figure 1 to Figure 4 have identical reference characters allotted, and detailed description will be omitted.

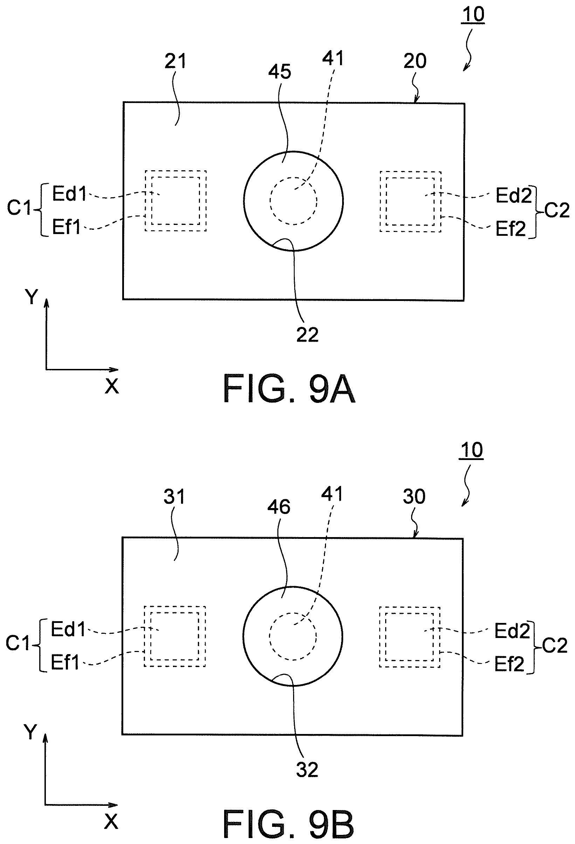

First, the individual force sensor 10 according to the present embodiment will be described using Figure 8, Figure 9A, and Figure 9B. Figure 8 is a vertical cross sectional view showing the individual force sensor 10 according to the third embodiment. Figure 9A is a plan view showing the individual force receiving body 20 shown in Figure 8, and Figure 9B is a bottom view showing the individual fixed body 30 shown in Figure 8.

As shown in Figure 8, the first strain generating body 40 according to the present embodiment includes a first force receiving thin portion 45. The first force receiving thin portion 45 is an example of the first thin portion. The first force receiving thin portion 45 is formed along the plane orthogonal to the Z-axis direction. That is to say, the first force receiving thin portion 45 is formed along each of the X-axis direction and the Y-axis direction.

The individual force receiving body 20 includes an individual force receiving main body portion 21. The individual force receiving main body portion 21 is formed around the first force receiving thin portion 45.

The first force receiving thin portion 45 is interposed between the individual force receiving body 20 and the first connecting body 41 and connects the individual force receiving main body portion 21 to the force-receiving-body-side end 43 of the first connecting body 41. The first force receiving thin portion 45 is thinner than the individual force receiving main body portion 21 of the individual force receiving body 20. More specifically, a thickness $t2$ (a dimension in the Z-axis direction) of the first force receiving thin portion 45 is thinner than a thickness $t3$ of the individual force receiving main body portion 21. The first force receiving thin portion 45 has flexibility and is elastically deformable by the action of a force or moment.

The planar shape of the first force receiving thin portion 45 may be, but is not particularly limited to, circular as shown in Figure 9A. Because of the formation of the first force receiving thin portion 45, an individual force receiving recess 22 may be formed in a surface (an upper surface in Figure 8) of the individual force receiving body 20 positioned opposite to the individual fixed body 30.

The first connecting body 41 according to the present embodiment may be formed into a circular shape when viewed in the Z-axis direction. The first connecting body 41 may be formed into a cylindrical shape extending in the Z-axis direction. When viewed in the Z-axis direction, the first connecting body 41 may be arranged concentrically with the first force receiving thin portion 45 and may be arranged concentrically with a first fixed thin portion 46 which will be described later.

As shown in Figure 8, the first strain generating body 40 according to the present embodiment includes the first fixed thin portion 46. The first fixed thin portion 46 is an example of the second thin portion. The first fixed thin portion 46 is formed along the plane orthogonal to the Z-axis direction. That is to say, the first fixed thin portion 46 is formed along each of the X-axis direction and the Y-axis direction.

The individual fixed body 30 includes an individual fixed main body portion 31. The individual fixed main body portion 31 is formed around the first fixed thin portion 46. The fixed electrode substrates Ef1, Ef2 set forth above may be fixed to the individual fixed main body portion 31.

The first fixed thin portion 46 is interposed between the individual fixed body 30 and the first connecting body 41 to connect the individual fixed main body portion 31 to the fixed-body-side end 44 of the first connecting body 41. The first fixed thin portion 46 is thinner than the individual fixed main body portion 31 of the individual fixed body 30. More specifically, a thickness t4 (a dimension in the Z-axis direction) of the first fixed thin portion 46 is thinner than a thickness t5 of the individual fixed main body portion 31. The first fixed thin portion 46 has flexibility and is elastically deformable by the action of a force or moment.

The planar shape of the first fixed thin portion 46 may be, but is not particularly limited to, circular similarly to the first force receiving thin portion 45 as shown in Figure 9B. Because of the formation of the first fixed thin portion 46, an individual fixed recess 32 may be formed in a surface (a lower surface in Figure 8) of the individual fixed body 30 positioned opposite to the individual force receiving body 20.

Also in the present embodiment, the individual force receiving body 20, the individual fixed body 30, and the first strain generating body 40 may be integrally formed from a continuous material. The individual force receiving body 20, the individual fixed body 30, and the first strain generating body 40 may make up of the single individual sensor structure 50.

However, the individual force sensor 10 according to the present embodiment is not limited to this. For example, at least two components among the individual force receiving body 20, the individual fixed body 30, and the first strain generating body 40 may be integrally formed, and the remaining component may be separately formed.

For example, the individual force receiving main body portion 21 and the first force receiving thin portion 45 may be integrally formed, and the first force receiving thin portion 45 and the first connecting body 41 may be separately formed. In this case, a bolt hole for inserting a bolt (not shown) for fixing the first force receiving thin portion 45 and the first connecting body 41 may be formed in the first force receiving thin portion 45. This enables the head of the bolt to be contained in the individual force receiving recess 22. Thus, the head of the bolt can be prevented from protruding from the individual force receiving body 20, which can lower the height of the individual force sensor 10.

For example, the individual fixed main body portion 31 and the first fixed thin portion 46 may be integrally formed, and the first fixed thin portion 46 and the first connecting body 41 may be separately formed. In this case, a bolt hole for inserting a bolt for fixing the first fixed thin portion 46 and the first connecting body 41 may be formed in the first fixed thin portion 46. This enables the head of the bolt to be contained in the individual fixed recess 32. Thus, the head of the bolt can be prevented from protruding from the individual fixed body 30, which can lower the height of the individual force sensor 10.

For example, in a case in which the individual force receiving main body portion 21 and the first force receiving thin portion 45 are integrally formed and in which the first force receiving thin portion 45 and the first connecting body 41 are separately formed, the individual fixed main body portion 31 and the first fixed thin portion 46 may be integrally formed, and the first fixed thin portion 46 and the first connecting body 41 may be separately formed. The first force receiving thin portion 45 and the first connecting body 41 may be fixed using the bolt as set forth above. The first fixed thin portion 46 and the first connecting body 41 may be fixed using the bolt as set forth above.

Next, a method for detecting a force or moment in the individual force sensor 10 according to the present embodiment having such a configuration will be described.

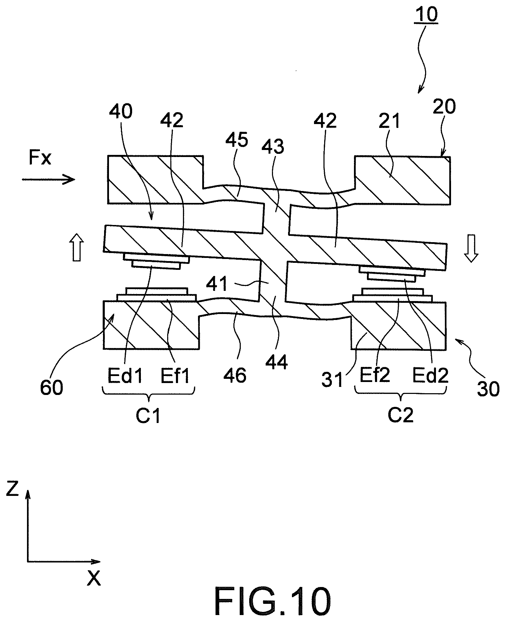

The case in which the individual force receiving body 20 according to the present embodiment is subjected to the force "Fx" in the X-axis direction will be described using Figure 10. Figure 10 is a vertical cross sectional view schematically showing a displaced state of the first strain generating body 40 in the case in which the individual force receiving body 20 is subjected to the force "Fx" to the positive side in the X-axis direction.

As shown in Figure 10, the first connecting body 41 may be elastically deformed in the case in which the individual force receiving body 20 is subjected to the force "Fx". The first connecting body 41 may be elastically deformed similarly to the first connecting body 41 shown in Figure 4. In the present embodiment, the first force receiving thin portion 45 is also elastically deformed since the first force receiving thin portion 45 is interposed between the individual force receiving main body portion 21 of the individual force receiving body 20 and the first connecting body 41. Similarly, the first fixed thin portion 46 is also elastically deformed since the first fixed thin portion 46 is interposed between the individual fixed main body portion 31 of the individual fixed body 30 and the first connecting body 41. Note that the first connecting body 41 may not be substantially elastically deformed as long as the first force receiving thin portion 45 and the first fixed thin portion 46 are elastically deformed.

In the case in which the individual force receiving body 20 is subjected to the force "Fx", the first capacitive element C1 decreases in capacitance value, and the second capacitive element C2 increases in capacitance value. In this case, the force "Fx" is calculated by [Expression 1] set forth above.

Also in the case in which the individual force receiving body 20 according to the present embodiment is subjected to the moment "My" around the Y-axis, the first capacitive element C1 decreases in capacitance value, and the second capacitive element C2 increases in capacitance value, similarly to the individual force sensor 10 shown in Figure 4. In this case, the moment "My" is expressed by [Expression 4] set forth above.

In the case in which the individual force receiving body 20 is subjected to the force "Fy" in the Y-axis direction, it can be assumed that there is no change in capacitance value in each of the capacitive elements C1 and C2. This is because the first capacitive element C1 and the second capacitive element C2 are arranged at the same position as the first connecting body 41 in the Y-axis direction. Also in the case in which the individual force receiving body 20 is subjected to the moment "Mx" around the X-axis, it can be similarly assumed that there is no change in capacitance value in each of the capacitive elements C1 and C2.

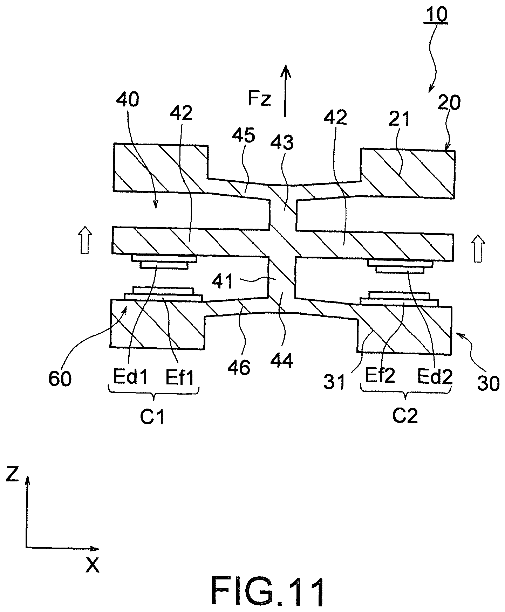

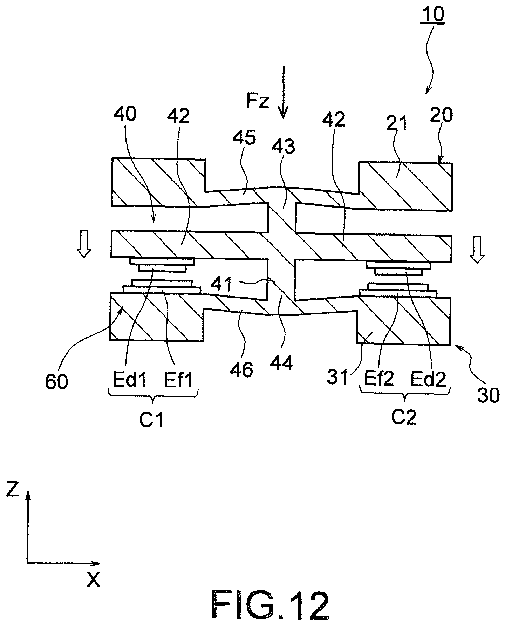

Next, a case in which the individual force receiving body 20 is subjected to the force "Fz" to the positive side in the Z-axis direction will be described using Figure 11 and Figure 12. Figure 11 is a vertical cross sectional view schematically showing a displaced state of the first strain generating body 40 in the case in which the individual force receiving body 20 of the individual force sensor 10 is subjected to the force "Fz" to the positive side in the Z-axis direction. Figure 12 is a vertical cross sectional view schematically showing a displaced state of the first strain generating body 40 in the case in which the individual force receiving body 20 of the individual force sensor 10 is subjected to the force "Fz" to the negative side in the Z-axis direction.

As shown in Figure 11, in the case in which the individual force receiving body 20 is subjected to the force "Fz" to the positive side in the Z-axis direction, the first force receiving thin portion 45 and the first fixed thin portion 46 are elastically deformed. The individual force receiving body 20 is displaced to the positive side in the Z-axis direction, and the first connecting body 41 and the displacement bodies 42 are displaced to the positive side in the Z-axis direction. The first connecting body 41 is not subjected to substantial elastic deformation in the Z-axis direction. Accordingly, the first displacement electrode substrate Ed1 rises to move away from the first fixed electrode substrate Ef1. The interelectrode distance between the first displacement electrode substrate Ed1 and the first fixed electrode substrate Ef1 increases, and the first capacitive element C1 decreases in capacitance value. Similarly, the second displacement electrode substrate Ed2 also rises to move away from the second fixed electrode substrate Ef2. The interelectrode distance between the second displacement electrode substrate Ed2 and the second fixed electrode substrate Ef2 increases, and the second capacitive element C2 decreases in capacitance value.

The force "Fz" acting on the individual force receiving body 20 may be calculated by an expression below.

$$[\text{Expression 5}]$$
$$Fz = -C1 - C2$$

As shown in Figure 12, in the case in which the individual force receiving body 20 is subjected to the force "Fz" to the negative side in the Z-axis direction, the first force receiving thin portion 45 and the first fixed thin portion 46 are elastically deformed. The individual force receiving body 20 is displaced to the negative side in the Z-axis direction, and the first connecting body 41 and the displacement bodies 42 are displaced to the negative side in the Z-axis direction. The first connecting body 41 is not subjected to substantial elastic deformation in the Z-axis direction. Accordingly, the first displacement electrode substrate Ed1 descends to approach the first fixed electrode substrate Ef1. The interelectrode distance between the first displacement electrode substrate Ed1 and the first fixed electrode substrate Ef1 decreases, and the first capacitive element C1 increases in capacitance value. Similarly, the second displacement electrode substrate Ed2 also descends to approach the second fixed electrode substrate Ef2. The interelectrode distance between the second displacement electrode substrate Ed2 and the second fixed electrode substrate Ef2 decreases, and the second capacitive element C2 increases in capacitance value.

As described above, the individual force sensor 10 according to the present embodiment can detect the force "Fx", the force "Fz", and the moment "My". This individual force sensor 10 may be used in an environment in which only either one of the force "Fx" and the moment "My", and the force "Fz" act, and may be used as a sensor that detects two axis components.

According to the present embodiment as described above, the first strain generating body 40 includes the first force receiving thin portion 45, and the first force receiving thin portion 45 connects the individual force receiving body 20 and the force-receiving-body-side end 43 of the first connecting body 41. The first force receiving thin portion 45 is thinner than the individual force receiving body 20. Accordingly, the first force receiving thin portion 45 can be elastically deformed by the action of a force or moment, which can displace the individual force receiving body 20 in the Z-axis direction in the case in which the individual force receiving body 20 is subjected to the force "Fz" in the Z-axis direction, for example. Thus, the displacement bodies 42 of the first strain generating body 40 can be displaced, and each of the capacitive elements C1, C2 can be changed in capacitance value. As a result, axis components that can be detected can be increased while simplifying the shape of the first strain generating body 40 and simplifying the structure, which can improve versatility.

In addition, according to the present embodiment, the first strain generating body 40 includes the first fixed thin portion 46, and the first fixed thin portion 46 connects the individual fixed body 30 and the fixed-body-side end 44 of the first connecting body 41. The first fixed thin portion 46 is thinner than the individual fixed body 30. Accordingly, the first fixed thin portion 46 can be elastically deformed by the action of a force or moment, which can displace the individual force receiving body 20 in the Z-axis direction in the case in which the individual force receiving body 20 is subjected to the force "Fz" in the Z-axis direction, for example. Thus, the displacement bodies 42 of the first strain generating body 40 can be displaced, and each of the capacitive elements C1, C2 can be changed in capacitance value. As a result, axis components that can be detected can be increased while simplifying the shape of the first strain generating body 40 and simplifying the structure, which can improve versatility.

Note that in the present embodiment set forth above, the example in which the first strain generating body 40 includes the first force receiving thin portion 45 and the first fixed thin portion 46 has been described. However, the present embodiment is not limited to this. For example, the first strain generating body 40 may not include the first force receiving thin portion 45 as long as it includes the first fixed thin portion 46. In this case, the first connecting body 41 may be directly connected to the individual force receiving main body portion 21 of the individual force receiving body 20 without the first force receiving thin portion 45 being formed, similarly to the force-receiving-body-side end 43 shown in Figure 2.

In addition, in the present embodiment set forth above, the example in which the detecting element 60 includes the first capacitive element C1 and the second capacitive element C2 has been described. However, the present embodiment is not limited to this. For example, the detecting element 60 may further include the third capacitive element C3 and the fourth capacitive element C4 (see Figure 6 and Figure 7). In this case, the detecting circuit 70 or the controller 5 may perform a failure diagnosis as set forth above.

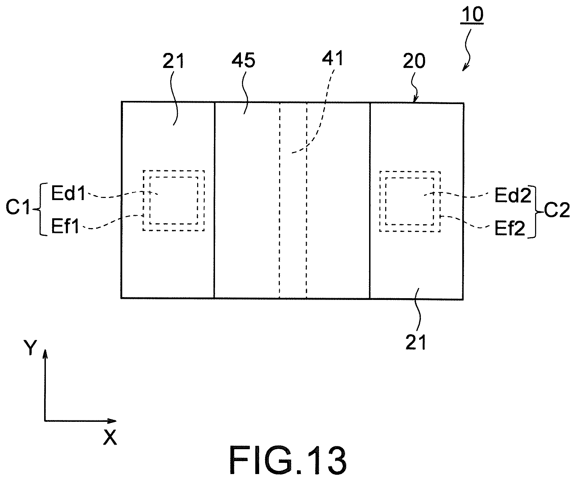

In addition, in the present embodiment set forth above, the example in which the planar shape of the first force receiving thin portion 45 is circular and in which the individual force receiving main body portion 21 of the individual force receiving body 20 is formed around the first force receiving thin portion 45 has been described. However, the present embodiment is not limited to this. For example, the planar shape of the first force receiving thin portion 45 may be quadrangular as shown in Figure 13. In this case, the first connecting body 41 may be formed into a flat-plate shape, and the dimension of the first connecting body 41 in the X-axis direction may be smaller than the dimension of the first connecting body 41 in the Y-axis direction, similarly to the first connecting body 41 shown in Figure 3. The individual force receiving main body portions 21 may be formed on both the sides in the X-axis direction of the first force receiving thin portion 45. The individual force receiving main body portion 21 may also extend to both the sides in the Y-axis direction of the first force receiving thin portion 45 so that the individual force receiving main body portion 21 may be formed around the first force receiving thin portion 45. The same applies to the first fixed thin portion 46.

In addition, in the present embodiment set forth above, the first force receiving thin portion 45 may be provided with a plurality of through-holes not shown. In this case, the first force receiving thin portion 45 can be increased in flexibility. Alternatively, in the case in which the first force receiving thin portion 45 includes the through-holes, the thickness t2 of the first force receiving thin portion 45 can be made larger. In a case in which the individual sensor structure 50 is made by casting, a flow of melted metal can be ensured also in a portion of a mold corresponding to the first force receiving thin portion 45 by making the thickness of the first force receiving thin portion 45 larger. Any shape such as a circle, a semicircle, an ellipse, a fan shape, a triangle, and a quadrangle can be employed as the planar shape of the through-holes as long as the first force receiving thin portion 45 can have flexibility. The same applies to the first fixed thin portion 46.

(Fourth Embodiment)

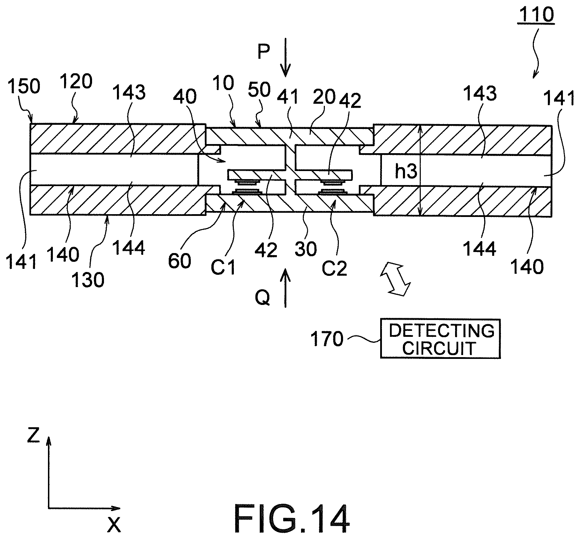

Next, a force sensor according to a fourth embodiment of the present invention will be described using Figure 14 to Figure 18.

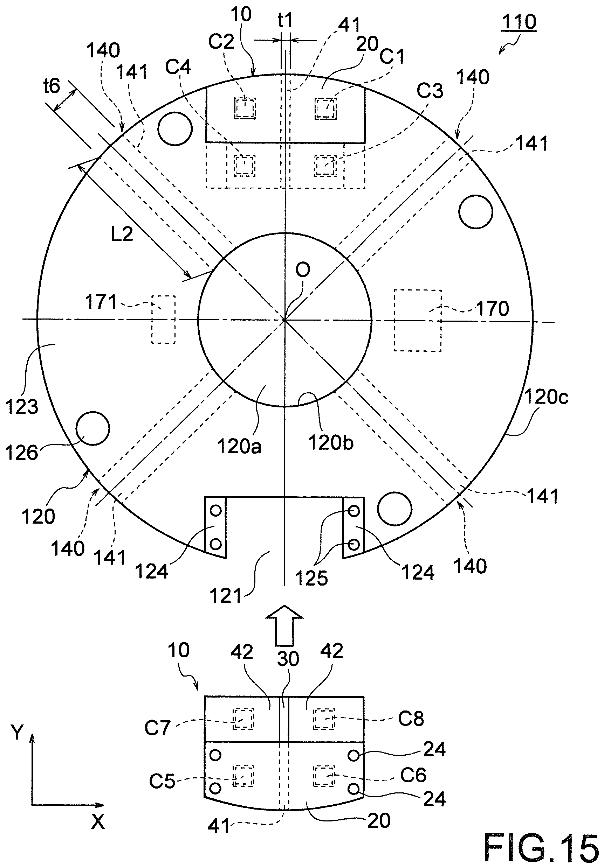

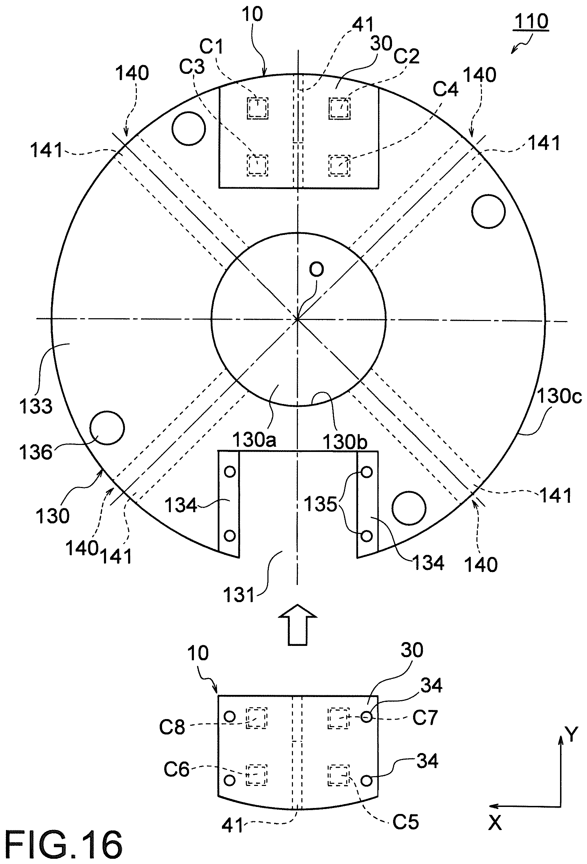

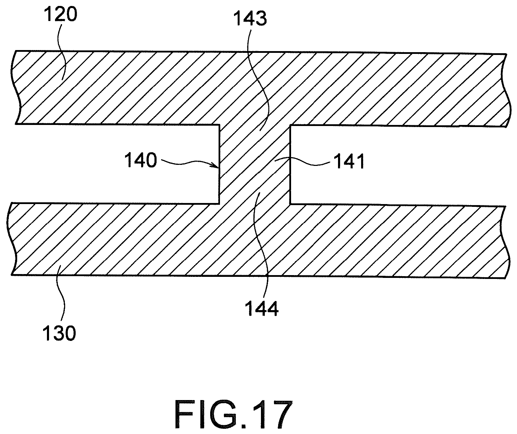

The fourth embodiment shown in Figure 14 to Figure 18 is different from the second embodiment shown in Figure 5 to Figure 7 mainly in that a force sensor is composed of a plurality of individual force sensors, and the remaining configuration is substantially identical to that of the second embodiment. Note that in Figure 14 to Figure 18, portions identical to those of the second embodiment shown in Figure 5 to Figure 7 have identical reference characters allotted, and detailed description will be omitted. Figure 14 is a vertical cross sectional view showing the force sensor according to the fourth embodiment. Figure 15 is a diagram viewed along an arrow P in Figure 14, and Figure 16 is a diagram viewed along an arrow Q in Figure 14. Figure 17 is a vertical cross sectional view of a second connecting body shown in Figure 15 and Figure 16, and Figure 18 is an enlarged vertical cross sectional view showing an individual force sensor shown in Figure 14.

Figure 14 to Figure 16 show a force sensor 110 according to the present embodiment. The force sensor 110 according to the present embodiment is composed of a plurality of individual force sensors 10 and includes a plurality of first strain generating bodies 40. More specifically, the force sensor 110 includes a force receiving body 120, the plurality of individual force sensors 10, a fixed body 130, a plurality of second strain generating bodies 140, and a detecting circuit 170.

The individual force sensors 10 according to the present embodiment may have a configuration generally similar to the individual force sensor 10 shown in Figure 5 to Figure 7. The detecting element 60 of each of the individual force sensors 10 may include four capacitive elements. The number of the individual force sensors 10 that make up of the force sensor 110 according to the present embodiment is two, but may be three or more and may be any number. In the present embodiment, the two individual force sensors 10 are arranged at a pitch of 180° relative to a central point O of the force receiving body 120 which will be described later when viewed in the Z-axis direction. In other words, the plurality of individual force sensors 10 may be arranged at an equal pitch relative to the central point O of the force receiving body 120. The first connecting body 41 of each of the individual force sensors 10 are formed in the radial direction relative to the central point O of the force receiving body 120 when viewed in the Z-axis direction. In the present embodiment, the first connecting body 41 is arranged in the Y-axis direction. When viewed in the Z-axis direction, outer edges of the individual force receiving body 20, the individual fixed body 30, and the displacement bodies 42 positioned on the positive side in the Y-axis direction or on the negative side in the Y-axis direction may be respectively formed into an arc shape so as to be continuous from the outer edges of the force receiving body 120 and the fixed body 130.

The force receiving body 120 is an example of a first sensor body. The force receiving body 120 is subjected to a force or moment to be detected. As shown in Figure 14 and Figure 15, the force receiving body 120 is configured to support the individual force receiving body 20 of each of the individual force sensors 10. Each of the individual force sensors 10 is detachably attached to the force receiving body 120. The individual force sensor 10 is arranged on an outer side edge 120c of the force receiving body 120 which will be described later. The force receiving body 120 is formed along the plane orthogonal to the Z-axis direction. That is to say, the force receiving body 120 is formed along each of the X-axis direction and the Y-axis direction. The force receiving body 120 may be formed generally in a flat-plate shape. The force receiving body 120 may be fixed to the tool 3 shown in Figure 1 using bolts or the like inserted into bolt holes 126. In this case, the force receiving body 120 may be subjected to a force or moment from the tool 3. As shown in Figure 15, the force receiving body 120 may include a force receiving body central opening 120a. In this case, the planar shape of the force receiving body 120 may be generally a circular ring shape.

The fixed body 130 is an example of a second sensor body. As shown in Figure 14 and Figure 16, the fixed body 130 is configured to support the individual fixed body 30 of each of the individual force sensors 10. Each of the individual force sensors 10 is detachably attached to the fixed body 130. The individual force sensor 10 is arranged on an outer side edge 130c of the fixed body 130 which will be described later. The fixed body 130 is formed along the plane orthogonal to the Z-axis direction. That is to say, the fixed body 130 is formed along each of the X-axis direction and the Y-axis direction. The fixed body 130 may be formed generally in a flat-plate shape. The fixed body 130 may be fixed to the leading end of the robot arm 4 shown in Figure 1 using bolts or the like inserted into bolt holes 136. In this case, the fixed body 130 may be supported by the robot arm 4. As shown in Figure 16, the fixed body 130 may include a fixed body central opening 130a similar to the force receiving body central opening 120a set forth above. In this case, the planar shape of the fixed body 130 may be generally a circular ring shape. The fixed body central opening 130a may be overlapped on the force receiving body central opening 120a when viewed in the Z-axis direction. The fixed body 130 may be arranged concentrically with the force receiving body 120.

As shown in Figure 15 and Figure 16, at least one of the planar shape of the force receiving body 120 and the planar shape of the fixed body 130 may be a planar shape other than the circular ring shape. In this case, one of the planar shape of the force receiving body 120 and the planar shape of the fixed body 130 may be circular, and the other may be a shape other than a circle. For example, the planar shape of the force receiving body 120 may be a circular shape not including the force receiving body central opening 120a. Alternatively, the planar shape of the force receiving body 120 may be a quadrangular shape (for example, rectangular or square). The same applies to the planar shape of the fixed body 130.

As shown in Figure 14 to Figure 17, second strain generating bodies 140 connect the force receiving body 120 and the fixed body 130. The second strain generating bodies 140 are arranged between the force receiving body 120 and the fixed body 130. In the present embodiment, the force receiving body 120 and the fixed body 130 are connected by the four second strain generating bodies 140.

The second strain generating body 140 will be described more specifically. The second strain generating body 140 according to the present embodiment is configured to be elastically deformed by the action of a force or moment acting on the force receiving body 120 to cause a strain and to be displaced.

The second strain generating body 140 includes a second connecting body 141.

As shown in Figure 14, the second connecting body 141 connects the force receiving body 120 and the fixed body 130. The second connecting body 141 is arranged between the force receiving body 120 and the fixed body 130. In the present embodiment, the force receiving body 120 and the fixed body 130 are connected by the plurality of second connecting bodies 141. In the present embodiment, the force receiving body 120 and the fixed body 130 are connected by the four second connecting bodies 141. The number of the second connecting bodies 141 is not limited to four and may be any number.

As shown in Figure 15 and Figure 16, the second connecting bodies 141 are formed along the radial direction relative to the central point O of the force receiving body 120 and extend radially when viewed in the Z-axis direction. The four second connecting bodies 141 may be arranged at a pitch of 90° relative to the central point O of the force receiving body 120 when viewed in the Z-axis direction. In other words, the plurality of second connecting bodies 141 may be arranged at an equal pitch relative to the central point O of the force receiving body 120. The second connecting bodies 141 may be arranged at positions not overlapped on the individual force sensor 10 when viewed in the Z-axis direction. The second connecting bodies 141 may extend in the radial direction from an inner side edge 120b to the outer side edge 120c of the force receiving body 120 having a circular ring shape or from an inner side edge 130b to the outer side edge 130c of the fixed body 130 having a circular ring shape when viewed in the Z-axis direction. However, this is not a limitation, and the second connecting bodies 141 may not extend to the inner side edge 120b of the force receiving body 120 or may not extend to the inner side edge 130b of the fixed body 130. The second connecting bodies 141 may be apart from the inner side edge 120b of the force receiving body 120 and may be apart from the inner side edge 130b of the fixed body 130. The second connecting bodies 141 may not extend to the outer side edge 120c of the force receiving body 120 and may not extend to the outer side edge 130c of the fixed body 130. The second connecting bodies 141 may be apart from the outer side edge 120c of the force receiving body 120 and may be apart from the outer side edge 130c of the fixed body 130. The inner side edge 120b of the force receiving body 120 may be defined by the force receiving body central opening 120a, and the inner side edge 130b of the fixed body 130 may be defined by the fixed body central opening 130a.

As shown in Figure 14 and Figure 17, the second connecting body 141 extends in the Z-axis direction. As shown in Figure 17, the second connecting body 141 includes a force-receiving-body-side end 143 (an example of a third end) connected to the force receiving body 120 and a fixed-body-side end 144 (an example of a fourth end) connected to the fixed body 130. The second connecting body 141 extends along the Z-axis direction from the force-receiving-body-side end 143 to the fixed-body-side end 144. That is to say, the second connecting body 141 is formed along each of the Z-axis direction and the radial direction. The second connecting body 141 may be formed into a flat-plate shape.

As shown in Figure 15, a dimension of the second connecting body 141 in a direction orthogonal to the radial direction (equivalent to a thickness $t6$ of the second connecting body 141) is smaller than a dimension $L2$ of the second connecting body 141 in the radial direction when viewed in the Z-axis direction. Accordingly, the spring constant of the second connecting body 141 in response to the action of force in the direction orthogonal to the radial direction is smaller than the spring constant in response to the action of force in the radial direction. Thus, the second connecting body 141 is easy to be elastically deformed by the action of the moment "Mz" around the Z-axis.

The rigidity of the second connecting body 141 against the moment "Mz" around the Z-axis is higher than the rigidity of the first connecting body 41. More specifically, the thickness $t6$ of the second connecting body 141 is larger than the thickness $t1$ of the first connecting body 41 of the individual force sensor 10 as shown in Figure 15. Accordingly, the spring constant of the second connecting body 141 in response to the action of force in the direction orthogonal to the radial direction is larger than the spring constant of the first connecting body 41 in response to the action of force in the direction orthogonal to the radial direction. Thus, the second connecting body 141 is more difficult to be elastically deformed than the first connecting body 41 by the action of the moment "Mz" around the Z-axis. In other words, in the case in which the force sensor 110 according to the present embodiment is subjected to the moment "Mz", displacement of the force receiving body 120 is dominated by elastic deformation of the second connecting body 141. The first connecting body 41 is lower in rigidity against the moment "Mz" than the second connecting body 141 and thus follows displacement of the force receiving body 120 caused by the second connecting bodies 141. It can be assumed that there is substantially no influence on displacement of the force receiving body 120 caused by elastic deformation of the first connecting body 41. In this case, a load on the first connecting body 41 imposed by the moment "Mz" acting on the force receiving body 120 can be reduced. This can lessen the size of bolts for attaching the individual force sensor 10 to the force receiving body 120 and can lessen the size of bolts for attaching the individual force sensor 10 to the fixed body 130. Thus, the individual force sensor 10 can be downsized, and hysteresis can be mitigated to improve accuracy.

The force receiving body 120, the fixed body 130, and the second strain generating bodies 140 may be integrally formed from a continuous material. The force receiving body 120, the fixed body 130, and the second strain generating bodies 140 may make up of the single sensor structure 150. The sensor structure 150 may be formed from a single block material by machining (for example, cutting) or may be formed by casting. In this case, the force-receiving-body-side end 143 which is a connection point between the force receiving body 120 and the second connecting body 141 of the second strain generating body 140 may be provided with an R-shaped portion such as the R-shaped portion 50R as shown in Figure 5. Similarly, the fixed-body-side end 144 which is a connection point between the fixed body 130 and the second connecting body 141 of the second strain generating body 140 may also be provided with the R-shaped portion 50R, and the sensor structure 150 may be made of a metal material such as an aluminum alloy or an iron alloy.

However, the force sensor 110 according to the present embodiment is not limited to this. For example, at least two components among the force receiving body 120, the fixed body 130, and the second strain generating bodies 140 may be integrally formed, and the remaining component may be separately formed. For example, the force receiving body 120 and the second strain generating bodies 140 may be integrally formed and may be fixed to the fixed body 130 separately formed by a bolt (not shown), adhesive, or the like. For example, the fixed body 130 and the second strain generating bodies 140 may be integrally formed and may be fixed to the force receiving body 120 separately formed by a bolt, adhesive, or the like. Alternatively, the force receiving body 120, the fixed body 130, and the second strain generating bodies 140 may each be separately formed and fixed by bolts, adhesive, or the like.

The detecting element 60 of the individual force sensor 10 positioned on the positive side in the Y-axis direction in Figure 15 includes the first capacitive element C1, the second capacitive element C2, the third capacitive element C3, and the fourth capacitive element C4 similarly to the individual force sensor 10 shown in Figure 6 and Figure 7. The detecting element of the individual force sensor 10 positioned on the negative side in the Y-axis direction in Figure 15 includes a fifth capacitive element C5, a sixth capacitive element C6, a seventh capacitive element C7, and an eighth capacitive element C8. The fifth capacitive element C5 corresponds to the first capacitive element C1 and has a configuration similar to the first capacitive element C1. The sixth capacitive element C6 corresponds to the second capacitive element C2 and has a configuration similar to the second capacitive element C2. The seventh capacitive element C7 corresponds to the third capacitive element C3 and has a configuration similar to the third capacitive element C3. The eighth capacitive element C8 corresponds to the fourth capacitive element C4 and has a configuration similar to the fourth capacitive element C4.

As shown in Figure 14, the detecting circuit 170 according to the present embodiment outputs an electric signal indicating a force or moment acting on the force receiving body 120 based on the result of detection performed by the detecting element 60 of each of the individual force sensors 10. The individual force sensor 10 according to the present embodiment may not include the detecting circuit 70 shown in Figure 2. The detecting circuit 170 according to the present embodiment may have an arithmetic function composed of a microprocessor, for example. The detecting circuit 170 may also have an A/D converting function of converting an analog signal received from the detecting element 60 of each of the individual force sensors 10 into a digital signal, a function of amplifying a signal, and various correction functions. The detecting circuit 170 may include a terminal that outputs an electric signal, and a connector 171 (see Figure 15) is connected to this terminal. The electric signal is transmitted from the connector 171 to the controller 5 set forth above via an electric cable. The electric signal transmitted to the controller 5 may be a digital signal or may be an analog signal.

Next, a fixing structure of the individual force sensor 10 will be described.

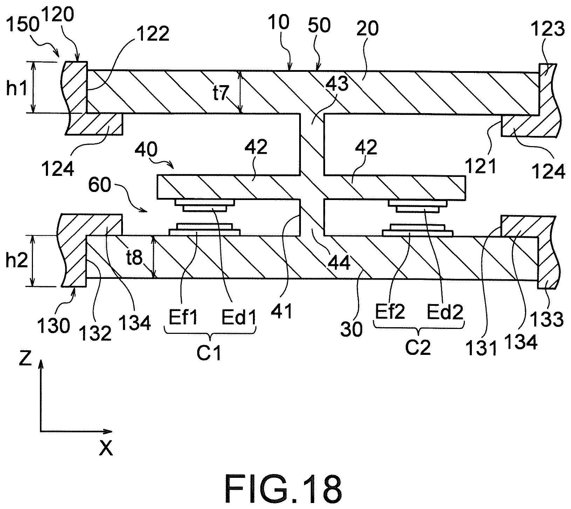

As shown in Figure 15 and Figure 18, the force receiving body 120 includes a force receiving opening 121 into which the first connecting body 41 of the individual force sensor 10 is inserted. The force receiving opening 121 is an example of a first opening. The force receiving opening 121 are arranged at a pitch of 180° relative to the central point O of the force receiving body 120. The force receiving opening 121 is opened at the outer side edge 120c of the force receiving body 120.

As shown in Figure 18, the force receiving body 120 may include a force receiving recess 122. The force receiving recess 122 is an example of a first recess. The force receiving recess 122 is provided in a surface of the force receiving body 120 opposite to the fixed body 130 and opens toward an opposite side of the fixed body 130. In the example shown in Figure 18, the force receiving recess 122 opens toward the positive side in the Z-axis direction. The force receiving recess 122 communicates with the force receiving opening 121 set forth above. The individual force receiving body 20 of the individual force sensor 10 is contained in the force receiving recess 122. The first connecting body 41 is arranged in the force receiving opening 121.

A dimension of the force receiving recess 122 in the Z-axis direction (equivalent to a depth h1 of the force receiving recess 122) may be larger than a dimension of the individual force receiving body 20 in the Z-axis direction (equivalent to a thickness t7 of the individual force receiving body 20) or may be equal to the dimension of the individual force receiving body 20 in the Z-axis direction. This can prevent the individual force receiving body 20 from protruding from the force receiving body 120 to lower the height of the force sensor 110 (a dimension h3 in the Z-axis direction shown in Figure 14). Although the planar shape of the force receiving recess 122 may have a shape similar to the individual force receiving body 20 as shown in Figure 16, the force receiving recess 122 may have any planar shape as long as the individual force receiving body 20 can be contained therein.

As shown in Figure 18, the force receiving body 120 may include a force receiving main body portion 123 and force receiving supporting portions 124. The force receiving main body portion 123 is a comparatively thick portion in the force receiving body 120. The force receiving supporting portions 124 are comparatively thin portions in the force receiving body 120. The force receiving supporting portions 124 are configured to support the individual force receiving body 20 contained in the force receiving recess 122. The individual force receiving body 20 may abut on the force receiving supporting portions 124. A surface of the force receiving main body portion 123 on the fixed body 130 side and surfaces of the force receiving supporting portions 124 on the fixed body 130 side may make up of a continuous surface and may be arranged at the same position in the Z-axis direction. The force receiving recess 122 set forth above is formed by the force receiving supporting portions 124 configured in this manner.

The force receiving opening 121 set forth above is formed in the force receiving supporting portions 124. In the present embodiment, the force receiving supporting portions 124 are formed on both sides of the force receiving opening 121. As shown in Figure 15, the force receiving supporting portions 124 may be provided with a plurality of bolt holes 125 for fixing the individual force receiving body 20. The bolt holes 125 are arranged on both the sides of the force receiving opening 121. The individual force receiving body 20 can be detachably attached to the force receiving supporting portions 124 by inserting bolts not shown into the bolt holes 125 and bolt holes 24 provided in the individual force receiving body 20 to fasten the individual force receiving body 20 and the force receiving body 120. The bolt holes 24 of the individual force receiving body 20 may be provided with counterbore holes (not shown). In this case, the heads of the bolts can be prevented from protruding from the individual force receiving body 20. The bolts to be used for fixation may be, but are not particularly limited to, countersunk bolts, for example.

As shown in Figure 16 and Figure 18, the fixed body 130 includes a fixed opening 131 into which the first connecting body 41 of the individual force sensor 10 is inserted. The fixed opening 131 is an example of a second opening. The fixed opening 131 is arranged at a pitch of 180° relative to the central point O of the force receiving body 120. The fixed opening 131 is opened at the outer side edge 130c of the fixed body 130.

As shown in Figure 18, the fixed body 130 may include a fixed recess 132. The fixed recess 132 is an example of a second recess. The fixed recess 132 is provided in a surface of the fixed body 130 opposite to the force receiving body 120 and opens toward the opposite side of the force receiving body 120. In the example shown in Figure 18, the fixed recess 132 opens toward the negative side in the Z-axis direction. The fixed recess 132 communicates with the fixed opening 131 set forth above. The individual fixed body 30 of the individual force sensor 10 is contained in the fixed recess 132. The first connecting body 41 and the fixed electrode substrates Ef1, Ef2 are arranged in the fixed opening 131 when viewed in the Z-axis direction.

A dimension of the fixed recess 132 in the Z-axis direction (equivalent to a depth h2 of the fixed recess 132) may be larger than a dimension of the individual fixed body 30 in the Z-axis direction (equivalent to a thickness t8 of the individual fixed body 30) or may be equal to the dimension of the individual fixed body 30 in the Z-axis direction. This can prevent the individual fixed body 30 from protruding from the fixed body 130 to lower the height of the force sensor 110 (the dimension h3 in the Z-axis direction shown in Figure 14). Although the planar shape of the fixed recess 132 may have a shape similar to the individual fixed body 30 as shown in Figure 16, the fixed recess 132 may have any planar shape as long as the individual fixed body 30 can be contained therein.

As shown in Figure 18, the fixed body 130 may include a fixed main body portion 133 and fixed supporting portions 134. The fixed main body portion 133 is a comparatively thick portion in the fixed body 130. The fixed supporting portions 134 are comparatively thin portions in the fixed body 130. The fixed supporting portions 134 are configured to support the individual fixed body 30 contained in the fixed recess 132. The individual fixed body 30 may abut on the fixed supporting portions 134. A surface of the fixed main body portion 133 on the force receiving body 120 side and surfaces of the fixed supporting portions 134 on the force receiving body 120 side may make up of a continuous surface and may be arranged at the same position in the Z-axis direction. The fixed recess 132 set forth above is formed by the fixed supporting portions 134 configured in this manner.

The fixed opening 131 set forth above is formed in the fixed supporting portions 134. In the present embodiment, the fixed supporting portions 134 are formed on both sides of the fixed opening 131. As shown in Figure 16, the fixed supporting portions 134 may be provided with a plurality of bolt holes 135 for fixing the individual fixed body 30. The bolt holes 135 are arranged on both sides of the fixed opening 131. The individual fixed body 30 can be detachably attached to the fixed supporting portions 134 by inserting bolts not shown into the bolt holes 135 and bolt holes 34 provided in the individual fixed body 30 to fasten the individual fixed body 30 and the fixed body 130. The bolt holes 34 of the individual fixed body 30 may be provided with counterbore holes (not shown). In this case, the heads of the bolts can be prevented from protruding from the individual fixed body 30. The bolts to be used for fixation may be, but are not particularly limited to, countersunk bolts, for example.

Next, a method for detecting a force or moment in the force sensor 110 according to the present embodiment having such a configuration will be described.

When the force receiving body 120 is subjected to the moment "Mz" around the Z-axis, the second connecting body 141 of each of the second strain generating bodies 140 is elastically deformed by the action of the force or moment, and the force receiving body 120 is displaced around the Z-axis.

On this occasion, each of the individual force receiving bodies 20 of the individual force sensor 10 is subjected to the force "Fx" in the X-axis direction. The individual force receiving body 20 positioned on the negative side in the Y-axis direction relative to the central point O is subjected to the force "Fx" to the positive side in the X-axis direction. The individual force receiving body 20 positioned on the positive side in the Y-axis direction relative to the central point O is subjected to the force "Fx" to the negative side in the X-axis direction. Accordingly, the first connecting body 41 of each of the individual force sensors 10 is elastically deformed, and the displacement bodies 42 are displaced. Thus, the first capacitive element C1 and the third capacitive element C3 decrease in capacitance value, and the second capacitive element C2 and the fourth capacitive element C4 increase in capacitance value. The fifth capacitive element C5 and the seventh capacitive element C7 decrease in capacitance value, and the sixth capacitive element C6 and the eighth capacitive element C8 increase in capacitance value.

The moment "Mz" acting on the force receiving body 120 may be calculated using the first capacitive element C1 to the fourth capacitive element C4. For example, the moment "Mz" may be calculated as T1 by an expression below using the capacitance values of the first capacitive element C1 and the second capacitive element C2.

[Expression 5]
$$T11 = -C1 + C2$$

Alternatively, the moment "Mz" may be calculated as T2 by an expression below using the capacitance values of the third capacitive element C3 and the fourth capacitive element C4.

[Expression 6]
$$T21 = -C3 + C4$$

Alternatively, the moment "Mz" may be calculated as T3 by an expression below using the capacitance values of the first capacitive element C1 to the fourth capacitive element C4.

[Expression 7]
$$T31 = -C1 + C2 - C3 + C4$$

A failure diagnosis may be performed by comparing T11 in [Expression 5] set forth above and T21 in [Expression 6]. Alternatively, a failure diagnosis may be performed by comparing T31 in [Expression 7] and a total value of T11 and T21. Alternatively, a failure diagnosis may be performed by comparing T11 in [Expression 5] multiplied by a predetermined multiplication factor and T31 in [Expression 7]. Alternatively, a failure diagnosis may be performed by comparing T21 in [Expression 6] multiplied by a predetermined multiplication factor and T31 in [Expression 3]. The failure diagnosis may be performed by the detecting circuit 170 set forth above or may be performed by the controller 5 of the robot 1.
Alternatively, the moment "Mz" acting on the force receiving body 120 may be calculated using the fifth capacitive element C5 to the eighth capacitive element C8. For example, the moment "Mz" may be calculated as T12 by an expression below using the capacitance values of the fifth capacitive element C5 and the sixth capacitive element C6.

[Expression 8]
$$T12 = -C5 + C6$$

Alternatively, the moment "Mz" may be calculated as T22 by an expression below using the capacitance values of the seventh capacitive element C7 and the eighth capacitive element C8.

[Expression 9]
$$T22 = -C7 + C8$$

Alternatively, the moment "Mz" may be calculated as T32 by an expression below using the capacitance values of the fifth capacitive element C5 to the eighth capacitive element C8.

[Expression 10]
$$T32 = -C5 + C6 - C7 + C8$$

A failure diagnosis may be performed by comparing T12 in [Expression 8] set forth above and T22 in [Expression 9]. Alternatively, a failure diagnosis may be performed by comparing T32 in [Expression 10] and a total value of T12 and T22. Alternatively, a failure diagnosis may be performed by comparing T12 in [Expression 8] multiplied by a predetermined multiplication factor and T32 in [Expression 10]. Alternatively, a failure diagnosis may be performed by comparing T22 in [Expression 9] multiplied by a predetermined multiplication factor and T32 in [Expression 10].
Alternatively, the moment "Mz" acting on the force receiving body 120 may be calculated using the first capacitive element C1 to the eighth capacitive element C8. For example, the moment "Mz" may be calculated as T33 by [Expression 11] below. In a case in which the moment "Mz" is calculated using the capacitance values of the eight capacitive elements, the detection sensitivity for the moment "Mz" can be raised.

[Expression 11]
$$T33 = -C1 + C2 - C3 + C4 - C5 + C6 - C7 + C8$$

Alternatively, the moment "Mz" acting on the force receiving body 120 may be calculated as T34 by [Expression 12] below using the first capacitive element C1, the second capacitive element C2, the fifth capacitive element C5, and the sixth capacitive element C6 arranged outside in the radial direction. In a case in which the moment "Mz" is calculated using the capacitance values of the four capacitive elements, the force sensor 110 can be made compact since the number of the capacitive elements is lessened.

$$[\text{Expression 12}]$$
$$T34 = -C1 + C2 - C5 + C6$$

Alternatively, the moment "Mz" may be calculated as T35 by [Expression 13] below using the third capacitive element C3, the fourth capacitive element C4, the seventh capacitive element C7, and the eighth capacitive element C8 arranged on the inner side in the radial direction.

$$[\text{Expression 13}]$$
$$T35 = -C3 + C4 - C7 + C8$$

As described above, various combinations can be considered as a combination of capacitive elements to be used for calculation of the moment "Mz". The capacitive elements may be combined in any way as long as the number of capacitive elements with the "+" sign and the number of capacitive elements with the "-" sign are the same.

In a case in which the force receiving body 120 of the force sensor 110 according to the present embodiment is subjected to the force "Fx" in the X-axis direction, the force "Fy" in the Y-axis direction, the force "Fz" in the Z-axis direction, the moment "Mx" around the X-axis, and the moment "My" around the Y-axis, it can be assumed that there is no change in capacitance value of each of the capacitive elements C1 to C8. This is because the four second connecting bodies 141 are arranged at a pitch of 90° relative to the central point O of the force receiving body 120 when viewed in the Z-axis direction as shown in Figure 15 and Figure 16.

As described above, the force sensor 110 according to the present embodiment can only detect the moment "Mz" around the Z-axis and may be referred to as a torque sensor. This force sensor 110 may be used in an environment on which only the moment "Mz" around the Z-axis acts.

According to the present embodiment as described above, the force receiving body 120 that supports the individual force receiving body 20 of each of the individual force sensors 10 and the fixed body 130 that supports the individual fixed body 30 of each of the individual force sensors 10 are supported by the second strain generating bodies 140. The second strain generating body 140 includes the second connecting body 141 extending in the Z-axis direction from the force-receiving-body-side end 143 connected to the force receiving body 120 to the fixed-body-side end 144 connected to the fixed body 130.

Accordingly, the individual force sensor 10 supported by the force receiving body 120 and the fixed body 130 includes the first strain generating body 40 and the detecting element 60. This can simplify the shape of the force receiving body 120, the fixed body 130, and the second connecting body 141 and can simplify the structure of the second connecting body 141. In addition, the spacing between the force receiving body 120 and the fixed body 130 can be reduced. As a result, the force sensor 110 can be lowered in price, and the height of the force sensor 110 (the dimension h3 in the Z-axis direction shown in Figure 14) can be lowered.

In addition, according to the present embodiment, the first connecting body 41 and the second connecting body 141 of the individual force sensor 10 are formed along the radial direction relative to the central point O of the force receiving body 120 when viewed in the Z-axis direction. This can simplify the shape of the second connecting body 141. In addition, the spacing between the force receiving body 120 and the fixed body 130 can be reduced. In addition, in the case in which the force receiving body 120 is subjected to the moment "Mz" around the Z-axis, the first connecting body 41 and the second connecting body 141 can be elastically deformed, and the displacement bodies 42 can be displaced. Accordingly, the detecting element 60 of each of the individual force sensors 10 can detect the force acting on the individual force receiving body 20, and based on a result of detection performed by each of the detecting elements 60, the detecting circuit 170 can output an electric signal indicating the moment "Mz" acting on the force receiving body 120. As a result, the force sensor 110 can detect the moment "Mz" and can function as a torque sensor.

In addition, according to the present embodiment, the dimension t6 of the second connecting body 141 in the direction orthogonal to the radial direction is smaller than the dimension L2 of the second connecting body 141 in the radial direction when viewed in the Z-axis direction. Accordingly, the spring constant of the second connecting body 141 that acts on force in the direction orthogonal to the radial direction can be made smaller than the spring constant in response to the action of force in the radial direction. Thus, the second connecting body 141 can be elastically deformed easily by the action of the moment "Mz" around the Z-axis acting on the force receiving body 120, which can improve the detection sensitivity for the moment "Mz".

In addition, according to the present embodiment, the force receiving body 120 and the fixed body 130 are formed along the plane orthogonal to the Z-axis direction. This can simplify the shape of the force receiving body 120 and the fixed body 130. In addition, the spacing between the force receiving body 120 and the fixed body 130 can be reduced. As a result, the force sensor 110 can be lowered in price, and the height of the force sensor 110 can be lowered.

In addition, according to the present embodiment, the force receiving body 120 includes the force receiving opening 121 into which the first connecting body 41 of the individual force sensor 10 is inserted. This can prevent the individual force sensor 10 from extending out of the force receiving body 120 when viewed in the Z-axis direction and can reduce the spacing between the force receiving body 120 and the fixed body 130. Thus, the force sensor 110 can be made compact, and the height of the force sensor 110 can be lowered.

In addition, according to the present embodiment, the force receiving body 120 includes the force receiving recess 122 that opens toward the opposite side of the fixed body 130 and that communicates with the force receiving opening 121. The individual force receiving body 20 of the individual force sensor 10 is contained in the force receiving recess 122. This can prevent the individual force receiving body 20 from protruding from the force receiving body 120, which can lower the height of the force sensor 110.

In addition, according to the present embodiment, the fixed body 130 includes the fixed opening 131 into which the first connecting body 41 of the individual force sensor 10 is inserted. This can prevent the individual force sensor 10 from extending out of the fixed body 130 when viewed in the Z-axis direction, and can reduce the spacing between the force receiving body 120 and the fixed body 130. Thus, the force sensor 110 can be made compact, and the height of the force sensor 110 can be lowered.

In addition, according to the present embodiment, the fixed body 130 includes the fixed recess 132 that opens toward the opposite side of the force receiving body 120 and that communicates with the fixed opening 131. The individual fixed body 30 of the individual force sensor 10 is contained in the fixed recess 132. This can prevent the individual fixed body 30 from protruding from the fixed body 130, which can lower the height of the force sensor 110.

In addition, according to the present embodiment, the rigidity of the second connecting body 141 against the moment "Mz" around the Z-axis is higher than the rigidity of the first connecting body 41 of the individual force sensor 10. This can make the second connecting body 141 more difficult to be elastically deformed under the moment "Mz" than the first connecting body 41. Thus, in the case in which the force receiving body 120 is subjected to the moment "Mz", displacement of the force receiving body 120 can be dominated by the second connecting body 141.

In addition, according to the present embodiment, the force receiving body 120, the fixed body 130, and the second connecting bodies 141 are integrally formed from a continuous material. This can simplify the structure of the force sensor 110. For example, in the case in which the force receiving body 120, the fixed body 130, and the second connecting bodies 141 are separately formed and fixed by bolts, adhesive, or the like, the structure will be complicated in order to enable such fixation, and space for better workability will be required. Thus, lowering of the price of the force sensor 110 may be limited, and lessening of the height of the force sensor 110 may be limited. In contrast, the present embodiment can further simplify the structure since the force receiving body 120, the fixed body 130, and the second connecting bodies 141 are integrally formed from a continuous material. In addition, the spacing between the force receiving body 120 and the fixed body 130 can be further reduced. As a result, the force sensor 110 can be further lowered in price, and the height of the force sensor 110 can be further lowered.

In addition, according to the present embodiment, the individual force receiving body 20, the individual fixed body 30, and the first strain generating body 40 may be integrally formed from a continuous material while the force receiving body 120, the fixed body 130, and the second connecting bodies 141 are integrally formed from a continuous material. In this case, the force sensor 110 according to the present embodiment can be easily manufactured by attaching the individual force sensor 10 to the force receiving body 120 and the fixed body 130. Thus, the force sensor 110 can be lowered in price, and the height of the force sensor 110 (the dimension h3 in the Z-axis direction shown in Figure 14) can be lowered.

Note that in the present embodiment set forth above, the example in which the individual force sensor 10 has a configuration similar to the configuration of the individual force sensor 10 shown in Figure 5 to Figure 7 and in which the detecting element 60 of each of the individual force sensors 10 includes the four capacitive elements has been described. However, the present embodiment is not limited to this. For example, the detecting element 60 of the individual force sensor 10 may be composed of two capacitive elements of the first capacitive element C1 and the second capacitive element C2, or may be composed of two capacitive elements of the third capacitive element C3 and the fourth capacitive element C4.

In addition, in the present embodiment set forth above, the example in which the individual force sensor 10 is arranged on the outer side edge 120c of the force receiving body 120 and is arranged on the outer side edge 130c of the fixed body 130 has been described. However, the present embodiment is not limited to this. For example, the individual force sensor 10 may be arranged on the inner side edge 120b of the force receiving body 120, and the individual force sensor 10 may be arranged on the inner side edge 130b of the fixed body 130. In this case, the force receiving opening 121 may open at the inner side edge 120b of the force receiving body 120, and the fixed opening 131 may open at the inner side edge 130b of the fixed body 130.

In addition, in the present embodiment set forth above, the example in which the spring constant of the second connecting body 141 in response to the action of force in the direction orthogonal to the radial direction is larger than the spring constant of the first connecting body 41 in response to the action of force in the direction orthogonal to the radial direction has been described. However, the present embodiment is not limited to this. A total value of the spring constants of the respective second connecting bodies 141 in response to the action of force in the direction orthogonal to the radial direction may be larger than a total value of the spring constants of the respective first connecting bodies 14 that act on force in the direction orthogonal to the radial direction. In this case, the thickness t6 of the second connecting body 141 may be larger or smaller than the thickness t1 of the first connecting body 41 or may be equal to the thickness t1. For example, the number of the second connecting bodies 141 may be increased.

In addition, in the present embodiment set forth above, the example in which the individual force sensors 10 are detachably attached to the force receiving body 120 and the fixed body 130 has been described. However, the present embodiment is not limited to this. For example, the individual force sensors 10 may be integrated with the force receiving body 120 and the fixed body 130. More specifically, the individual force receiving body 20, the individual fixed body 30, the first strain generating body 40, the force receiving body 120, the fixed body 130, and the second strain generating bodies 140 may be integrally formed from a continuous material to make up of the single sensor structure 150.

(Fifth Embodiment)

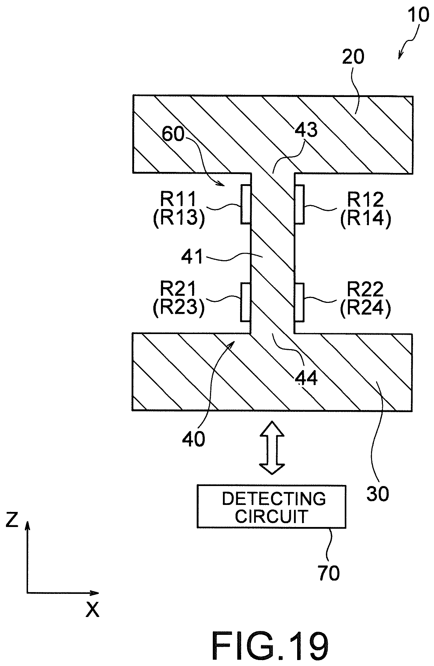

Next, an individual force sensor and a force sensor according to a fifth embodiment of the present invention will be described using Figure 19 to Figure 23.

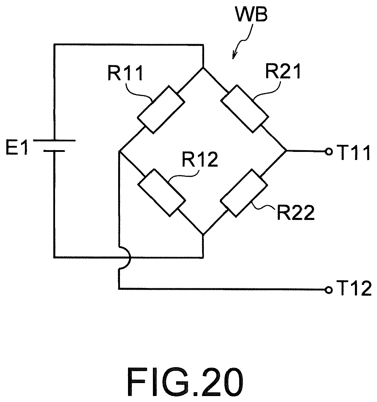

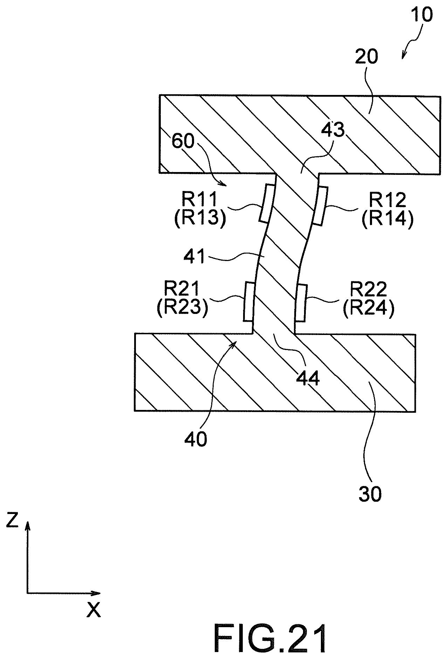

The fifth embodiment shown in Figure 19 to Figure 23 is different from the first embodiment shown in Figure 1 to Figure 4 mainly in that a detecting element is composed of strain gauges, and the remaining configuration is substantially identical to that of the first embodiment. Note that in Figure 19 to Figure 23, portions identical to those of the first embodiment shown in Figure 1 to Figure 4 have identical reference characters allotted, and detailed description will be omitted. Figure 19 is an enlarged partial plan view showing the individual force sensor according to the fifth embodiment. Figure 20 is a diagram showing a Wheatstone bridge circuit for a detecting element shown in Figure 19. Figure 21 is a vertical cross sectional view schematically showing a deformed state of the first strain generating body.

As shown in Figure 19, the first strain generating body 40 of the individual force sensor 10 according to the present embodiment may not include the displacement bodies 42. In this case, the structure of the first strain generating body 40 can be simplified.

The detecting element 60 of the individual force sensor 10 according to the present embodiment does not include capacitive elements and includes first strain gauges R11, R12 and second strain gauges R21, R22. Each of the strain gauges R11, R12, R21, and R22 is configured to detect a strain caused by the action of a force or moment acting on the individual force receiving body 20. For example, the four strain gauges R11, R12, R21, and R22 that make up of the detecting element 60 may be pasted to the first connecting body 41. The first strain gauges R11, R12 are provided on the force-receiving-body-side end 43 of the first connecting body 41 and may be pasted to the force-receiving-body-side end 43. The second strain gauges R21, R22 are provided on the fixed-body-side end 44 of the first connecting body 41 and may be pasted to the fixed-body-side end 44. The strain gauges R11, R21 may be pasted to a surface of the first connecting body 41 that faces the negative side in the X-axis direction. The strain gauges R12, R22 may be pasted to a surface of the first connecting body 41 that faces the positive side in the X-axis direction. The first strain gauges R11, R12 may be arranged at the same position in the Z-axis direction, and the second strain gauges R21, R22 may be arranged at the same position in the Z-axis direction. The respective strain gauges R11 to R22 may be arranged at the same position in the Y-axis direction. The Y-axis direction is equivalent to a direction perpendicular to the sheet of drawing of Figure 19.

The detecting circuit 70 according to the present embodiment may include a Wheatstone bridge circuit WB shown in Figure 20. The Wheatstone bridge circuit WB outputs an electric signal based on results of detection performed by the four strain gauges R11 to R22 provided on the first connecting body 41. The Wheatstone bridge circuit WB is configured such that when a predetermined voltage is applied from a bridge voltage source E1, a bridge voltage as an electric signal in accordance with a strain detected by each of the strain gauges R11 to R22 is produced across output terminals T11 and T12. In the Wheatstone bridge circuit WB, the strain gauge R11 and the strain gauge R22 are opposed, and the strain gauge R21 and the strain gauge R12 are opposed. Accordingly, the force "Fx" in the X-axis direction can be detected.

For example, in the case in which the individual force receiving body 20 is subjected to the force "Fx" to the positive side in the X-axis direction, a compressive stress is detected at the position where the strain gauges R11, R22 are pasted, and a tensile stress is detected at the position where the strain gauges R21, R12 are pasted, as shown in Figure 21. The strain gauges R11, R22 decrease in resistance value in accordance with the compressive strain. The strain gauges R21, R12 increase in resistance value in accordance with the tensile strain. The force "Fx" acting on the individual force receiving body 20 is then calculated from an output value obtained from the Wheatstone bridge circuit WB.

According to the present embodiment as described above, the first strain generating body 40 that connects the individual force receiving body 20 and the individual fixed body 30 includes the first connecting body 41. The first connecting body 41 extends in the Z-axis direction from the force-receiving-body-side end 43 connected to the individual force receiving body 20 to the fixed-body-side end 44 connected to the individual fixed body 30. This can simplify the shape of the first strain generating body 40 and can simplify the structure of the first strain generating body 40. In addition, the spacing between the individual force receiving body 20 and the individual fixed body 30 can be reduced. As a result, the individual force sensor 10 can be lowered in price, and the height of the individual force sensor 10 (the dimension h0 in the Z-axis direction shown in Figure 2) can be lowered.

In addition, according to the present embodiment, the detecting element 60 includes the first strain gauges R11, R12 provided on the force-receiving-body-side end 43 of the first connecting body 41 and the second strain gauges R21, R22 provided on the fixed-body-side end 44. Accordingly, the detecting element 60 can detect displacement caused by elastic deformation of the first strain generating body 40. Thus, the force acting on the individual force receiving body 20 can be detected.

Note that the detecting element 60 composed of the strain gauges according to the present embodiment set forth above may be applied to the individual force sensor 10 according to the second embodiment.

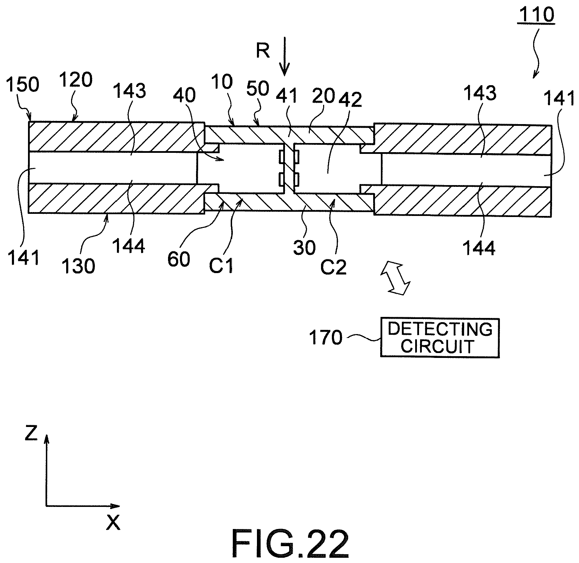

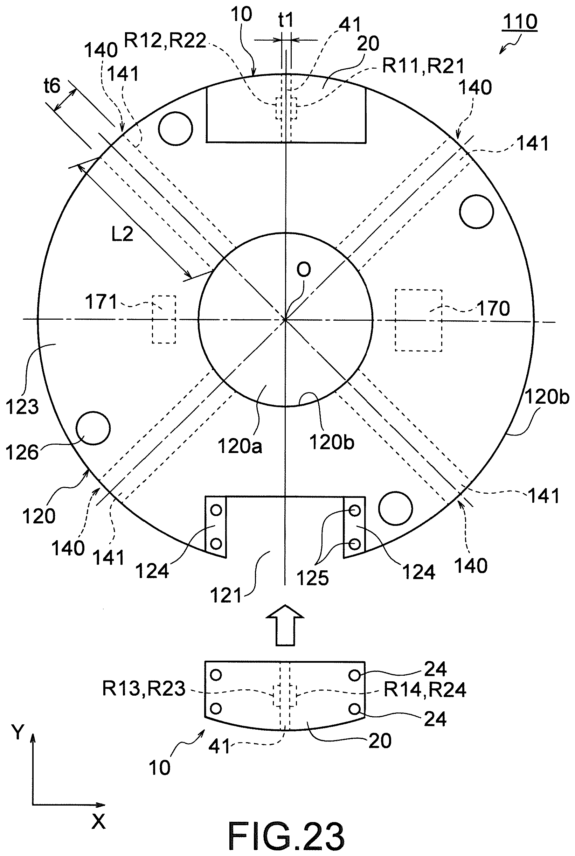

In addition, the individual force sensor 10 shown in Figure 19 may be applied to the force sensor 110 as shown in Figure 22 and Figure 23. In this case, the moment "Mz" around the Z-axis acting on the force receiving body 120 is calculated. Figure 22 is a vertical cross sectional view showing the force sensor 110 to which the individual force sensor 10 shown in Figure 19 is applied, and Figure 23 is a diagram viewed along an arrow R in Figure 22. The force sensor 110 shown in Figure 22 and Figure 23 is different from the force sensor 110 shown in Figure 14 to Figure 18 in that the individual force sensor 10 is replaced by the individual force sensor 10 shown in Figure 19. In terms of the remaining points, the force sensor 110 shown in Figure 22 and Figure 23 has a configuration similar to the configuration of the force sensor 110 shown in Figure 14 to Figure 18. The number of the individual force sensors 10 that make up of the force sensor 110 shown in Figure 22 and Figure 23 is two, but may be three or more and may be any number. When viewed in the Z-axis direction, the outer edges of the individual force receiving body 20 and the individual fixed body 30 positioned on the positive side in the Y-axis direction or on the negative side in the Y-axis direction may be formed respectively into an arc shape so as to be continuous from the outer edges of the force receiving body 120 and the fixed body 130.

The detecting element 60 of the individual force sensor 10 positioned on the positive side in the Y-axis direction in Figure 23 includes the first strain gauges R11, R12 and the second strain gauges R21, R22. An arrangement of the respective strain gauges R11 to R22 in the individual force sensor 10 is shown in Figure 19. The first strain gauges R11, R12 are provided on the force-receiving-body-side end 43 of the first connecting body 41, and the second strain gauges R21, R22 are provided on the fixed-body-side end 44 of the first connecting body 41. The strain gauges R11, R21 may be arranged on a surface of the first connecting body 41 that faces the positive side in the X-axis direction, and the strain gauges R12, R22 may be arranged on a surface of the first connecting body 41 that faces the negative side in the X-axis direction, as shown in Figure 23. The first strain gauges R11, R12 may be arranged at the same position in the Z-axis direction, and the second strain gauges R21, R22 may be arranged at the same position in the Z-axis direction. The respective strain gauges R11 to R22 may be arranged at the same position in the Y-axis direction.

The detecting element 60 of the individual force sensor 10 positioned on the negative side in the Y-axis direction in Figure 23 includes first strain gauges R13, R14 and second strain gauges R23, R24. An arrangement of the respective strain gauges R13 to R24 in the individual force sensor 10 is shown in Figure 19. The first strain gauges R13, R14 are provided on the force-receiving-body-side end 43 of the first connecting body 41, and the second strain gauges R23, R24 are provided on the fixed-body-side end 44 of the first connecting body 41. The strain gauges R13, R23 may be arranged on the surface of the first connecting body 41 that faces the negative side in the X-axis direction, and the strain gauges R14, R24 may be arranged on the surface of the first connecting body 41 that faces the positive side in the X-axis direction, as shown in Figure 23. The first strain gauges R13, R14 may be arranged at the same position in the Z-axis direction, and the second strain gauges R23, R24 may be arranged at the same position in the Z-axis direction. The respective strain gauges R13 to R24 may be arranged at the same position in the Y-axis direction.

The detecting circuit 170 shown in Figure 22 includes the Wheatstone bridge circuit WB shown in Figure 20. That is to say, the individual force sensor 10 shown in Figure 22 may not include the detecting circuit 70 shown in Figure 19. In this case, the Wheatstone bridge circuit WB may be part of the configuration of the detecting circuit 170 shown in Figure 22. The detecting circuit 170 may include a plurality of Wheatstone bridge circuits WB in correspondence to the respective individual force sensors 10. More specifically, the detecting circuit 170 may include the Wheatstone bridge circuit WB corresponding to the strain gauges R11, R12, R21, and R22 and the Wheatstone bridge circuit WB corresponding to the strain gauges R13, R14, R23, and R24.

A method for detecting a force or moment in the force sensor 110 shown in Figure 22 and Figure 23 will be described.

When the force receiving body 120 is subjected to the moment "Mz" around the Z-axis, the second connecting body 141 of the second strain generating body 140 is elastically deformed by the action of the force or moment, and the force receiving body 120 is displaced around the Z-axis.

On this occasion, each of the individual force receiving bodies 20 of the individual force sensor 10 is subjected to the force "Fx" in the X-axis direction. The individual force receiving body 20 positioned on the negative side in the Y-axis direction relative to the central point O is subjected to the force "Fx" to the positive side in the X-axis direction. The individual force receiving body 20 positioned on the positive side in the Y-axis direction relative to the central point O is subjected to the force "Fx" to the negative side in the X-axis direction. Accordingly, the first connecting body 41 of each of the individual force sensors 10 is elastically deformed. Thus, a stress is detected in each of the strain gauges similarly to the case in which the individual force sensor 10 shown in Figure 19 is subjected to the force "Fx" to the positive side in the X-axis direction.

More specifically, as shown in Figure 21, a compressive stress is detected at the position where the strain gauges R11, R22 of the individual force sensor 10 positioned on the positive side in the Y-axis direction are pasted, and a tensile stress is detected at the position where the strain gauges R21, R12 are pasted. The strain gauges R11, R22 decrease in resistance value in accordance with the compressive strain. The strain gauges R21, R12 increase in resistance value in accordance with the tensile strain. The force "Fx1" acting on the individual force receiving body 20 is then calculated from an output value obtained from the Wheatstone bridge circuit WB.

Similarly, as shown in Figure 21, a compressive stress is detected at the position where the strain gauges R13, R24 of the individual force sensor 10 positioned on the negative side in the Y-axis direction are pasted, and a tensile stress is detected at the position where the strain gauges R14, R23 are pasted. The strain gauges R13, R24 decrease in resistance value in accordance with the compressive strain. The strain gauges R14, R23 increase in resistance value in accordance with the tensile strain. The force "Fx2" acting on the individual force receiving body 20 is then calculated from an output value obtained from the Wheatstone bridge circuit WB.

The moment "Mz" acting on the force receiving body 120 may be calculated using the force acting on each of the individual force receiving bodies 20. For example, the moment "Mz" may be calculated as T4 by an expression below using [Expression 14] below. In [Expression 14] below, force and moment are connected by "=" for the sake of convenience. However, force and moment are physical quantities different from each other and thus, the moment "Mz" is actually calculated by converting the force.

$$[\text{Expression 14}]$$
$$T4 = Fx1 + Fx2$$

However, the moment "Mz" may be calculated using "Fx1" without using "Fx2", or may be calculated using "Fx2" without using "Fx1".

In a case in which the force receiving body 120 of the force sensor 110 shown in Figure 22 and Figure 23 is subjected to the force "Fx" in the X-axis direction, the force "Fy" in the Y-axis direction, the force "Fz" in the Z-axis direction, the moment "Mx" around the X-axis, and the moment "My" around the Y-axis, it can be assumed that there is no change in resistance value of each of the strain gauges. This is because the four second connecting bodies 141 are arranged at a pitch of 90° relative to the central point O of the force receiving body 120 when viewed in the Z-axis direction as shown in Figure 22 and Figure 23.

As described above, the force sensor 110 shown in Figure 22 and Figure 23 can only detect the moment "Mz" around the Z-axis and may be referred to as a torque sensor. This force sensor 110 may be used in an environment on which only the moment "Mz" around the Z-axis acts.

According to the example shown in Figure 22 and Figure 23 as described above, the force receiving body 120 that supports the individual force receiving body 20 of each of the individual force sensors 10 and the fixed body 130 that supports the individual fixed body 30 of each of the individual force sensors 10 are supported by the second connecting bodies 141. The second connecting body 141 extends in the Z-axis direction from the force-receiving-body-side end 143 connected to the force receiving body 120 to the fixed-body-side end 144 connected to the fixed body 130. The first connecting body 41 of the individual force sensor 10 and the second connecting body 141 are formed along the radial direction relative to the central point O of the force receiving body 120 when viewed in the Z-axis direction. In the case in which the force receiving body 120 is subjected to the moment "Mz" around the Z-axis, the first connecting bodies 41 and the second connecting bodies 141 can be elastically deformed, which can change the strain gauges in resistance value. Accordingly, the detecting element 60 of each of the individual force sensors 10 can detect the force acting on the individual force receiving body 20, and the detecting circuit 170 can output an electric signal indicating the moment "Mz" acting on the force receiving body 120 based on a result of detection performed by each of the detecting elements 60. As a result, the force sensor 110 can detect the moment "Mz" and can function as a torque sensor.

In addition, according to the example shown in Figure 22 and Figure 23, the second connecting body 141 extends in the Z-axis direction from the force-receiving-body-side end 143 connected to the force receiving body 120 to the fixed-body-side end 144 connected to the fixed body 130. The individual force sensor 10 supported by the force receiving body 120 and the fixed body 130 includes the first strain generating body 40 and the detecting element 60. This can simplify the shape of the force receiving body 120, the fixed body 130, and the second connecting bodies 141 and can simplify the structure of the second connecting bodies 141. In addition, the spacing between the force receiving body 120 and the fixed body 130 can be reduced. As a result, the force sensor 110 can be lowered in price, and the height of the force sensor 110 (the dimension in the Z-axis direction) can be lowered.

(Sixth Embodiment)

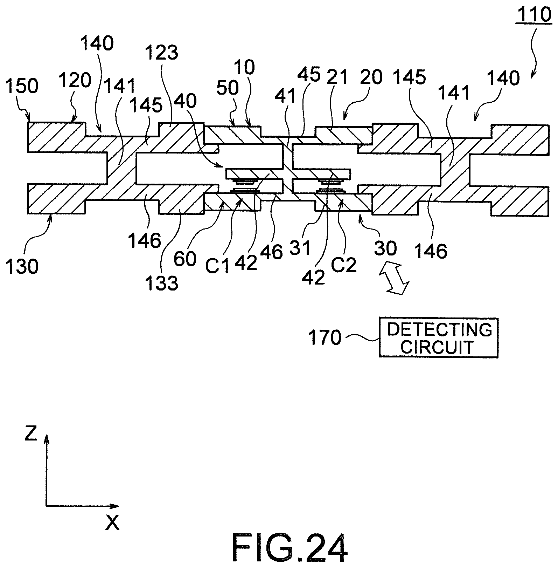

Next, a force sensor according to a sixth embodiment of the present invention will be described using Figure 24 to Figure 28.

The sixth embodiment shown in Figure 24 to Figure 28 is different from the fourth embodiment shown in Figure 14 to Figure 18 mainly in that the first strain generating body of the individual force sensor includes a first thin portion and a second thin portion and in that the second strain generating body of the force sensor includes a third thin portion and a fourth thin portion, and the remaining configuration is substantially identical to that of the fourth embodiment. Note that in Figure 24 to Figure 28, portions identical to those of the fourth embodiment shown in Figure 14 to Figure 18 have identical reference characters allotted, and detailed description will be omitted.

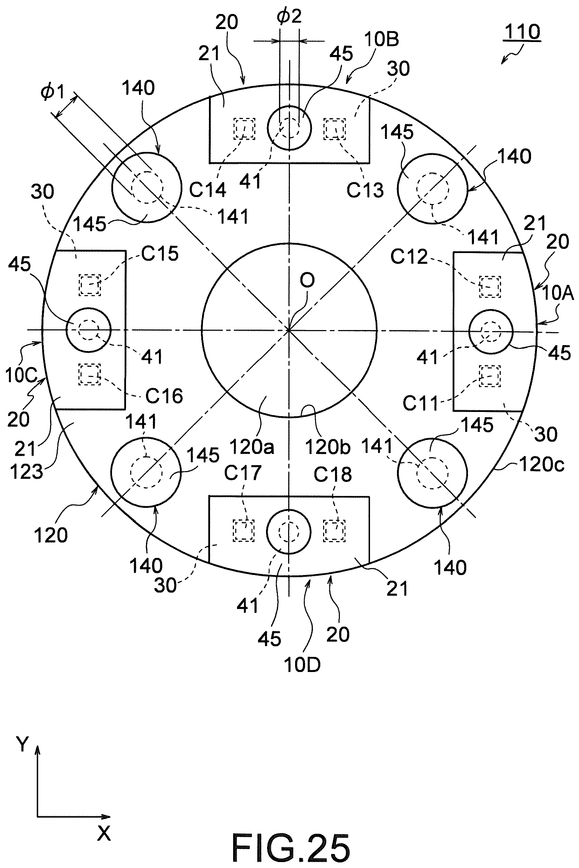

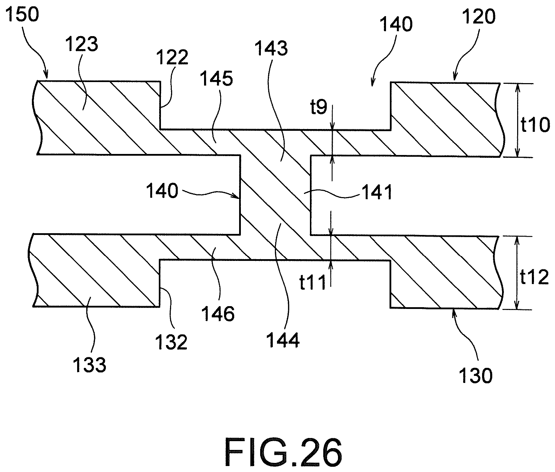

First, the force sensor 110 according to the present embodiment will be described using Figure 24 to Figure 26. Figure 24 is a vertical cross sectional view showing the force sensor according to the sixth embodiment. Figure 25 is a plan view showing the force sensor shown in Figure 24. The bolt holes 126 (see Figure 15) are omitted in Figure 25. Figure 26 is a vertical cross sectional view of the second strain generating body.

As shown in Figure 24 and Figure 25, each of the individual force sensors 10 of the force sensor 110 according to the present embodiment includes the first force receiving thin portion 45 and the first fixed thin portion 46 shown in Figure 8 and Figure 9. The first force receiving thin portion 45 is formed along each of the X-axis direction and the Y-axis direction, and the individual force receiving main body portion 21 that makes up of the individual force receiving body 20 is formed around the first force receiving thin portion 45. The first fixed thin portion 46 is formed along each of the X-axis direction and the Y-axis direction, and the individual fixed main body portion 31 that makes up of the individual fixed body 30 is formed around the first fixed thin portion 46.

As shown in Figure 25, the force sensor 110 according to the present embodiment includes the four individual force sensors 10. The four individual force sensors 10 are arranged at a pitch of 90° relative to the central point O of the force receiving body 120 when viewed in the Z-axis direction. More specifically, the force sensor 110 includes a first individual force sensor 10A, a second individual force sensor 10B, a third individual force sensor 10C, and a fourth individual force sensor 10D. The first individual force sensor 10A is arranged on the positive side in the X-axis direction relative to the central point O of the force receiving body 120 when viewed in the Z-axis direction. The second individual force sensor 10B is arranged on the positive side in the Y-axis direction relative to the central point O of the force receiving body 120. The third individual force sensor 10C is arranged on the negative side in the X-axis direction relative to the central point O of the force receiving body 120. The fourth individual force sensor 10D is arranged on the negative side in the Y-axis direction relative to the central point O of the force receiving body 120. Note that the number of the individual force sensors 10 is not limited to four and may be any number that is more than or equal to two, for example.

As shown in Figure 24 to Figure 26, the second strain generating body 140 according to the present embodiment includes a second force receiving thin portion 145. The second force receiving thin portion 145 is an example of a third thin portion. The second force receiving thin portion 145 is formed along the plane orthogonal to the Z-axis direction. That is to say, the second force receiving thin portion 145 is formed along each of the X-axis direction and the Y-axis direction.

The force receiving body 120 includes the force receiving main body portion 123. The force receiving main body portion 123 is formed around the second force receiving thin portion 145.

The second force receiving thin portion 145 is interposed between the force receiving body 120 and the second connecting body 141 to connect the force receiving main body portion 123 to the force-receiving-body-side end 143 of the second connecting body 141. The second force receiving thin portion 145 is thinner than the force receiving main body portion 123 of the force receiving body 120. More specifically, a thickness $t9$ of the second force receiving thin portion 145 (a dimension in the Z-axis direction) is thinner than a thickness $t10$ of the force receiving main body portion 123 as shown in Figure 26. The second force receiving thin portion 145 has flexibility and is elastically deformable by the action of a force or moment.

The planar shape of the second force receiving thin portion 145 may be, but is not particularly limited to, circular as shown in Figure 25. Because of the formation of the second force receiving thin portion 145, the force receiving recess 122 may be formed in a surface (an upper surface in Figure 26) of the force receiving body 120 positioned opposite to the fixed body 130.

The second connecting body 141 according to the present embodiment may be formed into a circular shape when viewed in the Z-axis direction. The second connecting body 141 may be formed into a cylindrical shape extending in the Z-axis direction. When viewed in the Z-axis direction, the second connecting body 141 may be arranged concentrically with the corresponding second force receiving thin portion 145 and may be arranged concentrically with a corresponding second fixed thin portion 146 which will be described later.

As shown in Figure 24 to Figure 26, the second strain generating body 140 according to the present embodiment includes the second fixed thin portion 146. The second fixed thin portion 146 is an example of a fourth thin portion. The second fixed thin portion 146 is formed along the plane orthogonal to the Z-axis direction. That is to say, the second fixed thin portion 146 is formed along each of the X-axis direction and the Y-axis direction.

The fixed body 130 includes the fixed main body portion 133. The fixed main body portion 133 is formed around the second fixed thin portion 146.

The second fixed thin portion 146 is interposed between the fixed body 130 and the second connecting body 141 to connect the fixed main body portion 133 to the fixed-body-side end 144 of the second connecting body 141. The second fixed thin portion 146 is thinner than the fixed main body portion 133 of the fixed body 130. More specifically, a thickness t11 of the second fixed thin portion 146 (a dimension in the Z-axis direction) is thinner than a thickness t12 of the fixed main body portion 133 as shown in Figure 26. The second fixed thin portion 146 has flexibility and is elastically deformable by the action of a force or moment.

The planar shape of the second fixed thin portion 146 may be, but is not particularly limited to, circular similarly to the second force receiving thin portion 145 as shown in Figure 25. Because of the formation of the second fixed thin portion 146, the fixed recess 132 may be formed in a surface (a lower surface in Figure 26) of the fixed body 130 positioned opposite to the force receiving body 120.

The rigidity of the second connecting body 141 against a force or moment of each axis component is higher than the rigidity of the first connecting body 41. More specifically, a diameter $\phi1$ of the second connecting body 141 is larger than a diameter $\phi2$ of the first connecting body 41 of the individual force sensor 10 as shown in Figure 25. Accordingly, a spring constant of the second connecting body 141 is larger than the spring constant of the first connecting body 41 similarly to the force sensor 110 shown in Figure 15. Thus, the second connecting body 141 is more difficult to be elastically deformed by the action of the force or moment of each axis component than the first connecting body 41.

The rigidity of the second force receiving thin portion 145 and the rigidity of the second fixed thin portion 146 against a force or moment of each axis component are higher than the rigidity of the first force receiving thin portion 45 and the rigidity of the first fixed thin portion 46. More specifically, the thickness t9 of the second force receiving thin portion 145 is larger than the thickness t2 of the first force receiving thin portion 45 (see Figure 8), and the thickness t11 of the second fixed thin portion 146 is larger than the thickness t4 of the first fixed thin portion 46 (see Figure 8). Accordingly, the spring constant of the second force receiving thin portion 145 is larger than the spring constant of the first force receiving thin portion 45, and the spring constant of the second fixed thin portion 146 is larger than the spring constant of the first fixed thin portion 46. Thus, by the action of a force or moment of each axis component, the second force receiving thin portion 145 is more difficult to be elastically deformed than the first force receiving thin portion 45, and the second fixed thin portion 146 is more difficult to be elastically deformed than the first fixed thin portion 46.

In the case in which the force sensor 110 according to the present embodiment is subjected to a force or moment as described above, displacement of the force receiving body 120 is dominated by elastic deformation of the second connecting body 141, the second force receiving thin portion 145, and the second fixed thin portion 146. The first connecting body 41 follows displacement of the force receiving body 120 caused by the second connecting bodies 141 because of being lower in rigidity than the second connecting body 141. The first force receiving thin portion 45 is lower in rigidity than the second force receiving thin portion 145, and the first fixed thin portion 46 is lower in rigidity than the second fixed thin portion 146. Thus, the first force receiving thin portion 45 and the first fixed thin portion 46 follow displacement of the force receiving body 120 caused by the second connecting body 141. It can be assumed that there is substantially no influence on displacement of the force receiving body 120 caused by elastic deformation of the first connecting body 41. It can be assumed that there is substantially no influence on displacement of the force receiving body 120 caused by elastic deformation of the first force receiving thin portion 45 and elastic deformation of the first fixed thin portion 46.

Also in the present embodiment, the force receiving body 120, the fixed body 130, and the second strain generating bodies 140 may be integrally formed from a continuous material. The force receiving body 120, the fixed body 130, and the second strain generating bodies 140 may make up of the single sensor structure 150.

However, the force sensor 110 according to the present embodiment is not limited to this. For example, at least two components among the force receiving body 120, the fixed body 130, and the second strain generating bodies 140 may be integrally formed, and the remaining component may be separately formed.

For example, the force receiving main body portion 123 and the second force receiving thin portion 145 may be integrally formed, and the second force receiving thin portion 145 and the second connecting body 141 may be separately formed. In this case, a bolt hole for inserting a bolt (not shown) for fixing the second force receiving thin portion 145 and the second connecting body 141 may be formed in the second force receiving thin portion 145. Accordingly, the head of the bolt can be contained in the force receiving recess 122. Thus, the head of the bolt can be prevented from protruding from the force receiving body 120, which can lower the height of the force sensor 110.

For example, the fixed main body portion 133 and the second fixed thin portion 146 may be integrally formed, and the second fixed thin portion 146 and the second connecting body 141 may be separately formed. In this case, a bolt hole for inserting a bolt for fixing the second fixed thin portion 146 and the second connecting body 141 may be formed in the second fixed thin portion 146. Accordingly, the head of the bolt can be contained in the fixed recess 132. Thus, the head of the bolt can be prevented from protruding from the fixed body 130, which can lower the height of the force sensor 110.

For example, in the case in which the force receiving main body portion 123 and the second force receiving thin portion 145 are integrally formed and in which the second force receiving thin portion 145 and the second connecting body 141 are separately formed, the fixed main body portion 133 and the second fixed thin portion 146 may be integrally formed, and the second fixed thin portion 146 and the second connecting body 141 may be separately formed. The second force receiving thin portion 145 and the second connecting body 141 may be fixed using the bolt as set forth above. The second fixed thin portion 146 and the second connecting body 141 may be fixed using the bolt as set forth above.

Each of the individual force sensors 10A to 10D according to the present embodiment has a configuration similar to the configuration of the individual force sensor 10 shown in Figure 8 and Figure 9 set forth above, and thus, detailed description will be omitted here. The detecting element 60 of each of the individual force sensors 10A to 10D includes two capacitive elements.

The detecting element 60 of the first individual force sensor 10A includes a first capacitive element C11 and a second capacitive element C12. The first capacitive element C11 is equivalent to the first capacitive element C1 shown in Figure 8 and Figure 9, and the second capacitive element C12 is equivalent to the second capacitive element C2. The first capacitive element C11 is arranged on the negative side in the Y-axis direction, and the second capacitive element C12 is arranged on the positive side in the Y-axis direction.

The detecting element 60 of the second individual force sensor 10B includes a third capacitive element C13 and a fourth capacitive element C14. The third capacitive element C13 is equivalent to the first capacitive element C1 shown in Figure 8 and Figure 9, and the fourth capacitive element C14 is equivalent to the second capacitive element C2. The third capacitive element C13 is arranged on the positive side in the X-axis direction, and the fourth capacitive element C14 is arranged on the negative side in the X-axis direction.

The detecting element 60 of the third individual force sensor 10C includes a fifth capacitive element C15 and a sixth capacitive element C16. The fifth capacitive element C15 is equivalent to the first capacitive element C1 shown in Figure 8 and Figure 9, and the sixth capacitive element C16 is equivalent to the second capacitive element C2. The fifth capacitive element C15 is arranged on the positive side in the Y-axis direction, and the sixth capacitive element C16 is arranged on the negative side in the Y-axis direction.

The detecting element 60 of the fourth individual force sensor 10D includes a seventh capacitive element C17 and an eighth capacitive element C18. The seventh capacitive element C17 is equivalent to the first capacitive element C1 shown in Figure 8 and Figure 9, and the eighth capacitive element C18 is equivalent to the second capacitive element C2. The seventh capacitive element C17 is arranged on the negative side in the X-axis direction, and the eighth capacitive element C18 is arranged on the positive side in the X-axis direction.

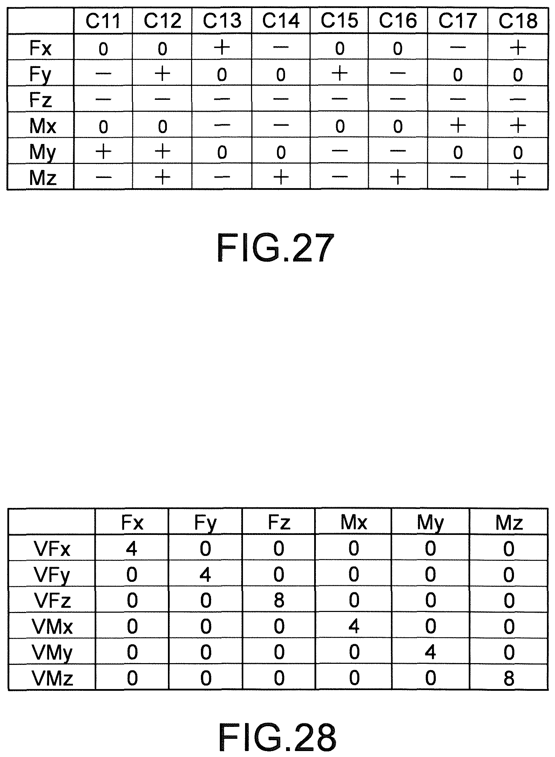

Next, a method for detecting a force or moment in the force sensor 110 according to the present embodiment having such a configuration will be described using Figure 27 and Figure 28. Figure 27 is a table showing changes in capacitance value of each of the capacitive elements C11 to C18 in the force sensor shown in Figure 24, and Figure 28 is a table showing main-axis sensitivity and cross-axis sensitivity based on the changes in capacitance value shown in Figure 27.

(Case in which "+Fx" acts)

First, the case in which the force "Fx" acts on the force receiving body 120 to the positive side in the X-axis direction will be described. When the force "Fx" acts on the force receiving body 120, the second connecting body 141 of each of the second strain generating bodies 140 is elastically deformed. The second force receiving thin portion 145 is also elastically deformed since the second force receiving thin portion 145 is interposed between the force receiving main body portion 123 of the force receiving body 120 and the second connecting body 141. Similarly, the second fixed thin portion 146 is also elastically deformed since the second fixed thin portion 146 is interposed between the fixed main body portion 133 of the fixed body 130 and the second connecting body 141. The second force receiving thin portion 145 and the second fixed thin portion 146 are elastically deformed similarly to the first force receiving thin portion 45 and the first fixed thin portion 46 shown in Figure 10. As described above, the force receiving body 120 subjected to the force "Fx" is displaced to the positive side in the X-axis direction. Note that the second connecting body 141 may not be substantially elastically deformed as long as the second force receiving thin portion 145 and the second fixed thin portion 146 are elastically deformed.

In this case, the first strain generating body 40 of the first individual force sensor 10A turns around the Y-axis (clockwise toward the positive side in the Y-axis direction). However, the first capacitive element C11 and the second capacitive element C12 are arranged at the same position in the X-axis direction. Thus, it can be assumed that there is substantially no change in capacitance value in the first capacitive element C11 and the second capacitive element C12. This is shown as "0 (zero)" for C11 and C12 in the row of "Fx" in the table shown in Figure 27.

In the first strain generating body 40 of the second individual force sensor 10B, the third capacitive element C13 increases in capacitance value, and the fourth capacitive element C14 decreases in capacitance value. This is shown as "+ (plus)" for C13 and as "- (minus)" for C14 in the row of "Fx" in the table shown in Figure 27.

The first strain generating body 40 of the third individual force sensor 10C turns around the Y-axis similarly to the first individual force sensor 10A. However, the fifth capacitive element C15 and the sixth capacitive element C16 are arranged at the same position in the X-axis direction. Thus, it can be assumed that there is substantially no change in capacitance value in the fifth capacitive element C15 and the sixth capacitive element C16. This is shown as "0 (zero)" for C15 and C16 in the row of "Fx" in the table shown in Figure 27.

In the first strain generating body 40 of the fourth individual force sensor 10D, the seventh capacitive element C17 decreases in capacitance value, and the eighth capacitive element C18 increases in capacitance value. This is shown as "- (minus)" for C17 and as "+ (plus)" for C18 in the row of "Fx" in the table shown in Figure 27.

(Case in which "+Fy" acts)

Next, the case in which the force "Fy" acts on the force receiving body 120 to the positive side in the Y-axis direction will be described. When the force "Fy" acts on the force receiving body 120, the second connecting body 141, the second force receiving thin portion 145, and the second fixed thin portion 146 of each of the second strain generating bodies 140 are elastically deformed, and the force receiving body 120 is displaced to the positive side in the Y-axis direction. The second force receiving thin portion 145 and the second fixed thin portion 146 are elastically deformed. Note that the second connecting body 141 may not be substantially elastically deformed as long as the second force receiving thin portion 145 and the second fixed thin portion 146 are elastically deformed. In the following description, the signs in the table in Figure 27 are determined as set forth above in accordance with changes in capacitance value.

In this case, in the first strain generating body 40 of the first individual force sensor 10A, the first capacitive element C11 decreases in capacitance value, and the second capacitive element C12 increases in capacitance value.

The first strain generating body 40 of the second individual force sensor 10B turns around the X-axis. However, the third capacitive element C13 and the fourth capacitive element C14 are arranged at the same position in the Y-axis direction. Thus, it can be assumed that there is substantially no change in capacitance value in the third capacitive element C13 and the fourth capacitive element C14.

In the first strain generating body 40 of the third individual force sensor 10C, the fifth capacitive element C15 increases in capacitance value, and the sixth capacitive element C16 decreases in capacitance value.

The first strain generating body 40 of the fourth individual force sensor 10D turns around the X-axis similarly to the second individual force sensor 10B. However, the seventh capacitive element C17 and the eighth capacitive element C18 are arranged at the same position in the Y-axis direction. Thus, it can be assumed that there is substantially no change in capacitance value in the seventh capacitive element C17 and the eighth capacitive element C18.

(Case in which "+Fz" acts)

Next, the case in which the force "Fz" acts on the force receiving body 120 to the positive side in the Z-axis direction will be described. When the force "Fz" acts on the force receiving body 120, the second force receiving thin portion 145 and the second fixed thin portion 146 of each of the second strain generating bodies 140 are elastically deformed similarly to the first force receiving thin portion 45 and the first fixed thin portion 46 shown in Figure 11. Accordingly, the force receiving body 120 and the second connecting body 141 are displaced to the positive side in the Z-axis direction. The second connecting body 141 is not subjected to substantial elastic deformation in the Z-axis direction. When the force receiving body 120 is displaced to the positive side in the Z-axis direction, the first strain generating body 40 of each of the individual force sensors 10A to 10D is elastically deformed as shown in Figure 11. Accordingly, each of the capacitive elements C11 to C18 decreases in capacitance value.

(Case in which "+Mx" acts)

Next, the case in which the moment "Mx" around the X-axis (clockwise toward the positive side in the X-axis direction) acts on the force receiving body 120 will be described. When the moment "Mx" acts on the force receiving body 120, the second connecting body 141, the second force receiving thin portion 145, and the second fixed thin portion 146 of each of the second strain generating bodies 140 are elastically deformed, and the force receiving body 120 is displaced around the X-axis. Note that the second connecting body 141 may not be substantially elastically deformed as long as the second force receiving thin portion 145 and the second fixed thin portion 146 are elastically deformed.

In this case, the force "Fz" acts on the first strain generating body 40 of the second individual force sensor 10B to the positive side in the Z-axis direction, and the force "Fz" acts on the first strain generating body 40 of the fourth individual force sensor 10D to the negative side in the Z-axis direction. Accordingly, the third capacitive element C13 and the fourth capacitive element C14 of the second individual force sensor 10B decrease in capacitance value similarly to the individual force sensor 10 shown in Figure 11. The seventh capacitive element C17 and the eighth capacitive element C18 of the fourth individual force sensor 10D increase in capacitance value similarly to the individual force sensor 10 shown in Figure 12.

The first strain generating body 40 of the first individual force sensor 10A is arranged at the same position as the central point O of the force receiving body 120 in the Y-axis direction. Thus, the first strain generating body 40 of the first individual force sensor 10A is arranged on the X-axis, and displacement of the displacement body 42 of the first individual force sensor 10A is smaller than displacement of the displacement body 42 of the second individual force sensor 10B and displacement of the displacement body 42 of the fourth individual force sensor 10D. Herein, it can be assumed that the displacement body 42 of the first individual force sensor 10A is not substantially displaced in order to simplify the description. Thus, it can be assumed that the first capacitive element C11 and the second capacitive element C12 of the first individual force sensor 10A substantially do not change in capacitance value. Similarly, the first strain generating body 40 of the third individual force sensor 10C is also arranged at the same position as the central point O of the force receiving body 120 in the Y-axis direction. Thus, the first strain generating body 40 of the third individual force sensor 10C is also arranged on the X-axis, and it can be assumed that the fifth capacitive element C15 and the sixth capacitive element C16 of the third individual force sensor 10C substantially do not change in capacitance value.

(Case in which "+My" acts)

Next, the case in which the moment "My" around the Y-axis (clockwise toward the positive side in the Y-axis direction) acts on the force receiving body 120 will be described. When the moment "My" acts on the force receiving body 120, the second connecting body 141, the second force receiving thin portion 145, and the second fixed thin portion 146 of each of the second strain generating bodies 140 are elastically deformed, and the force receiving body 120 is displaced around the Y-axis. Note that the second connecting body 141 may not be substantially elastically deformed as long as the second force receiving thin portion 145 and the second fixed thin portion 146 are elastically deformed.

In this case, the force "Fz" acts on the first strain generating body 40 of the first individual force sensor 10A to the negative side in the Z-axis direction, and the force "Fz" acts on the first strain generating body 40 of the third individual force sensor 10C to the positive side in the Z-axis direction. Accordingly, the first capacitive element C11 and the second capacitive element C12 of the first individual force sensor 10A increase in capacitance value similarly to the individual force sensor 10 shown in Figure 12. The fifth capacitive element C15 and the sixth capacitive element C16 of the third individual force sensor 10C decrease in capacitance value similarly to the individual force sensor 10 shown in Figure 11.

The first strain generating body 40 of the second individual force sensor 10B is arranged at the same position as the central point O of the force receiving body 120 in the X-axis direction. Thus, the first strain generating body 40 of the second individual force sensor 10B is arranged on the Y-axis, and displacement of the displacement body 42 of the second individual force sensor 10B is smaller than displacement of the displacement body 42 of the first individual force sensor 10A and displacement of the displacement body 42 of the third individual force sensor 10C. Herein, it can be assumed that the displacement body 42 of the second individual force sensor 10B is not substantially displaced in order to simplify the description. Thus, it can be assumed that the third capacitive element C13 and the fourth capacitive element C14 of the second individual force sensor 10B substantially do not change in capacitance value. Similarly, the first strain generating body 40 of the fourth individual force sensor 10D is also arranged at the same position as the central point O of the force receiving body 120 in the X-axis direction. Thus, the first strain generating body 40 of the fourth individual force sensor 10D is also arranged on the Y-axis, and it can be assumed that the seventh capacitive element C17 and the eighth capacitive element C18 of the fourth individual force sensor 10D substantially do not change in capacitance value.

(Case in which "+Mz" acts)

Next, the case in which the moment "Mz" around the Z-axis (clockwise toward the positive side in the Z-axis direction) acts on the force receiving body 120 will be described. When the moment "Mz" acts on the force receiving body 120, the second connecting body 141, the second force receiving thin portion 145, and the second fixed thin portion 146 of each of the second strain generating bodies 140 are elastically deformed, and the force receiving body 120 is displaced around the Z-axis. Note that the second connecting body 141 may not be substantially elastically deformed as long as the second force receiving thin portion 145 and the second fixed thin portion 146 are elastically deformed.

In this case, the first strain generating body 40 of the first individual force sensor 10A is elastically deformed similarly to the case in which the force "Fy" to the positive side in the Y-axis direction acts. Accordingly, the first capacitive element C11 of the first individual force sensor 10A decreases in capacitance value, and the second capacitive element C12 increases in capacitance value.

The first strain generating body 40 of the second individual force sensor 10B is elastically deformed similarly to the case in which the force "Fx" to the negative side in the X-axis direction acts. Accordingly, the third capacitive element C13 of the second individual force sensor 10B decreases in capacitance value, and the fourth capacitive element C14 increases in capacitance value.

The first strain generating body 40 of the third individual force sensor 10C is elastically deformed similarly to the case in which the force "Fy" to the negative side in the Y-axis direction acts. Accordingly, the fifth capacitive element C15 of the third individual force sensor 10C decreases in capacitance value, and the sixth capacitive element C16 increases in capacitance value.

The first strain generating body 40 of the fourth individual force sensor 10D is elastically deformed similarly to the case in which the force "Fx" to the positive side in the X-axis direction acts. Accordingly, the seventh capacitive element C17 of the fourth individual force sensor 10D decreases in capacitance value, and the eighth capacitive element C18 increases in capacitance value.

As described above, the force sensor 110 according to the present embodiment can detect the force "Fx", the force "Fy", the force "Fz", the moment "Mx", the moment "My", and the moment "Mz", so that six axis components can be detected. In the case in which the force "Fx", the force "Fy", the force "Fz", the moment "Mx", the moment "My", and the moment "Mz" act on the force receiving body 120, the change in capacitance value of each of the capacitive elements C11 to C18 is detected, and an orientation and a magnitude of the force or moment acting on the force receiving body 120 are detected. Then, each of the capacitive elements C11 to C18 changes in capacitance value as shown in Figure 27.

From the table shown in Figure 27, "Fx", the force "Fy", the force "Fz", the moment "Mx", the moment "My", and the moment "Mz" acting on the force receiving body 120 may be calculated by expressions below. Six axis components of force can thereby be detected.

$$[\text{Expression 15}]$$
$$Fx = \qquad +C13 - C14 \qquad\qquad - C17 + C18$$

$$[\text{Expression 16}]$$
$$Fx = -C11 + C12 \qquad\qquad + C15 - C16$$

$$[\text{Expression 17}]$$
$$Fz = -C11 - C12 - C13 - C14 - C15 - C16 - C17 - C18$$

$$[\text{Expression 18}]$$
$$Mx = \qquad -C13 - C14 \qquad\qquad + C17 + C18$$

$$[\text{Expression 19}]$$
$$Mx = C11 + C12 \qquad\qquad - C15 - C16$$

$$[\text{Expression 20}]$$
$$Mz = -C11 + C12 - C13 + C14 - C15 + C16 - C17 + C18$$

As set forth above, the force sensor 110 shown in Figure 24 and Figure 25 is capable of detecting the force "Fx", the force "Fy", the force "Fz", the moment "Mx", the moment "My", and the moment "Mz" as shown by [Expression 15] to [Expression 20] set forth above, so that the six axis components of force can be detected. However, the axis components of force that can be detected by the force sensor 110 are not limited to six, and any axis components can be detected in accordance with the number, structure, and shape of strain generating bodies. Although detailed description will be omitted, the six axis components of force and moment can also be detected using three strain generating bodies, for example.

When the changes in capacitance value of each of the capacitive elements C11 to C18 shown in Figure 27 is applied to [Expression 15] to [Expression 20] set forth above, a table showing main-axis sensitivity and cross-axis sensitivity in Figure 28 is obtained. "VFx" shown in Figure 28 is an output when the force "Fx" in the X-axis direction acts, "VFy" is an output when the force "Fy" in the Y-axis direction acts, and "VFz" is an output when the force "Fz" in the Z-axis direction acts. In addition, "VMx" is an output when the moment "Mx" around the X-axis acts, "VMy" is an output when the moment "My" around the Y-axis acts, and "VMz" is an output when the moment "Mz" around the Z-axis acts.

Numeric values shown in the table of Figure 28 are numeric values obtained by substituting "+1" for capacitive elements given the sign "+" and "-1" for capacitive elements given the sign "-" on the right sides of [Expression 15] to [Expression 20] set forth above for the respective forces "Fx", "Fy", "Fz" and the respective moments "Mx", "My", and "Mz" written in the table in Figure 27. For example, a numeric value of "4" written in a cell in which the column of "Fx" and the row of "VFx" cross each other is a numeric value obtained by substituting "+1" for C13 and C18 and substituting "-1" for C14 and C17 in [Expression 15] indicating "Fx" based on the row of "Fx" in Figure 27. In addition, a numeric value of "0" written in a cell in which the column of "Fx" and the row of "VFy" cross each other is a numeric value obtained by substituting 0 for C13, C14, C18, and C18 in [Expression 15] indicating "Fx" based on the row of "Fy" in Figure 27.

As shown in Figure 28, "VFx" has a numeric value of "4" for the force "Fx", while "VFy", "VFz", "VMx", "VMy", and "VMz" have a numeric value of "0". Accordingly, for the force "Fx", there is no cross-axis sensitivity, and only main-axis sensitivity can be detected. Similarly, for each of the forces "Fy", "Fz" and the moments "Mx", "My", and "Mz", there is no cross-axis sensitivity, and only main-axis sensitivity can be detected. That is to say, the force sensor 110 that can reduce occurrence of cross-axis sensitivity can be obtained.

Note that a case in which cross-axis sensitivity occurs is also considered. For example, in the case in which the force "Fz" acts on the first individual force sensor 10A to the positive side in the Z-axis direction, the amount of change in capacitance value of the first capacitive element C11 and the amount of change in capacitance value of the second capacitive element C12 are different in some cases. In this case, cross-axis sensitivity may occur for the force "Fz". In addition, in the case in which the force "Fz" and the moments "Mx" and "My" act on the force receiving body 120, the first individual force sensor 10A is displaced in the Z-axis direction, and thus, the amounts of change in capacitance value are different in some cases in the row of "Fz", the row of "Mx", and the row of "My" in the table shown in Figure 27 even if they are given the same sign. In this case, cross-axis sensitivity may occur for the force "Fz" and the moments "Mx" and "My". Cross-axis sensitivity may occur similarly for the forces "Fx" and "Fy", and the moment "Mz". For example, in the case in which the moment "Mx" acts on the force receiving body 120, the first capacitive element C11, the second capacitive element C12, the fifth capacitive element C15, and the sixth capacitive element C16 do not change in capacitance value as shown in Figure 27, and thus, the numerical value of "0" is written, but the capacitance values change, so that cross-axis sensitivity occurs in some cases. The same applies to the moments "My" and "Mz". In addition, for capacitive elements for which the numerical value of "0" is written in the rows of the forces "Fx" and "Fy", the capacitance values change, so that cross-axis sensitivity occurs in some cases.

However, even in the case in which cross-axis sensitivity occurs, a correction calculation can be performed by deriving an inverse matrix of a matrix (a matrix of six rows and six columns corresponding to the table shown in Figure 28, also referred to as a characteristic matrix) of cross-axis sensitivity and multiplying an output (or a characteristic matrix) of the force sensor by this inverse matrix. As a result, cross-axis sensitivity can be lessened, and occurrence of cross-axis sensitivity can be reduced.

According to the present embodiment as described above, the second strain generating body 140 includes the second force receiving thin portion 145, and the second force receiving thin portion 145 connects the force receiving body 120 and the force-receiving-body-side end 143 of the second connecting body 141. The second force receiving thin portion 145 is thinner than the force receiving body 120. Accordingly, the second force receiving thin portion 145 can be elastically deformed by the action of a force or moment. Thus, the force receiving body 120 can be displaced, and the displacement bodies 42 of each of the individual force sensors 10 can be displaced. Accordingly, the detecting element 60 of each of the individual force sensors 10 can detect the force acting on the individual force receiving body 20, and based on a result of detection performed by each of the detecting elements 60, the detecting circuit 170 can output an electric signal indicating the force or moment acting on the force receiving body 120. As a result, the force sensor 110 can detect the force or moment. In addition, axis components that can be detected can be increased while simplifying the shape of the second strain generating bodies 140 and simplifying the structure, which can improve versatility.

In addition, according to the present embodiment, the second strain generating body 140 includes the second fixed thin portion 146, and the second fixed thin portion 146 connects the fixed body 130 and the fixed-body-side end 144 of the second connecting body 141. The second fixed thin portion 146 is thinner than the fixed body 130. Accordingly, the second fixed thin portion 146 can be elastically deformed by the action of a force or moment. Thus, the force receiving body 120 can be displaced, and the displacement bodies 42 of each of the individual force sensors 10 can be displaced. Accordingly, the detecting element 60 of each of the individual force sensors 10 can detect the force acting on the individual force receiving body 20, and based on a result of detection performed by each of the detecting elements 60, the detecting circuit 170 can output an electric signal indicating the force or moment acting on the force receiving body 120. As a result, the force sensor 110 can detect the force or moment. In addition, axis components that can be detected can be increased while simplifying the shape of the second strain generating bodies 140 and simplifying the structure, which can improve versatility.

In addition, according to the present embodiment, the first strain generating body 40 of each of the individual force sensors 10 includes the first force receiving thin portion 45, and the first force receiving thin portion 45 connects the individual force receiving body 20 and the force-receiving-body-side end 43 of the first connecting body 41. The first force receiving thin portion 45 is thinner than the individual force receiving body 20. Accordingly, the first force receiving thin portion 45 can be elastically deformed by the action of a force or moment. Thus, the displacement bodies 42 of the first strain generating body 40 of each of the individual force sensors 10 can be displaced, and each of the capacitive elements C11 to C18 can be changed in capacitance value. As a result, the six axis components can be detected.

In addition, according to the present embodiment, the first strain generating body 40 of each of the individual force sensors 10 includes the first fixed thin portion 46, and the first fixed thin portion 46 connects the individual fixed body 30 and the fixed-body-side end 44 of the first connecting body 41. The first fixed thin portion 46 is thinner than the individual fixed body 30. Accordingly, the first fixed thin portion 46 can be elastically deformed by the action of a force or moment. Thus, the displacement bodies 42 of the first strain generating body 40 of each of the individual force sensors 10 can be displaced, and each of the capacitive elements C11 to C18 can be changed in capacitance value. As a result, the six axis components can be detected.

Note that in the present embodiment set forth above, the example in which each of the second strain generating bodies 140 includes the second force receiving thin portion 145 and the second fixed thin portion 146 has been described. However, this is not a limitation. For example, each of the second strain generating bodies 140 may not include the second force receiving thin portion 145 as long as it includes the second fixed thin portion 146.

In addition, in the present embodiment set forth above, the example in which the first strain generating body 40 of each of the individual force sensors 10 includes the first force receiving thin portion 45 and the first fixed thin portion 46 has been described. However, this is not a limitation. For example, each of the first strain generating bodies 40 may not include the first force receiving thin portion 45 as long as it includes the first fixed thin portion 46.

In addition, in the present embodiment set forth above, the second force receiving thin portion 145 may be provided with a plurality of through-holes not shown. In this case, the second force receiving thin portion 145 can be increased in flexibility. Alternatively, in the case in which the second force receiving thin portion 145 includes the through-holes, the thickness t2 of the second force receiving thin portion 145 can be made larger. In a case in which the sensor structure 150 is made by casting, a flow of melted metal can be ensured also at a portion corresponding to the second force receiving thin portion 145 in a mold by making the thickness of the second force receiving thin portion 145 larger. Any shape such as a circle, a semicircle, an ellipse, a fan shape, a triangle, and a quadrangle can be employed as the planar shape of the through-holes as long as the second force receiving thin portion 145 can have flexibility. The same applies to the second fixed thin portion 146.

(Seventh Embodiment)

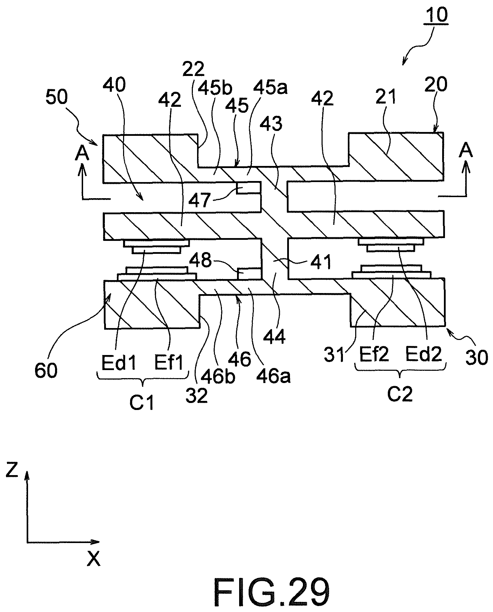

Next, an individual force sensor and a force sensor according to a seventh embodiment of the present invention will be described using Figure 29 to Figure 34.

The seventh embodiment shown in Figure 29 to Figure 34 is different from the sixth embodiment shown in Figure 24 to Figure 28 mainly in that the first strain generating body of the individual force sensor includes a first protruding portion protruding from the first thin portion in the Z-axis direction and a second protruding portion protruding from a fixed thin portion in the Z-axis direction, and the remaining configuration is substantially identical to that of the sixth embodiment. Note that in Figure 29 to Figure 34, portions identical to those of the sixth embodiment shown in Figure 24 to Figure 28 have identical reference characters allotted, and detailed description will be omitted.

First, the individual force sensor 10 according to the present embodiment will be described using Figure 29.

As shown in Figure 29, the first strain generating body 40 according to the present embodiment includes a first force receiving protruding portion 47 protruding from the first force receiving thin portion 45 in the Z-axis direction and a first fixed protruding portion 48 protruding from the first fixed thin portion 46 in the Z-axis direction. The first force receiving protruding portion 47 is an example of the first protruding portion, and the first fixed protruding portion 48 is an example of the second protruding portion.

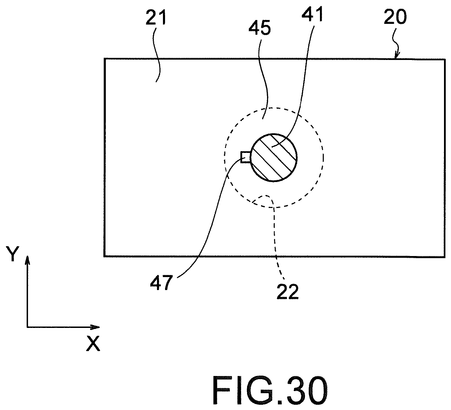

As shown in Figure 30, the first force receiving protruding portion 47 may be arranged at a position along the second direction relative to the first connecting body 41 when viewed in the Z-axis direction. In the individual force sensor 10 shown in Figure 30, the second direction is equivalent to the X-axis direction. The first force receiving protruding portion 47 is arranged on the negative side in the X-axis direction of the first connecting body 41.

As shown in Figure 29, the first force receiving protruding portion 47 according to the present embodiment may be connected to the first connecting body 41. The first force receiving protruding portion 47 may be arranged on a surface (a lower surface shown in Figure 29) of the first force receiving thin portion 45 on the individual fixed body 30 side. More specifically, the first force receiving protruding portion 47 is connected to the force-receiving-body-side end 43 of the first connecting body 41 and is formed from the first force receiving thin portion 45 to the force-receiving-body-side end 43. The first force receiving protruding portion 47 may be formed into a rib shape. The first force receiving protruding portion 47 may extend from the first connecting body 41 to the negative side in the X-axis direction. However, the first force receiving protruding portion 47 may extend in any direction from the first connecting body 41.

As shown in Figure 29, the first force receiving thin portion 45 includes an inner side end 45a positioned on the force-receiving-body-side end 43 side of the first connecting body 41 and an outer side end 45b positioned on the individual force receiving main body portion 21 side when viewed in a vertical cross section passing through the first force receiving protruding portion 47. The inner side end 45a is an end positioned on the inner side relative to the center (equivalent to the first connecting body 41) when viewed in the Z-axis direction, and the outer side end 45b is an end positioned on the outer side relative to the center. The first force receiving protruding portion 47 according to the present embodiment is arranged on the inner side end 45a. The first force receiving protruding portion 47 may be apart from the outer side end 45b. The vertical cross section shown in Figure 29 is a cross section along the X-axis direction and along the Z-axis direction.

As shown in Figure 30, the planar shape of the first force receiving protruding portion 47 may be a quadrangular shape when viewed in the Z-axis direction. However, the planar shape of the first force receiving protruding portion 47 may be circular and may be any shape.

The first fixed protruding portion 48 may be arranged at a position along the X-axis direction relative to the first connecting body 41 when viewed in the Z-axis direction, similarly to the first force receiving protruding portion 47. The first fixed protruding portion 48 is arranged from the first connecting body 41 to the negative side in the X-axis direction. The first fixed protruding portion 48 may be overlapped on the first force receiving protruding portion 47 when viewed in the Z-axis direction.

As shown in Figure 29, the first fixed protruding portion 48 according to the present embodiment may be connected to the first connecting body 41. The first fixed protruding portion 48 may be arranged on a surface (an upper surface shown in Figure 29) of the first fixed thin portion 46 on the individual force receiving body 20 side. More specifically, the first fixed protruding portion 48 is connected to the fixed-body-side end 44 of the first connecting body 41, and is formed from the first fixed thin portion 46 to the fixed-body-side end 44. The first fixed protruding portion 48 may be formed into a rib shape. The first fixed protruding portion 48 may extend from the first connecting body 41 to the negative side in the X-axis direction. However, the first fixed protruding portion 48 may extend in any direction from the first connecting body 41.

As shown in Figure 29, the first fixed thin portion 46 includes an inner side end 46a positioned on the fixed-body-side end 44 side of the first connecting body 41 and an outer side end 46b positioned on the individual fixed main body portion 31 side when viewed in a vertical cross section passing through the first fixed protruding portion 48. The inner side end 46a is an end positioned on the inner side relative to the center (equivalent to the first connecting body 41) when viewed in the Z-axis direction, and the outer side end 46b is an end positioned on the outer side relative to the center. The first fixed protruding portion 48 according to the present embodiment is arranged on the inner side end 46a. The first fixed protruding portion 48 may be apart from the outer side end 46b.

The planar shape of the first fixed protruding portion 48 may be a quadrangular shape when viewed in the Z-axis direction. However, the planar shape of the first fixed protruding portion 48 may be circular and may be any shape. The planar shape of the first fixed protruding portion 48 may be identical to the planar shape of the first force receiving protruding portion 47.

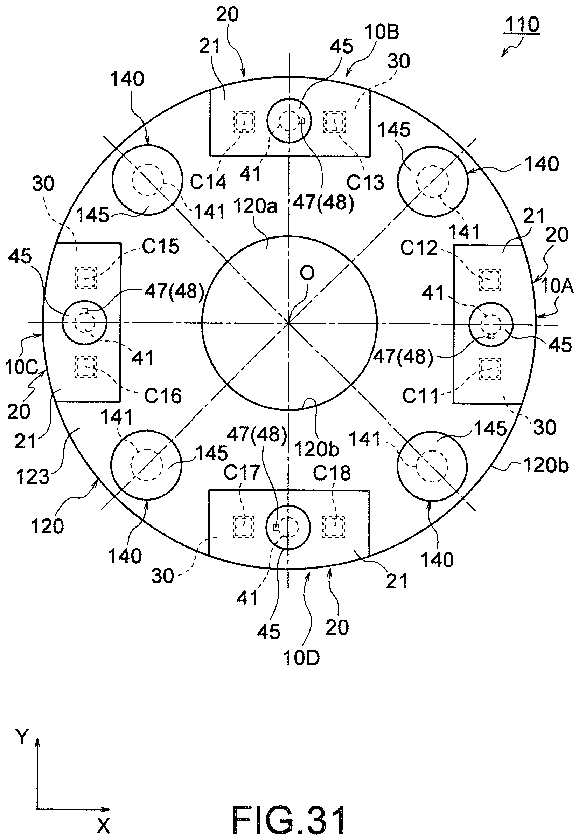

In Figure 31, the force sensor 110 including the individual force sensor 10 shown in Figure 29 is shown. The first force receiving protruding portion 47 and the first fixed protruding portion 48 of the first individual force sensor 10A are arranged on the first connecting body 41 on the negative side in the Y-axis direction. The first force receiving protruding portion 47 and the first fixed protruding portion 48 of the second individual force sensor 10B are arranged on the first connecting body 41 on the positive side in the X-axis direction. The first force receiving protruding portion 47 and the first fixed protruding portion 48 of the third individual force sensor 10C are arranged on the first connecting body 41 on the positive side in the Y-axis direction. The first force receiving protruding portion 47 and the first fixed protruding portion 48 of the fourth individual force sensor 10D are arranged on the first connecting body 41 on the negative side in the X-axis direction.

In the case in which the individual force receiving body 20 of the individual force sensor 10 is subjected to the force "Fz" to the positive side in the Z-axis direction, elastic deformation of the first connecting body 41, the first force receiving thin portion 45, and the first fixed thin portion 46 of the first strain generating body 40 is reduced. That is to say, the first force receiving protruding portion 47 can reduce elastic deformation of the first force receiving thin portion 45. The first fixed protruding portion 48 can reduce elastic deformation of the first fixed thin portion 46. Accordingly, the first force receiving protruding portion 47 and the first fixed protruding portion 48 can raise resistance against the force "Fz" and can reduce elastic deformation of the first strain generating body 40 under the force "Fz".

In the force sensor 110 shown in Figure 31, elastic deformation of the first strain generating body 40 of each of the individual force sensors 10A to 10D is reduced in the case in which the force "Fz" acts on the force receiving body 120 to the positive side in the Z-axis direction. This can lower the sensitivity of the force sensor 110 for the force "Fz" in the Z-axis direction. In addition, elastic deformation of the first strain generating body 40 of each of the individual force sensors 10A to 10D is reduced, which can lower the sensitivities of the force sensor 110 for the moment "Mx" around the X-axis and the moment "My" around the Y-axis. Thus, the sensitivities of the force sensor 110 for the force "Fx" in the X-axis direction, the force "Fy" in the Y-axis direction, and the moment "Mz" around the Z-axis can be relatively raised. More specifically, in the case in which the first force receiving thin portion 45 and the first fixed thin portion 46 are formed along the plane orthogonal to the Z-axis direction, the first force receiving thin portion 45 and the first fixed thin portion 46 is likely to be elastically deformed under the force "Fz" in the Z-axis direction if the first force receiving protruding portion 47 and the first fixed protruding portion 48 do not exist. Accordingly, the sensitivities of the force sensor 110 for the force "Fz", the moment "Mx", and the moment "My" are likely to be higher than the sensitivities of the force sensor 110 for the force "Fx", the force "Fy", and the moment "Mz". In a case in which a tool has a large length, the sensitivities of the force sensor 110 may be lowered in balance. In contrast, according to the present embodiment, elastic deformation of the first strain generating body 40 of each of the individual force sensors 10A to 10D under the force "Fz" can be reduced by providing the first force receiving protruding portion 47. As a result, balance among the sensitivities for the respective axis components in the force sensor 110 can be improved.

According to the present embodiment as described above, the first strain generating body 40 includes the first force receiving protruding portion 47 protruding from the first force receiving thin portion 45 in the Z-axis direction. This can reduce elastic deformation of the first force receiving thin portion 45 under the force "Fz" in the Z-axis direction. Thus, the sensitivities of the force sensor 110 for the force "Fz" in the Z-axis direction, the moment "Mx" around the X-axis, and the moment "My" around the Y-axis can be lowered, which can improve balance among the sensitivities for the respective axis components in the force sensor 110.

In addition, according to the present embodiment, the first strain generating body 40 includes the first fixed protruding portion 48 protruding from the first fixed thin portion 46 in the Z-axis direction. This can reduce elastic deformation of the first fixed thin portion 46 under the force "Fz" in the Z-axis direction. Thus, the sensitivities of the force sensor 110 for the force "Fz" in the Z-axis direction, the moment "Mx" around the X-axis, and the moment "My" around the Y-axis can be lowered, which can improve balance among the sensitivities for the respective axis components in the force sensor 110.

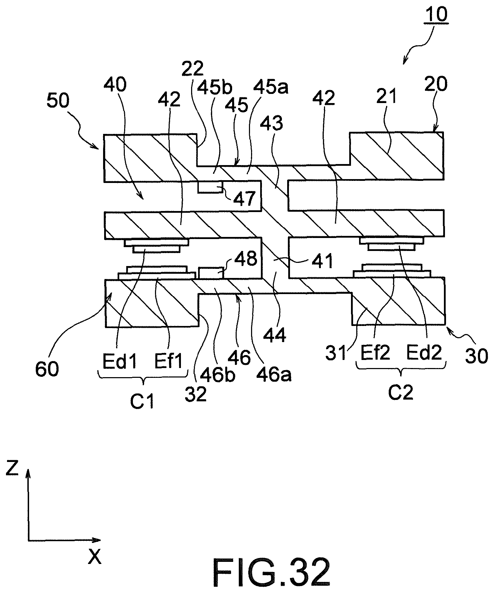

Note that in the present embodiment set forth above, the example in which the first force receiving protruding portion 47 is arranged on the inner side end 45a of the first force receiving thin portion 45 has been described. However, the present embodiment is not limited to this. For example, as shown in Figure 32, the first force receiving protruding portion 47 may be arranged on the outer side end 45b of the first force receiving thin portion 45. Also in this case, elastic deformation of the first force receiving thin portion 45 under the force "Fz" in the Z-axis direction can be reduced. Thus, balance among the sensitivities for the respective axis components in the force sensor 110 can be improved. The first force receiving protruding portion 47 shown in Figure 32 may be apart from the inner side end 45a of the first force receiving thin portion 45.

In addition, in the present embodiment set forth above, the example in which the first fixed protruding portion 48 is arranged on the inner side end 46a of the first fixed thin portion 46 has been described. However, the present embodiment is not limited to this. For example, as shown in Figure 32, the first fixed protruding portion 48 may be arranged on the outer side end 46b of the first fixed thin portion 46. Also in this case, elastic deformation of the first fixed thin portion 46 under the force "Fz" in the Z-axis direction can be reduced. Thus, balance among the sensitivities for the respective axis components in the force sensor 110 can be improved. The first fixed protruding portion 48 shown in Figure 32 may be apart from the inner side end 46a of the first fixed thin portion 46.

In addition, in the present embodiment set forth above, the example in which the first force receiving protruding portion 47 is arranged on the surface of the first force receiving thin portion 45 on the individual fixed body 30 side has been described. However, the present embodiment is not limited to this. For example, the first force receiving protruding portion 47 may be arranged on the surface of the first force receiving thin portion 45 opposite to the individual fixed body 30. Also in this case, elastic deformation of the first force receiving thin portion 45 under the force "Fz" in the Z-axis direction can be reduced, which can improve balance among the sensitivities for the respective axis components in the force sensor 110.

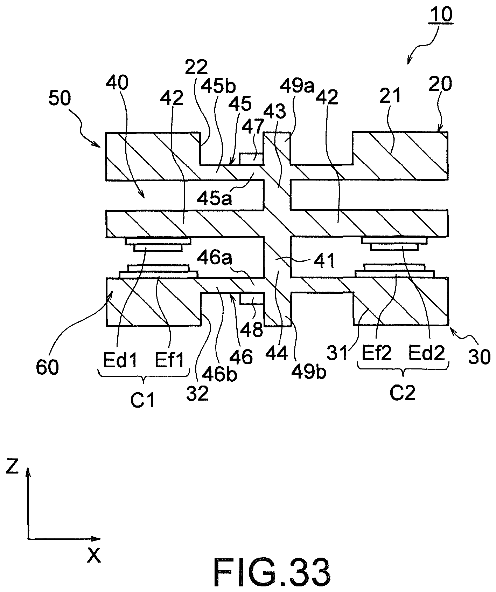

In the example shown in Figure 33, the first force receiving protruding portion 47 is arranged on the surface (an upper surface shown in Figure 33) of the first force receiving thin portion 45 opposite to the individual fixed body 30. The first connecting body 41 extends through the first force receiving thin portion 45. The first connecting body 41 includes a force receiving connecting body protruding portion 49a protruding from the first force receiving thin portion 45 to the positive side in the Z-axis direction. The first force receiving protruding portion 47 is connected to the force receiving connecting body protruding portion 49a of the first connecting body 41, and is formed into a rib shape from the first force receiving thin portion 45 to the force receiving connecting body protruding portion 49a. The first force receiving protruding portion 47 shown in Figure 33 is arranged on the inner side end 45a of the first force receiving thin portion 45 and is apart from the outer side end 45b.

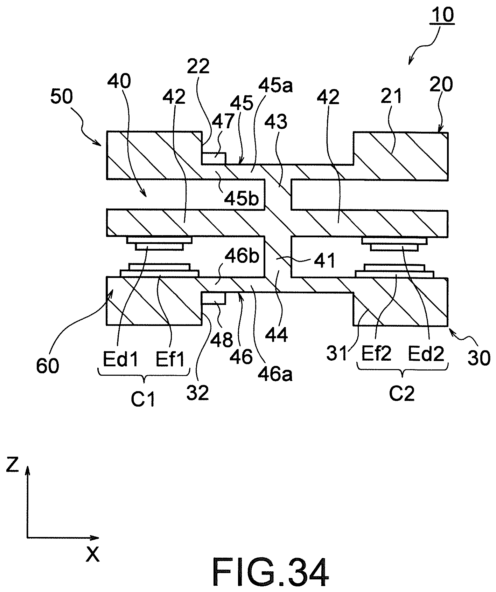

Alternatively, as shown in Figure 34, the first force receiving protruding portion 47 arranged on the surface of the first force receiving thin portion 45 opposite to the individual fixed body 30 may be arranged on the outer side end 45b of the second force receiving thin portion 145. In this case, the first force receiving protruding portion 47 may be apart from the inner side end 45a. In this case, the first connecting body 41 may not include the force receiving connecting body protruding portion 49a.

In addition, in the present embodiment set forth above, the example in which the first fixed protruding portion 48 is arranged on the surface of the first fixed thin portion 46 on the individual force receiving body 20 side has been described. However, the present embodiment is not limited to this. For example, the first fixed protruding portion 48 may be arranged on the surface of the first fixed thin portion 46 opposite to the individual force receiving body 20. Also in this case, elastic deformation of the first fixed thin portion 46 under the force "Fz" in the Z-axis direction can be reduced, which can improve balance among the sensitivities for the respective axis components in the force sensor 110.

In the example shown in Figure 33, the first fixed protruding portion 48 is arranged on the surface (a lower surface shown in Figure 33) of the first fixed thin portion 46 opposite to the individual force receiving body 20. The first connecting body 41 extends through the first fixed thin portion 46. The first connecting body 41 includes a fixed connecting body protruding portion 49b protruding from the first fixed thin portion 46 to the negative side in the Z-axis direction. The first fixed protruding portion 48 is connected to the fixed connecting body protruding portion 49b of the first connecting body 41, and is formed into a rib shape from the first fixed thin portion 46 to the fixed connecting body protruding portion 49b. The first fixed protruding portion 48 shown in Figure 33 is arranged on the inner side end 46a of the first fixed thin portion 46 and is apart from the outer side end 46b.

Alternatively, as shown in Figure 34, the first fixed protruding portion 48 arranged on the surface of the first fixed thin portion 46 opposite to the individual force receiving body 20 may be arranged on the outer side end 46b of the first fixed thin portion 46. In this case, the first fixed protruding portion 48 may be apart from the inner side end 46a. In this case, the first connecting body 41 may not include the fixed connecting body protruding portion 49b.

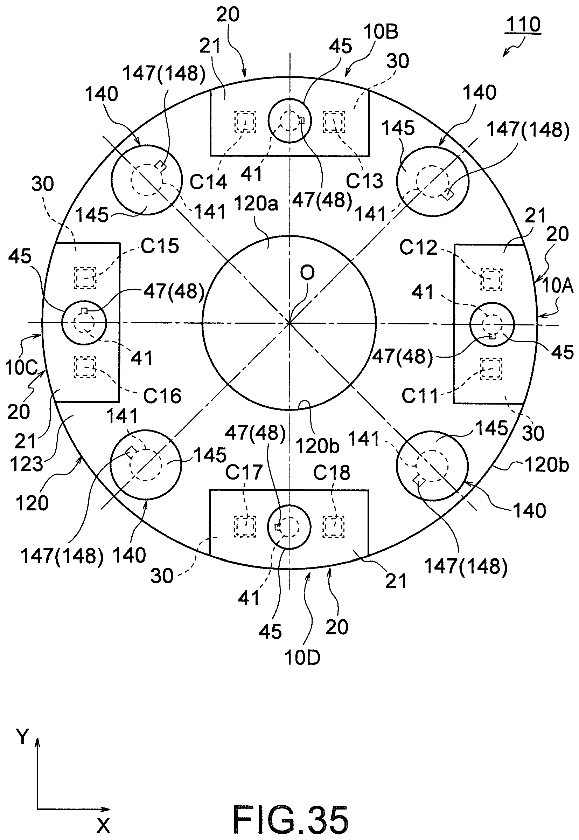

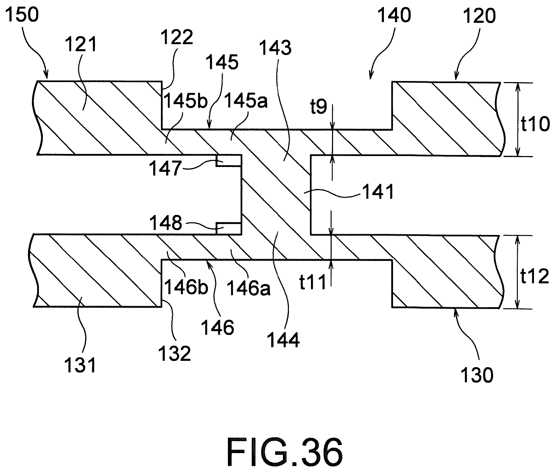

In addition, in the present embodiment set forth above, the second strain generating body 140 may include a second force receiving protruding portion 147 protruding from the second force receiving thin portion 145 in the Z-axis direction and a second fixed protruding portion 148 protruding from the second fixed thin portion 146 in the Z-axis direction as shown in Figure 35 and Figure 36. The second force receiving protruding portion 147 is an example of a third protruding portion, and the second fixed protruding portion 148 is an example of a fourth protruding portion. Figure 35 is a plan view showing a modification of the force sensor shown in Figure 31. The bolt holes 126 (see Figure 15) are omitted in Figure 35. Figure 36 is a vertical cross sectional view of the second strain generating body 140 shown in Figure 35.

As shown in Figure 35, the second force receiving protruding portion 147 may be arranged at a position along a circumferential direction relative to the central point O of the force receiving body 120 when viewed in the Z-axis direction. In the example shown in Figure 35, each of the second force receiving protruding portions 147 is arranged in the direction clockwise toward the negative side in the Z-axis direction.

As shown in Figure 36, the second force receiving protruding portion 147 may be connected to the second connecting body 141. The second force receiving protruding portion 147 may be arranged on a surface (a lower surface shown in Figure 36) of the second force receiving thin portion 145 on the fixed body 130 side. More specifically, the second force receiving protruding portion 147 is connected to the force-receiving-body-side end 143 of the second connecting body 141, and is formed from the second force receiving thin portion 145 to the force-receiving-body-side end 143. The second force receiving protruding portion 147 may be formed into a rib shape. The second force receiving protruding portion 147 may extend in the circumferential direction from the second connecting body 141. However, the second force receiving protruding portion 147 may extend in any direction from the second connecting body 141.

As shown in Figure 36, the second force receiving thin portion 145 includes an inner side end 145a positioned on the force-receiving-body-side end 143 side of the second connecting body 141 and an outer side end 145b positioned on the force receiving main body portion 123 side when viewed in a cross section passing through the second force receiving protruding portion 147. The inner side end 145a is an end positioned on the inner side relative to a center (equivalent to the second connecting body 141) when viewed in the Z-axis direction, and the outer side end 145b is an end positioned on the outer side relative to the center. The second force receiving protruding portion 147 according to the present embodiment is arranged on the inner side end 145a. The second force receiving protruding portion 147 may be apart from the outer side end 145b. The vertical cross section shown in Figure 36 is a cross section along the Z-axis direction.

As shown in Figure 35, the planar shape of the second force receiving protruding portion 147 may be a quadrangular shape when viewed in the Z-axis direction. However, the planar shape of the second force receiving protruding portion 147 may be circular and may be any shape.

As shown in Figure 35, the second fixed protruding portion 148 may be arranged at a position along the circumferential direction relative to the central point O of the force receiving body 120 when viewed in the Z-axis direction. In the example shown in Figure 35, each of the second fixed protruding portions 148 is arranged in the direction clockwise toward the negative side in the Z-axis direction.

As shown in Figure 36, the second fixed protruding portion 148 may be connected to the second connecting body 141. The second fixed protruding portion 148 may be arranged on the surface (an upper surface shown in Figure 36) of the second fixed thin portion 146 on the force receiving body 120 side. More specifically, the second fixed protruding portion 148 is connected to the fixed-body-side end 144 of the second connecting body 141, and is formed from the second fixed thin portion 146 to the fixed-body-side end 144. The second fixed protruding portion 148 may be formed into a rib shape. The second fixed protruding portion 148 may extend in the circumferential direction from the second connecting body 141. However, the second fixed protruding portion 148 may extend in any direction from the second connecting body 141.

As shown in Figure 36, the second fixed thin portion 146 includes an inner side end 146a positioned on the fixed-body-side end 144 side of the second connecting body 141 and an outer side end 146b positioned on the fixed main body portion 133 side when viewed in a cross section passing through the second fixed protruding portion 148. The inner side end 146a is an end positioned on the inner side relative to the center (equivalent to the second connecting body 141) when viewed in the Z-axis direction, and the outer side end 146b is an end positioned on the outer side relative to the center. The second fixed protruding portion 148 according to the present embodiment is arranged on the inner side end 146a. The second fixed protruding portion 148 may be apart from the outer side end 146b.

The planar shape of the second fixed protruding portion 148 may be a quadrangular shape when viewed in the Z-axis direction. However, the planar shape of the second fixed protruding portion 148 may be circular and may be any shape. The planar shape of the second fixed protruding portion 148 may be identical to the planar shape of the second force receiving protruding portion 147.

In the case in which the force sensor 110 is subjected to the force "Fz" to the positive side in the Z-axis direction, elastic deformation of the second connecting body 141, the second force receiving thin portion 145, and the second fixed thin portion 146 of the second strain generating body 140 is reduced. That is to say, the second force receiving protruding portion 147 can reduce elastic deformation of the second force receiving thin portion 145. The second fixed protruding portion 148 can reduce elastic deformation of the second fixed thin portion 146. Accordingly, the second force receiving protruding portion 147 and the second fixed protruding portion 148 can raise resistance against the force "Fz", which can reduce elastic deformation of the second strain generating body 140 under the force "Fz".

In the force sensor 110 shown in Figure 35, elastic deformation of the first strain generating body 40 of each of the individual force sensors 10A to 10D can be reduced in the case in which the force "Fz" acts on the force receiving body 120 to the positive side in the Z-axis direction. This can further lower the sensitivity of the force sensor 110 for the force "Fz" in the Z-axis direction. In addition, reduction of elastic deformation of the first strain generating body 40 of each of the individual force sensors 10A to 10D can further lower the sensitivities of the force sensor 110 for the moment "Mx" around the X-axis and the moment "My" around the Y-axis. Thus, the sensitivities of the force sensor 110 for the force "Fx" in the X-axis direction, the force "Fy" in the Y-axis direction, and the moment "Mz" around the Z-axis can be relatively further raised. As a result, balance among the sensitivities for the respective axis components in the force sensor 110 can further be improved.

According to the example shown in Figure 35 and Figure 36 as described above, the second strain generating body 140 includes the second force receiving protruding portion 147 protruding from the second force receiving thin portion 145 in the Z-axis direction. This can reduce elastic deformation of the second force receiving thin portion 145 under the force "Fz" in the Z-axis direction. Thus, the sensitivities of the force sensor 110 for the force "Fz" in the Z-axis direction, the moment "Mx" around the X-axis, and the moment "My" around the Y-axis can further be lowered, which can further improve balance among the sensitivities for the respective axis components in the force sensor 110.

In addition, according to the example shown in Figure 35 and Figure 36, the second strain generating body 140 includes the second fixed protruding portion 148 protruding from the second fixed thin portion 146 in the Z-axis direction. This can reduce elastic deformation of the second fixed thin portion 146 for the force "Fz" in the Z-axis direction. Thus, the sensitivities of the force sensor 110 for the force "Fz" in the Z-axis direction, the moment "Mx" around the X-axis, and the moment "My" around the Y-axis can be lowered, which can improve balance among the sensitivities for the respective axis components in the force sensor 110.

Note that the arrangement of the second force receiving protruding portion 147 and the second fixed protruding portion 148 is not limited to the example shown in Figure 36. For example, the second force receiving protruding portion 147 and the second fixed protruding portion 148 may be arranged similarly to the first force receiving protruding portion 47 and the first fixed protruding portion 48 shown in Figure 32 to Figure 34. In the case of the arrangement similar to the example shown in Figure 33, the second connecting body 141 may extend through the second force receiving thin portion 145 to protrude from the second force receiving thin portion 145 to the positive side in the Z-axis direction, and may extend through the second fixed thin portion 146 to protrude from the second fixed thin portion 146 to the negative side in the Z-axis direction.

In addition, in the case in which the second strain generating body 140 includes the second force receiving protruding portion 147 and the second fixed protruding portion 148, the first strain generating body 40 may not include the first force receiving protruding portion 47 and the first fixed protruding portion 48. In the case in which displacement of the force receiving body 120 is dominated by elastic deformation of the second connecting body 141, the second force receiving thin portion 145, and the second fixed thin portion 146, balance among the sensitivities for the respective axis components in the force sensor 110 can be improved by the second force receiving protruding portion 147 and the second fixed protruding portion 148.

The present invention is not limited to the above-described embodiments and modifications as they are, and can be embodied by modifying the constituent elements within a range not departing from the spirit of the invention in an implementation phase. In addition, various inventions can be created by appropriately combining a plurality of constituent elements disclosed in the above-described embodiments and modifications. Some constituent elements may be deleted from all the constituent elements shown in the embodiments and modifications. Furthermore, the constituent elements belonging to different embodiments and modifications may be combined appropriately.

**Claims**

1. An individual force sensor comprising:

a first individual sensor body on which a force or moment to be detected acts;
a second individual sensor body that is arranged at a position different from the first individual sensor body in a first direction;
a first strain generating body that connects the first individual sensor body and the second individual sensor body and that is elastically deformed by the force or moment acting on the first individual sensor body; and
a detecting element that detects displacement caused by elastic deformation of the first strain generating body, wherein
the first strain generating body includes a first connecting body extending in the first direction from a first end connected to the first individual sensor body to a second end connected to the second individual sensor body, and a displacement body protruding from the first connecting body in a second direction orthogonal to the first direction, and
the detecting element includes a fixed electrode substrate provided on the second individual sensor body and a displacement electrode substrate provided on the displacement body and opposed to the fixed electrode substrate.

2. The individual force sensor according to claim 1, wherein

a direction orthogonal to the first direction and the second direction is a third direction, and
the first connecting body is formed along each of the first direction and the third direction.

3. The individual force sensor according to claim 2, wherein a dimension of the first connecting body in the second direction is smaller than a dimension of the first connecting body in the third direction when viewed in the first direction.

4. The individual force sensor according to claim 1, wherein the first individual sensor body, the second individual sensor body, and the displacement body are formed along a plane orthogonal to the first direction.

5. The individual force sensor according to claim 2, wherein the second individual sensor body and the displacement body protrude in the third direction relative to the first individual sensor body.

6. The individual force sensor according to claim 1, wherein

the first strain generating body includes two displacement bodies, each of which is the displacement body, protruding in the second direction on both sides of the first connecting body,
the detecting element includes two fixed electrode substrates, each of which is the fixed electrode substrate, and two displacement electrode substrates, each of which is the displacement electrode substrate, opposed to the fixed electrode substrates correspondingly, and
the displacement electrode substrates are provided on the displacement bodies, respectively.

7. The individual force sensor according to claim 1, wherein the first individual sensor body, the second individual sensor body, and the first strain generating body are integrally formed from a continuous material.

8. The individual force sensor according to claim 1, wherein

the first strain generating body includes a first thin portion formed along a plane orthogonal to the first direction, the first thin portion connecting the first individual sensor body and the first end of the first connecting body, and
the first thin portion is thinner than the first individual sensor body.

9. The individual force sensor according to claim 8, wherein the first strain generating body includes a first protruding portion protruding from the first thin portion in the first direction.

10. The individual force sensor according to claim 1, wherein

the first strain generating body includes a second thin portion formed along a plane orthogonal to the first direction, the second thin portion connecting the second individual sensor body and the second end of the first connecting body, and
the second thin portion is thinner than the second individual sensor body.

11. The individual force sensor according to claim 10, wherein the first strain generating body includes a second protruding portion protruding from the second thin portion in the first direction.

12. The individual force sensor according to claim 1, comprising a detecting circuit that outputs an electric signal indicating the force or moment acting on the first individual sensor body based on a result of detection performed by the detecting element.

13. An individual force sensor comprising:

a first individual sensor body on which a force or moment to be detected acts;
a second individual sensor body that is arranged at a position different from the first individual sensor body in a first direction;
a first strain generating body that connects the first individual sensor body and the second individual sensor body and that is elastically deformed by the force or moment acting on the first individual sensor body; and
a detecting element that detects displacement caused by elastic deformation of the first strain generating body, wherein
the first strain generating body includes a first connecting body extending in the first direction from a first end connected to the first individual sensor body to a second end connected to the second individual sensor body,
the detecting element includes two first strain gauges provided on the first end and two second strain gauges provided on the second end, and
a wheatstone bridge circuit is composed of the two first strain gauges and the two second strain gauges.

14. A force sensor comprising:

a plurality of individual force sensors, each of which is the individual force sensor according to any one of claims 1 to 12;
a first sensor body that supports the first individual sensor body of each of the individual force sensors, the first sensor body being subjected to a force or moment to be detected;
a second sensor body that supports the second individual sensor body of each of the individual force sensors;
a plurality of second strain generating bodies that connect the first sensor body and the second sensor body and that are elastically deformed by the action of the force or moment acting on the first sensor body; and
a detecting circuit that outputs an electric signal indicating the force or moment acting on the first sensor body based on a result of detection performed by the detecting element of each of the individual force sensors, wherein
the second strain generating bodies each include a second connecting body extending in the first direction from a third end connected to the first sensor body to a fourth end connected to the second sensor body.

15. The force sensor according to claim 14, wherein the second connecting body is formed along a radial direction relative to a central point of the first sensor body when viewed in the first direction.

16. The force sensor according to claim 15, wherein a dimension of the second connecting body in a direction orthogonal to the radial direction is smaller than a dimension of the second connecting body in the radial direction when viewed in the first direction.

17. The force sensor according to claim 14, wherein the first sensor body and the second sensor body are formed along a plane orthogonal to the first direction.

18. The force sensor according to claim 14, wherein the first sensor body includes a first opening into which the first connecting body is inserted.

19. The force sensor according to claim 18, wherein

the first sensor body includes a first recess that opens toward an opposite side of the second sensor body and that communicates with the first opening, and
the first individual sensor body is contained in the first recess.

20. The force sensor according to claim 14, wherein the second sensor body includes a second opening into which the first connecting body is inserted.

21. The force sensor according to claim 20, wherein

the second sensor body includes a second recess that opens toward an opposite side of the first sensor body and that communicates with the second opening, and
the second individual sensor body is contained in the second recess.

22. The force sensor according to claim 14, wherein rigidity of the second connecting body against moment around an axis along the first direction is higher than rigidity of the first connecting body.

23. The force sensor according to claim 14, wherein the first sensor body, the second sensor body, and the second strain generating bodies are integrally formed from a continuous material.

24. The force sensor according to claim 15, wherein

the second strain generating bodies each include a third thin portion formed along a plane orthogonal to the first direction, the third thin portion connecting the first sensor body and the third end of the second connecting body, and
the third thin portion is thinner than the first sensor body.

25. The force sensor according to claim 24, wherein the second strain generating bodies each include a third protruding portion protruding from the third thin portion in the first direction.

26. The force sensor according to claim 15, wherein

the second strain generating bodies each include a fourth thin portion formed along a plane orthogonal to the first direction, the fourth thin portion connecting the second sensor body and the fourth end of the second connecting body, and
the fourth thin portion is thinner than the second sensor body.

27. The force sensor according to claim 26, wherein the second strain generating bodies each include a fourth protruding portion protruding from the fourth thin portion in the first direction.

28. A force sensor comprising:

a plurality of individual force sensors each including a first individual sensor body on which a force or moment to be detected acts, a second individual sensor body that is arranged at a position different from the first individual sensor body in a first direction, a first strain generating body that connects the first individual sensor body and the second individual sensor body and that is elastically deformed by the force or moment acting on the first individual sensor body, and a detecting element that detects displacement caused by elastic deformation of the first strain generating body;
a first sensor body that supports the first individual sensor body of each of the individual force sensors, the first sensor body being subjected to the force or moment to be detected;
a second sensor body that supports the second individual sensor body of each of the individual force sensors;
a plurality of second connecting bodies extending in the first direction from a third end connected to the first sensor body to a fourth end connected to the second sensor body; and
a detecting circuit that outputs an electric signal indicating the force or moment acting on the first sensor body based on a result of detection performed by the detecting element of each of the individual force sensors, wherein
the first strain generating body includes a first connecting body extending in the first direction from a first end connected to the first individual sensor body to a second end connected to the second individual sensor body,
the detecting element includes two first strain gauges provided on the first end and two second strain gauges provided on the second end,
the detecting circuit includes a Wheatstone bridge circuit that outputs an electric signal based on a result of detection performed by the first strain gauges and the second strain gauges, and
the second connecting bodies are formed along a radial direction relative to a central point of the first sensor body when viewed in the first direction.

FIG. 1

FIG. 2

FIG. 3

FIG. 4

FIG. 5

FIG. 6

FIG. 7

FIG. 8

FIG. 9A

FIG. 9B

FIG.10

FIG.11

FIG.12

**FIG.13**

FIG.14

FIG.15

FIG.16

120          143

140 →          ← 141

130

144

# FIG.17

FIG.18

FIG.19

FIG.20

FIG.21

FIG.22

FIG.23

FIG.24

**FIG.25**

FIG.26

|     | C11 | C12 | C13 | C14 | C15 | C16 | C17 | C18 |
|-----|-----|-----|-----|-----|-----|-----|-----|-----|
| Fx  | 0   | 0   | +   | −   | 0   | 0   | −   | +   |
| Fy  | −   | +   | 0   | 0   | +   | −   | 0   | 0   |
| Fz  | −   | −   | −   | −   | −   | −   | −   | −   |
| Mx  | 0   | 0   | −   | −   | 0   | 0   | +   | +   |
| My  | +   | +   | 0   | 0   | −   | −   | 0   | 0   |
| Mz  | −   | +   | −   | +   | −   | +   | −   | +   |

# FIG.27

|      | Fx | Fy | Fz | Mx | My | Mz |
|------|----|----|----|----|----|----|
| VFx  | 4  | 0  | 0  | 0  | 0  | 0  |
| VFy  | 0  | 4  | 0  | 0  | 0  | 0  |
| VFz  | 0  | 0  | 8  | 0  | 0  | 0  |
| VMx  | 0  | 0  | 0  | 4  | 0  | 0  |
| VMy  | 0  | 0  | 0  | 0  | 4  | 0  |
| VMz  | 0  | 0  | 0  | 0  | 0  | 8  |

# FIG.28

FIG.29

FIG.30

FIG.31

FIG.32

FIG.33

FIG.34

FIG.35

FIG.36

## INTERNATIONAL SEARCH REPORT

| International application No. |
| --- |
| **PCT/JP2022/041188** |

| A. | CLASSIFICATION OF SUBJECT MATTER |
| --- | --- |

*G01L 5/165*(2020.01)i; *G01L 5/1627*(2020.01)i
FI:   G01L5/165; G01L5/1627

According to International Patent Classification (IPC) or to both national classification and IPC

| B. | FIELDS SEARCHED |
| --- | --- |

Minimum documentation searched (classification system followed by classification symbols)

G01L5/165; G01L5/1627

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | Microfilm of the specification and drawings annexed to the request of Japanese Utility Model Application No. 137589/1986 (Laid-open No. 044130/1988) (FUJIOKA, Kazumichi) 24 March 1988 (1988-03-24), specification, p. 3, line 9 to p. 4, line 4, fig. 1 | 1-2, 4, 6, 12 |
| Y | specification, p. 3, line 9 to p. 4, line 4, fig. 1 | 1-12, 14-17, 22-23 |
| Y | JP 2-228532 A (WAKO KK) 11 September 1990 (1990-09-11) p. 4, lower left column, line 16 to upper right column, line 2, fig. 2 | 5 |
| Y | WO 2021/106037 A1 (TRI FORCE MAN CORP) 03 June 2021 (2021-06-03) paragraph [0063], fig. 4 | 7-11 |
| A | paragraphs [0138]-[0140], fig. 15 | 22-27 |
| X | JP 2014-219272 A (FUJI HEAVY IND LTD) 20 November 2014 (2014-11-20) paragraphs [0014]-[0041], fig. 1-6 | 13 |
| Y | paragraphs [0014]-[0041], fig. 1-6 | 28 |
| Y | JP 2021-135103 A (TRI FORCE MAN CORP) 13 September 2021 (2021-09-13) paragraphs [0048]-[0219], fig. 1-23 | 1-4, 6-12, 14-17, 22-23 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 January 2023** | **17 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/041188**

### C. DOCUMENTS CONSIDERED TO BE RELEVANT

| Category* | Citation of document, with indication, where appropriate, of the relevant passages | Relevant to claim No. |
|---|---|---|
| Y | JP 2007-010379 A (HONDA MOTOR CO LTD) 18 January 2007 (2007-01-18) paragraphs [0041]-[0047], [0052]-[0072], fig. 1-15 | 14-15, 17, 22-23, 28 |
| Y | JP 2013-195419 A (NANNING YULI AUTO SAFETY TECHNOLOGY DEVELOPMENT CO., LTD) 30 September 2013 (2013-09-30) paragraphs [0012]-[0030], fig. 1-5 | 14-17, 28 |
| Y | US 2015/0160081 A1 (ADVANCED MECHANICAL TECHNOLOGY, INC.) 11 June 2015 (2015-06-11) paragraphs [0025]-[0042], fig. 1-7 | 28 |
| A | JP 2010-169586 A (MINEBEA CO LTD) 05 August 2010 (2010-08-05) paragraphs [0016]-[0035], fig. 1-6 | 15-16, 23-27 |
| A | CN 1828248 A (YANSHAN UNIVERSITY) 06 September 2006 (2006-09-06) p. 3, line 27 to p. 4, line 29, fig. 1-8 | 18-21 |

Form PCT/ISA/210 (second sheet) (January 2015)

INTERNATIONAL SEARCH REPORT
Information on patent family members

International application No.

**PCT/JP2022/041188**

| Patent document cited in search report | | | Publication date (day/month/year) | Patent family member(s) | | | Publication date (day/month/year) |
|---|---|---|---|---|---|---|---|
| JP | 63-044130 | U1 | 24 March 1988 | (Family: none) | | | |
| JP | 2-228532 | A | 11 September 1990 | (Family: none) | | | |
| WO | 2021/106037 | A1 | 03 June 2021 | JP | 6727605 | B1 | |
| JP | 2014-219272 | A | 20 November 2014 | US<br>paragraphs [0020]-[0047], fig. 1-6<br>DE<br>CN | 2014/0331789<br><br>102014106183<br>104139698 | A1<br><br>A1<br>A | |
| JP | 2021-135103 | A | 13 September 2021 | US<br>paragraphs [0139]-[0310], fig. 1-23<br>EP<br>CN | 2021/0262871<br><br>3872470<br>113375841 | A1<br><br>A1<br>A | |
| JP | 2007-010379 | A | 18 January 2007 | US<br>paragraphs [0075]-[0080], [0087]-[0107], fig. 1-15<br>US<br>US<br>EP<br>EP<br>EP | 2007/0006668<br><br><br>2008/0282813<br>2009/0301226<br>1739401<br>2278291<br>2278292 | A1<br><br><br>A1<br>A1<br>A1<br>A1<br>A1 | |
| JP | 2013-195419 | A | 30 September 2013 | US<br>paragraphs [0030]-[0047], fig. 1-5<br>EP<br>CN | 2013/0239701<br><br>2642264<br>102589765 | A1<br><br>A2<br>A | |
| US | 2015/0160081 | A1 | 11 June 2015 | (Family: none) | | | |
| JP | 2010-169586 | A | 05 August 2010 | (Family: none) | | | |
| CN | 1828248 | A | 06 September 2006 | (Family: none) | | | |

Form PCT/ISA/210 (patent family annex) (January 2015)

**EP 4 614 127 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6257017 B